(19) Europäisches Patentamt
European Patent Office
Office européen des brevets

(11) EP 1 268 173 B1

(12) EUROPEAN PATENT SPECIFICATION

(45) Date of publication and mention of the grant of the patent: **07.12.2005 Bulletin 2005/49**

(21) Application number: **01922956.6**

(22) Date of filing: **30.03.2001**

(51) Int Cl.[7]: **B29D 11/00**

(86) International application number: **PCT/US2001/010403**

(87) International publication number: **WO 2001/074570 (11.10.2001 Gazette 2001/41)**

(54) **APPARATUS AND SYSTEM FOR THE PRODUCTION OF PLASTIC LENSES**

VORRICHTUNG UND ANLAGE ZUR HERSTELLUNG VON LINSEN AUS KUNSTSTOFF

APPAREIL ET SYSTEME DESTINES A LA PRODUCTION DE LENTILLES EN PLASTIQUE

(84) Designated Contracting States:
**AT BE CH CY DE DK ES FI FR GB GR IE IT LI LU MC NL PT SE TR**

(30) Priority:
**30.03.2000 US 539661**
**30.03.2000 US 539211**
**30.03.2000 US 539296**
**30.03.2000 US 539631**
**30.03.2000 US 539420**
**30.03.2000 US 538872**

(43) Date of publication of application:
**02.01.2003 Bulletin 2003/01**

(73) Proprietor: **Q2100, INC.**
**Louisville, KY 40299 (US)**

(72) Inventors:
- **POWERS, Galen, R.**
  **Louisville, KY 40299 (US)**
- **FOREMAN, John, T.**
  **Louisville, KY 40223 (US)**
- **BUAZZA, Omar, M.**
  **Louisville, KY 40223 (US)**
- **LUETKE, Stephen, C.**
  **Louisville, KY 40204 (US)**
- **LATTIS, Matthew, C.**
  **Louisville, KY 40299 (US)**
- **JOEL, Larry, H.**
  **Louisville, KY 40222 (US)**
- **TRIPLETT, John, T.**
  **Taylorsville, KY 40071 (US)**
- **LOSSMAN, Loren, C.**
  **Louisville, KY 40242 (US)**

(74) Representative: **Casalonga, Axel**
**BUREAU D.A. CASALONGA - JOSSE**
**Paul-Heyse-Strasse 33**
**80336 München (DE)**

(56) References cited:
**WO-A-97/39880**
**US-A- 4 919 850**
**US-A- 5 914 074**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 268 173 B1

## Description

The present invention relates generally to eyeglass lenses. More particularly, the invention relates to a lens forming composition, system and method for making photochromic, ultraviolet/visible light absorbing, and colored plastic lenses by curing the lens forming composition using activating light

It is conventional in the art to produce optical lenses by thermal curing techniques from the polymer of diethylene glycol bis(allyl)-carbonate (DEG-BAC). In addition, optical lenses may also be made using ultraviolet ("UV") light curing techniques. See, for example, U.S. Patent Nos. 4,728,469 to Lipscomb et al., 4,879,318 to Lipscomb et al., 5,364,256 to Lipscomb et al, 5,415,816 to Buazza et aL, 5,529,728 to Buazza et al., 5,514,214 to Joel et al., 5,516,468 to Lipscomb, et al., 5,529,728 to Buazza et aL, 5,689,324 to Lossman et al, 5,928,575 to Buazza, 5,976,423 to Buazza, 6,022,498 to Buazza et aL and U.S. patent application serial nos. 07/425,371 filed October 26, 1989, 08/439,691 filed May 12, 1995,08/454,523 filed May 30, 1995,08/453,770 filed May 30, 1995, 08/853,134 filed May 8, 1997, 08/844,557 fued April 18, 1997, and 08/904,289 filed July 31, 1997.

Curing of a lens by ultraviolet light tends to present certain problems that must be overcome to produce a viable lens. Such problems include yellowing of the lens, cracking of the lens or mold, optical distortions in the lens, and premature release of the lens from the mold. In addition, many of the useful ultraviolet light-curable lens forming compositions exhibit certain characteristics that increase the difficulty of a lens curing process. For example, due to the relatively rapid nature of ultraviolet light initiated reactions, it is a challenge to provide a composition that is ultraviolet light curable to form an eyeglass lens. Excessive exothermic heat tends to cause defects in the cured lens. To avoid such defects, the level of photoinitiator may be reduced to levels below what is customarily employed in the ultraviolet curing art.

While reducing the level of photoinitiator addresses some problems, it may also cause others. For instance, lowered levels of photoinitiator may cause the material in regions near an edge of the lens and proximate a gasket wall in a mold cavity to incompletely cure due to the presence of oxygen in these regions (oxygen is believed to inhibit curing of many lens forming compositions or materials). Uncured lens forming composition tends to result in lenses with "wet" edges covered by sticky uncured lens forming composition. Furthermore, uncured lens forming composition may migrate to and contaminate the optical surfaces of the lens upon demolding. The contaminated lens is then often unusable.

Uncured lens forming composition has been addressed by a variety of methods (see, e.g., the methods described in U.S. Patent No. 5,529,728 to Buazza et al). Such methods may include removing the gasket and applying either an oxygen barrier or a photoinitiator enriched liquid to the exposed edge of the lens, and then re-irradiating the lens with a dosage of ultraviolet light sufficient to completely dry the edge of the lens prior to demolding. During such irradiation, however, higher than desirable levels of irradiation, or longer than desirable periods of irradiation, may be required. The additional ultraviolet irradiation may in some circumstances cause defects such as yellowing in the lens.

The low photoinitiator levels utilized in many ultraviolet curable lens forming compositions may produce a lens that, while fully-cured as measured by percentage of remaining double bonds, may not possess sufficient cross-link density on the lens surface to provide desirable dye absorption characteristics during the tinting process.

Various methods of increasing the surface density of such ultraviolet light curable lenses are described in U. S. Patent No. 5,529,728 to Buazza et al. In one method, the lens is demolded and then the surfaces of the lens are exposed directly to ultraviolet light. The relatively short wavelengths (around 254 nm) provided by some ultraviolet light sources (e.g., a mercury vapor lamp) tend to cause the material to cross-link quite rapidly. An undesirable effect of this method, however, is that the lens tends to yellow as a result of such exposure. Further, any contaminants on the surface of the lens that are exposed to short wavelengths of high intensity ultraviolet light may cause tint defects.

Another method involves exposing the lens to relatively high intensity ultraviolet radiation while it is still within a mold cavity formed between glass molds. The glass molds tend to absorb the more effective short wavelengths, while transmitting wavelengths of about 365 nm. This method generally requires long exposure times and often the infrared radiation absorbed by the lens mold assembly will cause premature release of the lens from a mold member. The lens mold assembly may be heated prior to exposure to high intensity ultraviolet light, thereby reducing the amount of radiation necessary to attain a desired level of cross-link density. This method, however, is also associated with a higher rate of premature release. These problems are solved by the invention according to claim 1. Further embodiments are as per claim 2-96.

It is well known in the art that a lens mold/gasket assembly may be heated to cure the lens forming composition from a liquid monomer to a solid polymer. It is also well known that such a lens may be thermally postcured by applying convective heat to the lens after the molds and gaskets have been removed from the lens.

The present invention relates to an apparatus for preparing an eyeglass lens. The apparatus includes at least a first lens curing unit and a second lens curing unit and a conveyance system. The conveyance system is configured to convey the mold assembly from the first lens curing unit into and through the second lens curing unit The lens forming apparatus may, optionally, include an anneal unit, a coating unit, a post-cure unit, a programmable controller, or a

combination thereof. Depending on the type of lens forming composition used, the apparatus may be used to from photochromic and non-photochromic lenses. The apparatus may be configured such that a substantially clear eyeglass lens is formed in a time period of less than 1 hour. In some embodiments, the apparatus is configured to allow the operation of both the coating unit and lens curing unit substantially simultaneously.

The first lens curing unit includes at least a first activating light source. The first lens curing unit is configured to produce activating light directed toward the mold assembly during use.

The second lens curing unit includes at least a second activating light source and a heating system. The second activating light source is configured to direct activating light toward a mold assembly during use. The heating system is configured to at least heat the interior of the second lens curing unit. In some embodiments, the second lens curing unit includes an air distributor.

The mold assembly used in the apparatus may include a first mold member and a second mold member. Each mold member has a casting face and a non-casting face. The second mold member is configured to be spaced apart during use such that the casting faces of the first mold member and the second mold member at least partially define a mold cavity that is configured to hold a lens forming composition. The lens forming composition may include a monomer composition and a photoinitiator. The monomer composition may cure by exposure to activating light. The photoinitiator may initiate curing of the monomer in response to being exposed to activating light.

In some embodiments, the mold assembly may include a gasket. In some embodiments, a gasket may be configured to engage a first mold set for forming a first lens of a first power. The gasket may include a fill port for receiving a lens forming composition while the gasket is fully engaged to a mold set. The fill port may extend from the interior surface of the gasket to the exterior surface. The gasket may include at least four discrete projections for spacing mold members of a mold set. The at least four discrete projections may be evenly spaced around the interior surface of the gasket. In an embodiment, the at least four discrete projections may be spaced at about 90 degree increments around the interior surface of the gasket. A back mold member for use in a mold assembly may have a steep axis and a flat axis. Each of the at least four discrete projections may form an oblique angle with the steep axis and the flat axis of the back mold member. In certain embodiments, each of the at least four discrete projections may form an about 45 degree angle with the steep axis and the flat axis of the back mold member. The projections may be arranged on an interior surface of the gasket. In some embodiments, the gasket may also include a fifth projection. The fifth projection may be positioned such that the projection contacts one of a mold member of the first mold set during use. The gasket may also be configured to engage a second mold set for forming a second lens of a second power. In such embodiments, the fifth projection may contact a first mold member of the first mold set during use, and the fill port may be positioned near a second mold member of the first mold set during use.

In some embodiments that include a programmable controller, the programmable controller may be configured to substantially simultaneously control operation of the first curing unit and the second curing unit during use. For example, in embodiments where the first activating light source comprises a first set of lamps and a second set of lamps, the programmable controller may be configured to individually control the first and second sets of lamps. The programmable controller may be configured to control operation of the curing units as a function of the eyeglass lens prescription.

A system for preparing an eyeglass lens may include may include an apparatus for dispensing a heated polymerizable lens forming composition. In some embodiments, an apparatus for dispensing a heated polymerizable lens forming composition may include a body configured to hold the lens forming composition. The body may include an opening for receiving a fluid container and an outlet. The body may also include a heating system positioned within the body for heating the lens forming composition. The heating system may be a resistive heating system. In some embodiments, the body may include a chamber positioned within the body. The heating system may be positioned within the chamber. In such embodiments, the chamber may inhibit the lens forming composition from contacting the heating system.

A fluid container for use in an apparatus for dispensing a heated polymerizable lens forming composition may include a body and a cap. In some embodiments, the cap of the fluid container may be removable from the fluid container body. In some embodiments, the cap of the fluid container may be coupled to the fluid container body with an adhesive. The cap may include a fluid control member and an elastic member, for example, a spring. The fluid control member may be substantially spherical. The elastic member may be coupled to the fluid control member such that the elastic member exerts a force on the fluid control member such that the fluid control member is forced against a top inner surface of the cap. The fluid container may be insertable into the opening of the heating apparatus. The heating apparatus body may include a projection extending toward the opening. The projection may be positioned such that the projection forces the fluid control member away from the top inner surface of the cap when the body is inserted into the opening. Insertion of the fluid container into the opening may cause the fluid control member to be moved to a position such that the lens forming composition flows from the fluid container into the heating apparatus body.

In some embodiments, a valve may be positioned proximate the outlet. The valve may include an elongated member. The elongated member may be positionable within the outlet in a closed position. In the closed position, the

elongated member may inhibit flow of the lens forming composition through the outlet. In the closed position, the elongated member may extend substantially completely through the outlet. The elongated member may also be positionable within the outlet in an open position. In an open position, the elongated member may allow flow of the lens forming composition through the outlet during use. In an open position, the elongated member may extend partially into the outlet. The valve may also include a movable member coupled to the elongated member. The elongated member may contact the movable member at a first position such that the elongated member is in the closed position. The elongated member may contact the movable member at a second position such that the elongated member is in the open position. The movable member may be movable such that the position of the elongated member can be varied from the first position to the second position.

In some embodiments, the apparatus for dispensing a heated polymerizable lens forming composition may also include a thermostat coupled to the body. The thermostat may be configured to measure a temperature of the lens forming composition within the body. The thermostat may further be configured to control the heating system in response to the measured temperature. In some embodiments, a thermocouple may be coupled to the body. In such embodiments, a controller may be coupled to the thermocouple. The thermocouple may be configured to measure the temperature of the lens forming composition within the body. The controller may be configured to control the heating system in response to the temperature measured by the thermocouple.

In some embodiments, the apparatus for dispensing a heated polymerizable lens forming composition may also include a fluid level monitor disposed within the body. The fluid level monitor may be configured to measure the level of the lens forming composition disposed within the body. In such embodiments, the apparatus may also include a controller coupled to the fluid level monitor and the heating system. The controller may be configured to control the heating system in response to the level of fluid measured by the fluid level monitor. In some embodiments, the apparatus may be electrically coupleable to a controller of a lens forming apparatus.

In some embodiments, an apparatus for dispensing a heated polymerizable lens forming composition may include a mold assembly holder coupled to the body. The mold assembly holder may be configured to hold a mold assembly in a position such that the outlet of the body is positioned proximate an inlet of the mold assembly.

## BRIEF DESCRIPTION OF THE DRAWINGS

The above brief description as well as further objects, features and advantages of the methods and apparatus of the present invention will be more fully appreciated by reference to the following detailed description of presently preferred but nonetheless illustrative embodiments in accordance with the present invention when taken in conjunction with the accompanying drawings in which:

Fig. 1 depicts a perspective view of a plastic lens forming apparatus;
Fig. 2 depicts a perspective view of a spin coating unit;
Fig. 3 depicts a cut-away side view of a spin coating unit;
Fig. 4 depicts a perspective view of a plastic lens forming apparatus with a portion of the body removed;
Fig. 5 depicts a perspective view of the components of a lens curing unit;
Fig. 6 depicts a perspective view of a plastic lens forming apparatus with a portion of the body removed and the coating units removed;
Fig. 7 depicts a schematic of a fluorescent light ballast system;
Fig. 8 depicts a mold assembly;
Fig. 9 depicts an isometric view of an embodiment of a gasket;
Fig. 10 depicts a top view of the gasket of Fig. 9;
Fig. 11 depicts a cross-sectional view of an embodiment of a mold/gasket assembly;
Fig. 12 depicts an isometric view of an embodiment of a gasket;
Fig. 13 depicts a top view of the gasket of Fig. 12;
Fig. 14 depicts a side view of a cured lens and molds after removal of a gasket;
Fig. 15 depicts a post-cure unit;
Fig. 16 depicts chemical structures of acrylated amines;
Figs. 17-19 depict a front panel of a controller with a display screen depicting various display menus;
Fig. 20 depicts an isometric view of a heated polymerizable lens forming composition dispensing system;
Fig. 21 depicts a side view of a heated polymerizable lens forming composition dispensing system;
Figs. 22 and 23 depict cross-sectional side views of a heated polymerizable lens forming composition dispensing system;
Fig. 24 depicts a mold assembly for making flat-top bifocal lenses;
Fig. 25 depicts a front view of a lens curing unit;
Fig. 26 depicts a top view of a lens curing unit;

Fig. 27 depicts an isometric view of a high-volume lens curing apparatus;
Fig. 28 depicts a cross-sectional side view of a high-volume lens curing apparatus;
Fig. 29 depicts a cross-sectional top view of a first curing unit of a high-volume lens curing apparatus;
Fig. 30 depicts an isometric view of a mold assembly holder;
Fig. 31 depicts an isometric view of a conveyor system for a high-volume lens curing apparatus;
Fig. 32 depicts a cross sectional top view of a high-volume lens curing apparatus;
Fig. 33 depicts a side view of a portion of a conveyor system for a high-volume lens curing apparatus;
Fig. 34 depicts a side view of a high-volume lens curing apparatus; and
Fig. 35 depicts a cross -sectional front view of a high-volume lens curing apparatus.

Apparatus, operating procedures, equipment, systems, methods, and compositions for lens curing using activating light are available from Optical Dynamics Corporation in Louisville, Kentucky.

Referring now to Fig. 1, a plastic lens curing apparatus is generally indicated by reference numeral 10. As shown in Fig. 1, lens forming apparatus 10 includes at least one coating unit 20, a lens curing unit 30, a post-cure unit 40, and a controller 50: In one embodiment, apparatus 10 includes two coating units 20. Coating unit 20 may be configured to apply a coating layer to a mold member or a lens. Coating unit 20 may be a spin coating unit. Lens curing unit 30 includes an activating light source for producing activating light. As used herein "activating light" means light that may affect a chemical change. Activating light may include ultraviolet light (e.g., light having a wavelength between about 300 nm to about 400 nm), actinic light, visible light or infrared light. Generally, any wavelength of light capable of affecting a chemical change may be classified as activating. Chemical changes may be manifested in a number of forms. A chemical change may include, but is not limited to, any chemical reaction that causes a polymerization to take place. In some embodiments the chemical change causes the formation of an initiator species within the lens forming composition, the initiator species being capable of initiating a chemical polymerization reaction. The activating light source may be configured to direct light toward a mold assembly. Post-cure unit 40 may be configured to complete the polymerization of plastic lenses. Post-cure unit 40 may include an activating light source and a heat source. Controller 50 may be a programmable logic controller. Controller 50 may be coupled to coating units 20, lens curing unit 30, and post-cure unit 40, such that the controller is capable of substantially simultaneously operating the three units 20, 30, and 40. Controller 50 may be a computer.

A coating unit for applying a coating composition to a lens or a mold member and then curing the coating composition is described in U.S. Patents 4,895,102 to Kachel et aL, 3,494,326 to Upton, and 5,514,214 to Joel et al. (all of which are incorporated herein by reference). In addition, the apparatus shown in Figs. 2 and 3 may also be used to apply coatings to lenses or mold members.

Fig. 2 depicts a pair of spin coating units 102 and 104. These spin coating units may be used to apply a scratch resistant coating or a tint coating to a lens or mold member. Each of the coating units includes an opening through which an operator may apply lenses and lens mold assemblies to a holder 108. Holder 108 may be partially surrounded by barrier 114. Barrier 114 may be coupled to a dish 115. As shown in Fig. 3, the dish edges may be inclined to form a peripheral sidewall 121 that merges with barrier 114. The bottom 117 of the dish may be substantially flat. The flat bottom may have a circular opening that allows an elongated member 109 coupled to lens holder 108 to extend through the dish 115.

Holder 108 may be coupled to a motor 112 via elongated member 109. Motor 112 may be configured to cause rotation of holder 108. In such a case, motor 112 may be configured to cause rotation of elongated member 109, that in turn causes the rotation of holder 108. The coating unit 102/104, may also include an electronic controller 140. Electronic controller 140 may be coupled to motor 112 to control the rate at which holder 108 is rotated by motor 112. Electronic controller 140 may be coupled to a programmable logic controller, such as controller 50, shown in Fig. 1. The programmable logic controller may send signals to the electronic controller to control the rotational speed of holder 108. In one embodiment, motor 112 is configured to rotate holder 108 at different rates. Motor 112 may be capable of rotating the lens or mold member at a rate of up to 1500 revolutions per minute ("RPM").

In one embodiment, barrier 114 has an interior surface that may be made or lined with an absorbent material such as foam rubber. This absorbent material may be disposable and removable. The absorbent material may be configured to absorb any liquids that fall off a lens or mold member during use. Alternatively, the interior surface of barrier 114 may be substantially non-absorbent, allowing any liquids used during the coating process to move down barrier 114 into dish 115.

Coating units 20, in one embodiment, are positioned in a top portion 12 of lens forming apparatus 10, as depicted in Fig. 1. A cover 22 may be coupled to body 14 of the lens forming apparatus to allow top portion 12 to be covered during use. A light source 23 may be positioned on an inner surface of cover 22. The light source may include at least one lamp 24, preferably two or more lamps, positioned on the inner surface of cover 22. Lamps 24 may be positioned such that the lamps are oriented above the coating units 20 when cover 22 is closed. Lamps 24 emit activating light upon the lenses or mold members positioned within coating units 20. Lamps may have a variety of shapes

including, but not limited to, linear (as depicted in Fig. 1), square, rectangular, circular, or oval. Activating light sources emit light having a wavelength that will initiate curing of various coating materials. For example, most currently used coating materials may be curable by activating light having wavelengths in the ultraviolet region, therefore the light sources should exhibit strong ultraviolet light emission. The light sources may also be configured to produce minimal heat during use. Lamps that exhibit strong ultraviolet light emission have a peak output at a wavelength in the ultraviolet light region, between about 200 nm to about 400 nm, preferably the peak output is between about 200 nm to 300 nm, and more preferably at about 254 nm. In one embodiment, lamps 24 may have a peak output in the ultraviolet light region and have relatively low heat output. Such lamps are commonly known as "germicidal" lamps and any such lamp may be used. A "germicidal" light emitting light with a peak output in the desired ultraviolet region is commercially available from Voltarc, Inc. of Fairfield, Connecticut as model UV-WX G10T5.

An advantage of using a spin coating unit is that lamps of a variety of shapes may be used (e.g., linear lamps) for the curing of the coating materials. In one embodiment, a coating material is preferably cured in a substantially uniform manner to ensure that the coating is formed uniformly on the mold member or lens. With a spin coating unit, the object to be coated may be spun at speeds high enough to ensure that a substantially uniform distribution of light reaches the object during the curing process, regardless of the shape of the light source. The use of a spin coating unit preferably allows the use of commercially available linear light sources for the curing of coating materials.

A switch may be incorporated into cover 22. The switch is preferably electrically coupled to light source 23 such that the switch must be activated prior to turning the light source on. Preferably, the switch is positioned such that closing the cover causes the switch to become activated. In this manner, the lights will preferably remain off until the cover is closed, thus preventing inadvertent exposure of an operator to the light from light source 23,

During use a lens or lens mold assembly may be placed on the lens holder 108. The lens holder 108 may include a suction cup connected to a metal bar. The concave surface of the suction cup may be attachable to a face of a mold or lens, and the convex surface of the suction cup may be attached to a metal bar. The metal bar may be coupled to motor 112. The lens holder may also include movable arms and a spring assembly that may be together operable to hold a lens against the lens holder with spring tension during use.

As shown in Fig. 4, the curing unit 30 may include an upper light source 214, a lens drawer assembly 216, and a lower light source 218. Lens drawer assembly 216 preferably includes a mold assembly holder 220, more preferably at least two mold assembly holders 220. Each of the mold assembly holders 220 is preferably configured to hold a pair of mold members that together with a gasket form a mold assembly. The lens drawer assembly 216 is preferably slidingly mounted on a guide. During use, mold assemblies may be placed in the mold assembly holders 220 while the lens drawer assembly is in the open position (i.e., when the door extends from the front of the lens curing unit). After the mold assemblies have been loaded into the mold holder 220 the door may be slid into a closed position, with the mold assemblies directly under the upper light source 214 and above the lower light source 218. Vents (not shown) may be placed in communication with the lens curing unit to allow a stream of air to be directed toward the mold members when the mold members are positioned beneath the upper lamps. An exhaust fan (not shown) may communicate with the vents to improve the circulation of air flowing through the lens curing unit.

As shown in Figs. 4 and 5, it is preferred that the upper light source 214 and lower light source 216 include a plurality of activating light generating devices or lamps 240. Preferably, the lamps are oriented proximate each other to form a row of lights, as depicted in Fig. 4. Preferably, three or four lamps are positioned to provide substantially uniform radiation over the entire surface of the mold assembly to be cured. The lamps 240, preferably generate activating light. Lamps 240 may be supported by and electrically connected to suitable fixtures 242. Lamps 240 may generate either ultraviolet light, actinic light, visible light, and/or infrared light. The choice of lamps is preferably based on the monomers used in the lens forming composition. In one embodiment, the activating light may be generated from a fluorescent lamp. The fluorescent lamp preferably has a strong emission spectra in the 380 to 490 nm region. A fluorescent lamp emitting activating light with the described wavelengths is commercially available from Philips as model TLD-15W/03. In another embodiment, the lamps may be ultraviolet lights.

In one embodiment, the activating light sources may be turned on and off quickly between exposures. Ballasts 250, depicted in Fig. 6, may be used for this function. The ballasts may be positioned beneath the coating unit. Power supply 252 may also be located proximate the ballasts 250, underneath the coating unit.

Typically, when a fluorescent lamp is turned off the filaments in the lamp will become cool. When the lamp is subsequently turned on, the lamp intensity may fluctuate as the filaments are warmed. These fluctuations may effect the curing of a lens forming compositions. To minimize the intensity fluctuations of the lamps, a ballasts 250 may allow the startup of a fluorescent lamp and minimizes the time required to stabilize the intensity of the light produced by the fluorescent lamp.

A number of ballast systems may be used. Ballasts for fluorescent lamps typically serve two purposes. One function is to provide an initial high voltage arc that will ionize the gases in the fluorescent lamp (known herein as the "strike voltage"). After the gases are ionized, a much lower voltage will be required to maintain the ionization of the gases. In some embodiments, the ballast will also limit the current flow through the lamp. In some ballast systems, the

filaments of a lamp may be preheated before the starting voltage is sent through the electrodes.

An instant start ballast typically provides a strike voltage of between 500-600 V. The electrodes of fluorescent lamps that are used with an instant start ballast are usually designed for starting without preheating. Instant start ballast allow the fluorescent lamp to be turned on quickly without a significant delay. However, the intensity of light produced by the fluorescent lamp may fluctuate as the temperature of the filaments increases.

Rapid start ballasts include a high voltage transformer for providing the strike voltage and additional windings that supply a low voltage (between about 2 to 4 V) to the filaments to heat the filaments before the lamp is started. Because the filaments are already heated, the strike voltage required to ionize the gases in the lamp are lower than those used with an instant start ballast. A rapid start ballast typically produces a strike voltage of 250 to 400 V. A rapid start ballast may be used to minimize fluctuations in the intensity of the light produced by the lamp. Since the filaments are preheated before the lamp comes on, the time required to heat up the filaments to their normal operating temperature is minimal.

Rapid start ballasts typically continually run the heating voltage through the filaments during operation of the lamp and when the lamps are switched off. Thus, during long periods when the lamps are not used, the filaments will be maintained in a heated state. This tends to waste power and increase the operating costs of the apparatus.

To allow more control over the heating of the filaments, a flasher ballast system may be used. A schematic drawing of an embodiment of a flasher ballast system is depicted in Fig. 7. In a flasher ballast system a fluorescent lamp 712 is electrically coupled to a high frequency instant start ballast 714 and one or more transformers 716. The high frequency instant start ballast 714 may provide the strike voltage and perform the current limiting functions once the lamp is lighted. High frequency instant start ballasts are available from many different manufacturers including Motorola, Inc. and Hatch Transformers, Inc. Tampa, FL. The transformers 716 may be electrically coupled to one or both of the filaments 718 to provide a low voltage (between about 2 to about 4 V) to the filaments. This low voltage may heat the filaments 718 to a temperature that is close to the operating temperature of the filaments 718. By heating the filaments before turning the lamp on, the intensity of light produced by the lamp may be stable because the filaments of the lamp are kept close to the optimum operating temperature. Transformers are available from many different manufacturers. In one embodiment toroidal transformers may be used to supply low voltage to the filaments. Toroidal transformers may be obtained from Plitron Manufacturing Inc. Toronto, Ontario, Canada or Toroid Corporation of Maryland, Salisbury, MD.

Because the instant start ballast 714 and the transformers 716 are separate units they may be operated independently of each other. A controller 711 may be coupled to both the instant start ballast 714 and the transformers 716 to control the operation of these devices. The transformers 716 may be left on or off when the striking voltage is applied to the lamp. In some embodiments, controller 711 may turn off the transformers 716 just before the strike voltage is applied to the lamp. The controller 711 may also monitor the operation of the lamp. The controller 711 may be programmed to turn the transformers 716 on when the lamps are switched off, thus maintaining the lamps in a state of readiness. To conserve power, the filaments 718 may be warmed only prior to turning on the lamp. Thus, when the controller 711 receives a signal to turn the lamp on, the controller may turn on the transformers 716 to warm the filaments 718, and subsequently turn on the lamp by sending a striking voltage from the instant start ballast 714. The controller may be configured to turn the transformer off after a predetermined amount of inactivity of the lamps. For example, the controller may be configured to receive signals when the lamps are used in a curing process. If no such signals are received, the controller may turn off the lamps (by turning off the instant start ballast), but leave the transformer on. The lamps may be kept in a state of readiness for a predetermined amount of time. If no signals are received by the controller to turn on the lamp, the controller may turn the transformer off to conserve energy.

In one embodiment, an upper light filter 254 may be positioned between upper light source 214 and lens drawer assembly 216, as depicted in Fig. 5. A lower light filter 256 may be positioned between lower light source 218 and lens drawer assembly 216. The upper light filter 254 and lower light filter 256 are shown in Fig. 5 as being made of a single filter member, however, those of ordinary skill in the art will recognize that each of the filters may include two or more filter members. The components of upper light filter 254 and lower light filter 256 are preferably modified depending upon the characteristics of the lens to be molded. For instance, in an embodiment for making negative lenses, the upper light filter 254 includes a plate of Pyrex glass that may be frosted on both sides resting upon a plate of clear Pyrex glass. The lower light filter 256 includes a plate of Pyrex glass, frosted on one side, resting upon a plate of clear Pyrex glass with a device for reducing the intensity of activating light incident upon the center portion relative to the edge portion of the mold assembly.

Conversely, in a an alternate arrangement for producing positive lenses, the upper light filter 254 includes a plate of Pyrex glass frosted on one or both sides and a plate of clear Pyrex glass resting upon the plate of frosted Pyrex glass with a device for reducing the intensity of activating light incident upon the edge portion in relation to the center portion of the mold assembly. The lower light filter 256 includes a plate of clear Pyrex glass frosted on one side resting upon a plate of clear Pyrex glass with a device for reducing the intensity of activating light incident upon the edge portion in relation to the center portion of the mold assembly. In this arrangement, in place of a device for reducing

the relative intensity of activating light incident upon the edge portion of the lens, the diameter of the aperture 250 may be reduced to achieve the same result, i.e., to reduce the relative intensity of activating light incident upon the edge portion of the mold assembly.

It should be apparent to those skilled in the art that each filter 254 or 256 could be composed of a plurality of filter members or include any other means or device effective to reduce the light to its desired intensity, to diffuse the light and/or to create a light intensity gradient across the mold assemblies. Alternately, in certain embodiments no filter elements may be used.

In one embodiment, upper light filter 254 or lower light filter 256 each include at least one plate of Pyrex glass having at least one frosted surface. Also, either or both of the filters may include more than one plate of Pyrex glass each frosted on one or both surfaces, and/or one or more sheets of tracing paper. After passing through frosted Pyrex glass, the activating light is believed to have no sharp intensity discontinuities. By removing the sharp intensity distributions a reduction in optical distortions in the finished lens may be achieved. Those of ordinary skill in the art will recognize that other means may be used to diffuse the activating light so that it has no sharp intensity discontinuities. In another embodiment, a plastic filter may be used. The plastic filter may be formed from a substantially clear sheet of plastic. The plastic filter may frosted or non-frosted. The substantially clear sheet of plastic is formed from a material that does not significantly absorb wavelengths of light that initiate the polymerization reaction. In one embodiment, the plastic filter may be formed from a sheet of polycarbonate. An example of a polycarbonate that may be used is LEXAN polycarbonate, commercially available from General Electric Corporation. In another embodiment, the filter may be formed from a borosilicate type glass.

In operation, the apparatus may be appropriately configured for the production of positive lenses which are relatively thick at the center or negative lenses which are relatively thick at the edge. To reduce the likelihood of premature release, the relatively thick portions of a lens are preferably polymerized at a faster rate than the relatively thin portions of a lens.

The rate of polymerization taking place at various portions of a lens may be controlled by varying the relative intensity of activating light incident upon particular portions of a lens. For positive lenses, the intensity of incident activating light is preferably reduced at the edge portion of the lens so that the thicker center portion of the lens polymerizes faster than the thinner edge portion of the lens.

It is well known by those of ordinary skill in the art that lens forming materials tend to shrink as they cure. If the relatively thin portion of a lens is allowed to polymerize before the relatively thick portion, the relatively thin portion will tend to be rigid at the time the relatively thick portion cures and shrinks and the lens will either release prematurely from or crack the mold members. Accordingly, when the relative intensity of activating light incident upon the edge portion of a positive lens is reduced relative to the center portion, the center portion may polymerize faster and shrink before the edge portion is rigid so that the shrinkage is more uniform.

The variation of the relative intensity of activating light incident upon a lens may be accomplished in a variety of ways. According to one method, in the case of a positive lens, a metal plate having an aperture disposed in a position over the center of the mold assembly may be placed between the lamps and the mold assembly. The metal plate is positioned such that the incident activating light falls mainly on the thicker center portion of the lens. In this manner, the polymerization rate of the center of a positive lens may be accelerated with respect to the outer edges of the positive lens, which receive less activating light. The metal plate may be inserted manually or may be inserted by an automatic device that is coupled to the controller. In one embodiment, the prescription entered into the controller determines whether the metal plate is placed between the lamps and the mold assembly.

As shown in Fig. 7, the mold assembly 352 may include opposed mold members 378, separated by an annular gasket 380 to define a lens molding cavity 382. The opposed mold members 378 and the annular gasket 380 may be shaped and selected in a manner to produce a lens having a desired diopter.

The mold members 378 may be formed of any suitable material that will permit the passage of activating light. The mold members 378 are preferably formed of glass. Each mold member 378 has an outer peripheral surface 384 and a pair of opposed surfaces 386 and 388 with the surfaces 386 and 388 being precision ground. Preferably the mold members 378 have desirable activating light transmission characteristics and both the casting surface 386 and non-casting surface 388 preferably have no surface aberrations, waves, scratches or other defects as these may be reproduced in the finished lens.

As noted above, the mold members 378 are preferably adapted to be held in spaced apart relation to define a lens molding cavity 382 between the facing surfaces 386 thereof. The mold members 378 are preferably held in a spaced apart relation by a T-shaped flexible annular gasket 380 that seals the lens molding cavity 382 from the exterior of the mold members 378. In use, the gasket 380 may be supported on a portion of the mold assembly holder 220 (shown in Fig. 4).

In this manner, the upper or back mold member 390 has a convex inner surface 386 while the lower or front mold member 392 has a concave inner surface 386 so that the resulting lens molding cavity 382 is preferably shaped to form a lens with a desired configuration. Thus, by selecting the mold members 378 with a desired surface 386,

lenses with different characteristics, such as focal lengths, may be produced.

Rays of activating light emanating from lamps 240 preferably pass through the mold members 378 and act on a lens forming material disposed in the mold cavity 382 in a manner discussed below so as to form a lens. As noted above, the rays of activating light may pass through a suitable filter 254 or 256 before impinging upon the mold assembly 352.

The mold members 378, preferably, are formed from a material that will not transmit activating light having a wavelength below approximately 300 nm. Suitable materials are Schott Crown, S-1 or S-3 glass manufactured and sold by Schott Optical Glass Inc., of Duryea, Pennsylvania or Corning 8092 glass sold by Coming Glass of Coming, New York. A source of flat-top or single vision molds may be Augen Lens Co. in San Diego, California.

The annular gasket 380 may be formed of vinyl material that exhibits good lip finish and maintains sufficient flexibility at conditions throughout the lens curing process. In an embodiment, the annular gasket 380 is formed of silicone rubber material such as GE SE6035 which is commercially available from General Electric. In another preferred embodiment, the annular gasket 380 is formed of copolymers of ethylene and vinyl acetate which are commercially available from E. 1. DuPont de Nemours & Co. under the trade name ELVAX7. Preferred ELVAX7 resins are ELVAX7 350 having a melt index of 17.3-20.9 dg/min and a vinyl acetate content of 24.3-25.7 wt. %, ELVAX7 250 having a melt index of 22.0-28.0 dg/min and a vinyl acetate content of 27.2-28.8 wt. %, ELVAX7 240 having a melt index of 38.0-48.0 dg/min and a vinyl acetate content of 27.2-28.8 wt. %, and ELVAX7 150 having a melt index of 38.0-48.0 dg/min and a vinyl acetate content of 32.0-34.0 wt. %. In another embodiment, the gasket may be made from polyethylene. Regardless of the particular material, the gaskets 380 may be prepared by conventional injection molding or compression molding techniques which are well-known by those of ordinary skill in the art.

Figs. 9 and 10 present an isometric view and a top view, respectively, of a gasket 510. Gasket 510 may be annular, and is preferably configured to engage a mold set for forming a mold assembly. Gasket 510 is preferably characterized by at least four discrete projections 511. Gasket 510 preferably has an exterior surface 514 and an interior surface 512. The projections 511 are preferably arranged upon inner surface 512 such that they are substantially coplanar. The projections are preferably evenly spaced around the interior surface of the gasket Preferably, the spacing along the interior surface of the gasket between each projection is about 90 degrees. Although four projections are preferred, it is envisioned that more than four could be incorporated. The gasket 510 may be formed of a silicone rubber material such as GE SE6035 which is commercially available from General Electric. In another embodiment, the gasket 510 may be formed of copolymers of ethylene and vinyl acetate which are commercially available from E. I. DuPont de Nemours & Co. under the trade name ELVAX7. In another embodiment, the gasket 510 may be formed from polyethylene. In another embodiment, the gasket may be formed from a thermoplastic elastomer rubber. An example of a thermoplastic elastomer rubber that may be used is , DYNAFLEX G-2780 commercially available from GLS Corporation.

As shown in Fig. 11, projections 511 are preferably capable of spacing mold members 526 of a mold set. Mold members 526 may be any of the various types and sizes of mold members that are well known in the art. A mold cavity 528 at least partially defined by mold members 526 and gasket 510, is preferably capable of retaining a lens forming composition. Preferably, the seal between gasket 510 and mold members 526 is as complete as possible. The height of each projection 511 preferably controls the spacing between mold members 526, and thus the thickness of the finished lens. By selecting proper gaskets and mold sets, lens cavities may be created to produce lenses of various powers.

A mold assembly consists of two mold members. A front mold member 526a and a back mold member 526b, as depicted in Fig. 11. The back mold member is also known as the convex mold member. The back mold member preferably defines the concave surface of a convex lens. Referring back to Figs. 9 and 10, locations where the steep axis 522 and the flat axis 524 of the back mold member 526b preferably lie in relation to gasket 510 have been indicated. In conventional gaskets, a raised lip may be used to space mold members. The thickness of this lip varies over the circumference of the lip in a manner appropriate with the type of mold set a particular gasket is designed to be used with. In order to have the flexibility to use a certain number of molds, an equivalent amount of conventional gaskets is typically kept in stock.

However, within a class of mold sets there may be points along the outer curvature of a the back mold member where each member of a class of back mold members is shaped similarly. These points may be found at locations along gasket 510, oblique to the steep and flat axes of the mold members. In a preferred embodiment, these points are at about 45 degree angles to the steep and flat axes of the mold members. By using discrete projections 511 to space the mold members at these points, an individual gasket could be used with a variety of mold sets. Therefore, the number of gaskets that would have to be kept in stock may be greatly reduced.

In addition, gasket 510 may include a recession 518 for receiving a lens forming composition. Lip 520 may be pulled back in order to allow a lens forming composition to be introduced into the cavity. Vent ports 516 may be incorporated to facilitate the escape of air from the mold cavity as a lens forming composition is introduced.

Gasket 510 may also include a projection 540. Projection 540 may extend from the side of the gasket toward

the interior of the mold cavity when a first and second mold are assembled with the gasket. The projection is positioned such that a groove is formed in a plastic lens formed using the mold assembly. The groove may be positioned near an outer surface of the formed lens. In this manner the groove is formed near the interface between the mold members and the formed lens. Fig. 14 depicts a side view of an lens 550 disposed between two mold members 526 after curing and the removal of the gasket. A variety of indentations/grooves may be seen along the outer surface of the lens caused by the various projections from the gasket. Grooves 544 may be caused by the projections 511 of a gasket used to space the mold members at the appropriate distance. Groove 546 may be caused by the projection 540. The groove is positioned at the interface of the mold members and the formed lens. While depicted as near the interface of the upper mold member, it should be understood that the groove may also be positioned at the interface between the lower mold member and the formed lens. In one embodiment, the fill port 538 (see Figs. 12 and 13) may produce a groove near the interface of the upper mold member and the formed lens. The projection 511 may therefore be positioned at the interface between the lower mold member and the formed lens. In this manner, two grooves may be created at the interfaces between the formed lens and each of the mold members.

After the gasket is been removed, the molds may adhere to the formed lens. In some instances a sharp object may be inserted between the mold members and the formed lens to separate the formed lens from the mold members. The groove 546 may facilitate the separation of the mold members from the formed lens by allowing the insertion of a sharp object to pry the molds away from the formed lens.

Figs. 12 and 13 present an isometric view and a top view, respectively, of an improved gasket. Gasket 530 may be composed of similar materials as gasket 510. Like gasket 510, gasket 530 is preferably annular, but may be take a variety of shapes. In addition, gasket 530 may incorporate projections 531 in a manner similar to the projections 511 shown in Fig. 9. Alternatively, gasket 530 may include a raised lip along interior surface 532 or another method of spacing mold members that is conventional in the art.

Gasket 530 preferably includes a fill port 538 for receiving a lens forming composition while gasket 530 is fully engaged to a mold set. Fill port 538 preferably extends from interior surface 532 of gasket 530 to an exterior surface 534 of gasket 530. Consequently, gasket 530 need not be partially disengaged from a mold member of a mold set in order to receive a lens forming composition. In order to introduce a lens forming composition into the mold cavity defined by a conventional mold/gasket assembly the gasket must be at least partially disengaged from the mold members. During the process of filling the mold cavity, lens forming composition may drip onto the backside of a mold member. Lens forming composition on the backside of a mold member may cause activating light used to cure the lens to become locally focused, and may cause optical distortions in the final product. Because fill port 538 allows lens forming composition to be introduced into a mold cavity while gasket 530 is fully engaged to a mold set, gasket 530 preferably avoids this problem. In addition, fill port 538 may be of sufficient size to allow air to escape during the introduction of a lens forming composition into a mold cavity; however, gasket 530 may also incorporate vent ports 536 to facilitate the escape of air.

A method for making a plastic eyeglass lenses using either gasket 510 or 530 is presented. The method preferably includes engaging gasket 510 with a first mold set for forming a first lens of a first power. The first mold set preferably contains at least a front mold member 526a and a back mold member 526b. A mold cavity for retaining a lens forming composition may be at least partially defined by mold members 526a and 526b and gasket 510. Gasket 510 is preferably characterized by at least four discrete projections 511 arranged on interior surface 512 for spacing the mold members. Engaging gasket 510 with the mold set preferably includes positioning the mold members such that each of the projections 511 forms an oblique angle with the steep and flat axis of the back mold member 526b. In a preferred embodiment, this angle is about 45 degrees. The method preferably further includes introducing a lens forming composition into mold cavity 528 and curing the lens forming composition. Curing may include exposing the composition to activating light and/or thermal radiation. After the lens is cured, the first mold set may be removed from the gasket and the gasket may then be engaged with a second mold set for forming a second lens of a second power. When using the gasket 530. the method further includes introducing a lens forming composition through fill port 538, wherein the first and second mold members remain fully engaged with the gasket during the introduction of the lens forming composition. The lens forming composition may then be cured by use of activating light and/or thermal radiation.

After curing of the lens in lens curing unit 30, the lens may be de-molded and post-cured in the post-cure unit 40. Post-cure unit 40 is preferably configured to apply light, heat or a combination of light and heat to the lens. As shown in Fig. 15, post-cure unit 40 may include a light source 414, a lens drawer assembly 416, and a heat source 418. Lens drawer assembly 416 preferably includes a lens holder 420, more preferably at least two lens holders 420. Lens drawer assembly 416 is preferably slidingly mounted on a guide. Preferably, lens drawer assembly 416 is made from a ceramic material. Cured lenses may be placed in lens holders 420 while the lens drawer assembly 416 is in the open position (i.e., when the door extends from the front of post-cure unit 40). After the lenses have been loaded into lens holders 420 the door may be slid into a closed position, with the lenses directly under light source 414 and above heat source 418.

As shown in Fig. 15, it is preferred that the light source 414 includes a plurality of light generating devices or

lamps 440. Preferably, lamps 440 may be oriented above each of the lens holders when the lens drawer assembly is closed. The lamps 440, preferably, generate activating light. The lamps 440 may be supported by and electrically connected to suitable fixtures 442. The fixtures may be at least partially reflective and concave in shape to direct light from the lamps 440 toward the lens holders. The lamps may generate either ultraviolet light, actinic light, visible light, and/or infrared light. The choice of lamps is preferably based on the monomers used in the lens forming composition. In one embodiment, the activating light may be generated from a fluorescent lamp. The fluorescent lamp preferably has a strong emission spectra from about 200 nm to about 800 nm, more preferably between about 200 nm to about 400 nm. A fluorescent lamp emitting activating light with the described wavelengths is commercially available from Voltarc as model SNEUV RPR 4190. In another embodiment, the lamp may generate ultraviolet light.

In one embodiment, the activating light source may be turned on and off quickly between exposures. A ballast may be used for this function. The ballast may be positioned beneath the post-cure unit. Alternatively, a ballast and transformer system, as depicted in Fig. 7 and described above may be used to control the activating light source.

Heat source 418 may be configured to heat the interior of the post-cure unit. Preferably, heat source 418 is a resistive heater. Heat source 418 may be made up of one or two resistive heaters. The temperature of heat source 418 may be thermostatically controlled. By heating the interior of the post-cure unit the lenses which are placed in post-cure unit 40 may be heated to complete curing of the lens forming material. Post-cure unit 40 may also include a fan to circulate air within the unit. The circulation of air within the unit may help maintain a relatively uniform temperature within the unit. The fan may also be used to cool the temperature of post-cure unit 40 after completion of the post cure process.

In an embodiment, a lens cured by exposure to activating light may be further processed by conductive heating. The use of a conductive heating post-cure procedure is described in detail in U.S. Patent No. 5,928,575 to Buazza which is incorporated by reference.

In another embodiment, the edges of a lens may be treated to cure or remove incompletely cured lens forming material (see above description) before a post-cure heat is applied. Techniques for further curing of incompletely cured lens forming material are described in U.S. Patent No. 5,976,423 to Buazza which is incorporated by reference.

In another embodiment, a lens may be tinted after receiving conductive heat postcure treatment in a mold cavity. During tinting of the lens, the lens is preferably immersed in a dye solution.

The operation of the lens curing system may be controlled by a microprocessor based controller 50 (Fig. 1). Controller 50 preferably controls the operation of coating unit 20, lens curing unit 30, and post-cure unit 40. Controller 50 may be configured to substantially simultaneously control each of these units. In addition, the controller may include a display 52 and an input device 54. The display and input device may be configured to exchange information with an operator.

Controller 50 preferably controls a number of operations related to the process of forming a plastic lens. Many of the operations used to make a plastic lens (e.g., coating, curing and post-cure operations) are preferably performed under a predetermined set of conditions based on the prescription and type of lens being formed (e.g., ultraviolet/visible light absorbing, photochromic, colored, etc.). Controller 50 is preferably programmed to control a number of these operations, thus relieving the operator from having to continually monitor the apparatus.

In some embodiments, the lens or mold members may be coated with a variety of coatings (e.g., a scratch resistant or tinted coating). The application of these coatings may require specific conditions depending on the type of coating to be applied. Controller 50 is preferably configured to produce these conditions in response to input from the operator.

When a spin coating unit is used, controller 50 may be configured to control the rotation of the lens or mold member during the coating process. Controller 50 is preferably electronically coupled to the motor of the spin coating unit. The controller may send electronic signals to the motor to turn the motor on and/or off. In a typical coating process the rate at which the mold or lens is rotated is preferably controlled to achieve a uniform and defect free coating. The controller is preferably configured to control the rate of rotation of the mold or lens during a curing process. For example, when a coating material is being applied, the mold or lens is preferably spun at relatively high rotational rates (e.g., about 900 to about 950 RPM). When the coating material is being cured, however, a much slower rotational rate is preferably used (e.g., about 200 RPM). The controller is preferably configured to adjust the rotational rate of the lens or mold depending on the process step being performed.

The controller is also preferably configured to control the operation of lamps 24. The lamps are preferably turned on and off at the appropriate times during a coating procedure. For example, during the application of the coating material activating lights are typically not used, thus the controller may be configured to keep the lamps off during this process. During the curing process, activating light may be used to initiate the curing of the coating material. The controller is preferably configured to turn the lamps on and to control the amount of time the lamps remain on during a curing of the coating material. The controller may also be configured to create light pulses to affect curing of the coating material. Both the length and frequency of the light pulses may be controlled by the controller.

The controller is also preferably configured to control operation of the lens-curing unit. The controller may

perform some and/or all of a number of functions during the lens curing process, including, but not limited to: (i) measuring the ambient room temperature; (ii) determining the dose of light (or initial dose of light in pulsed curing applications) required to cure the lens forming composition, based on the ambient room temperature; (iii) applying the activating light with an intensity and duration sufficient to equal the determined dose; (iv) measuring the composition's temperature response during and subsequent to the application of the dose of light; (v) calculating the dose required for the next application of activating light (in pulsed curing applications); (vi) applying the activating light with an intensity and duration sufficient to equal the determined second dose; (vii) determining when the curing process is complete by monitoring the temperature response of the lens forming composition during the application of activating light; (viii) turning the upper and lower light sources on and off independently; (ix) monitoring the lamp temperature, and controlling the temperature of the lamps by activating cooling fans proximate the lamps; and (x) turning the fans on/off or controlling the flow rate of an air stream produced by a fan to control the composition temperature. Herein, "dose" refers to the amount of light energy applied to an object, the energy of the incident light being determined by the intensity and duration of the light. A controller that is configured to alter the dose activating light applied to a lens forming composition in response to the temperature of lens forming composition is described in U.S. Patent No. 5,989,462 to Buazza et al. which is incorporated by reference.

In an embodiment, a shutter system may be used to control the application of activating light rays to the lens forming material. The shutter system preferably includes air-actuated shutter plates that may be inserted into the curing chamber to prevent activating light from reaching the lens forming material. The shutter system may be coupled to the controller, which may actuate an air cylinder to cause the shutter plates to be inserted or extracted from the curing chamber. The controller preferably allows the insertion and extraction of the shutter plates at specified time intervals. The controller may receive signals from temperature sensors allowing the time intervals in which the shutters are inserted and/or extracted to be adjusted as a function of a temperature of the lens forming composition and/or the molds. The temperature sensor may be located at numerous positions proximate the mold cavity and/or casting chamber.

In some embodiments, the lens may require a post-curing process. The post-cure process may require specific conditions depending on the type of lens being formed. The controller is preferably configured to produce these conditions in response to input from the operator.

The controller is preferably configured to control the operation of lamps in the post-cure unit. The lamps are preferably turned on and off at the appropriate times during the post-cure procedure. For example, in some post-cure operations the lights may not be required, thus the controller would keep the lights off during this process. During other processes, the lights may be used to complete the curing of the lens. The controller is preferably configured to turn the lights on and to control the amount of time the lights remain on during a post-cure procedure. The controller may also be configured to create light pulses during the post-cure procedure. Both the length and frequency of the light pulses may be controlled by the controller.

The controller is preferably configured to control operation of the heating device 418 during the post-cure operation. Heating device 418 is preferably turned on and off to maintain a predetermined temperature within the post-cure unit. Alternatively, when a resistive heater is used, the current flow through the heating element may be altered to control the temperature within the post-cure unit. Preferably both the application of light and heat are controlled by the controller. The operation of fans, coupled to the post-cure unit, is also preferably controlled by the controller. The fans may be operated by the controller to circulate air within or into/out of the post-cure unit.

Additionally, the controller may provide system diagnostics to determine if the system is operating properly. The controller may notify the user when routine maintenance is due or when a system error is detected. The system monitors the following conditions to warn the user when the machine has malfunctioned, requires standard maintenance, or is drifting out of its suggested operating envelope: $I^2C$ network errors; line voltage; top rack light intensity; bottom rack light intensity; post-cure rack light intensity; top activating light ballast current; bottom activating light ballast current; post-cure activating light ballast current; germicidal light ballast current; post-cure heater current; top activating light filament heat transformer current; bottom activating light filament heat transformer current; germicidal light filament heat transformer current; the number of times the top activating light is turned on; the number of times the bottom activating light is turned on; the number of times the post-cure activating light is turned on; the number of times the germicidal light is turned on; top activating light on time; bottom activating light on time; post cure activating light on time; germicidal light on time; top lamp temperature; bottom lamp temperature; spin board temperature; post-cure temperature.

For example, the controller may monitor the current passing through lamps of the coating, lens curing, or post-cure unit to determine if the lamps are operating properly. The controller may keep track of the number of hours that the lamps have been used. When a lamp has been used for a predetermined number of hours a message may be transmitted to an operator to inform the operator that the lamps may require changing. The controller may also monitor the intensity of light produced by the lamp. A photodiode may be placed proximate the lamps to determine the intensity of light being produced by the lamp. If the intensity of light falls outside a predetermined range, the current

applied to the lamp may be adjusted to alter the intensity of light produced (either increased to increase the intensity; or decreased to decrease the intensity). Alternatively, the controller may transmit a message informing the operator that a lamp needs to be changed when the intensity of light produced by the lamp drops below a predetermined value.

When the machine encounters an error in these areas, the following error messages may be displayed:

post cure temperature The temperature of your post cure is out of its suggested operating range. If the lens drawer is closed, the unit has had sufficient warm-up time, and the problem continues after a system restart, your machine may need service.

light intensity Your light source output has dropped below its recommended range. If the problem continues after a system restart, you may need to replace your lamps.

lamp power Your lamps are not functioning properly. If the problem continues after a system restart, you may need to replace your lamps.

filament heat power Your lamps are not functioning properly. If the problem continues after a system restart, you may need to replace your lamps.

lamp on time Your lamps have exceeded their expected life. Please replace your lamps.

PC heaters The heaters in your post cure unit are not functioning properly. If the problem continues after a system restart, your machine may need service

The controller may also manage an interlock system for safety and energy conservation purposes. If the lens drawer assembly from the coating or post-cure units are open the controller is preferably configured to prevent the lamps from turning on. This may prevent the operator from inadvertently becoming exposed to the light from the lamps. Lamps 24 for the coating unit 20 are preferably positioned on cover 22 (See Fig. 1). In order to prevent inadvertent exposure of the operator to light from lamps 24 a switch is preferably built into the cover, as described above. The controller is preferably configured to prevent the lamps 24 from turning on when the cover is open. The controller may also automatically turn lamps 24 off if the cover is opened when the lenses are on. Additionally, the controller may conserve energy by keeping fans and other cooling devices off when the lamps are off.

The controller may display a number of messages indicating problems that prevent further operation of the lens forming apparatus. Process tips appear in the appropriate location on the display (over a button when related to that function, at the top and flashing when important, etc.). The controller uses the following list of tips to instruct the user during machine use. The list is in order of priority (i.e. the tip at the top of the list is displayed if both it and the second item need to be displayed simultaneously).

WARNING JOBS RUNNING, CONFIRM PURGE

WARNING JOBS RUNNING, CONFIRM RERUN

ROTATE ENCODER TO CONFIRM PURGE

NOT ALLOWED WHILE JOBS RUNNING

MOVE CAVITY TO POST-CURE & PRESS THE KEY

CLOSE LID

PRESS & HOLD TO RERUN POST-CURE PROCESS

PRESS & HOLD TO RERUN CURE PROCESS

PRESS & HOLD TO RERUN ANNEAL PROCESS

PRESS & HOLD TO CANCEL

PRESS & HOLD TO RERUN COAT PROCESS

PRESS THE CURE KEY TO START JOB

MUST WAIT FOR POST-CURE TO COMPLETE

MUST WAIT FOR POST-CURE TO START

MUST SPIN LEFT AND RIGHT BOWLS

NO JOBS CURRENTLY IN MEMORY

ROTATE ENCODER TO SELECT JOB

NO CURED JOBS AVAILABLE TO POST-CURE

NO JOBS READY TO ANNEAL

LEFT MOLD DOES NOT EXIST, RE-ENTER RX

RIGHT MOLD DOES NOT EXIST, RE-ENTER RX

MOLDS NOT IN KIT, ACCEPT OR RE-ENTER RX

ROTATE ENCODER TO SELECT SAVE OR DISCARD

PRESS ENCODER WHEN READY

...PLEASE WAIT WHILE COMPUTING

ANNEAL COMPLETE

COAT COMPLETE

POST-CURE COMPLETE, DEMOLD & ANNEAL

MOLDS DO NOT EXIST, RE-ENTER RX

RIGHT MOLD NOT IN KIT, ACCEPT | RE-ENTER

LEFT MOLD NOT IN KIT, ACCEPT | RE-ENTER

THERE ARE NO STORED Rx's TO EDIT

THERE ARE NO JOBS TO PURGE/RERUN

THERE ARE NO STORED JOBS TO VIEW

THERE ARE NO STORED JOBS TO EDIT

The controller may also be configured to interact with the operator. The controller preferably includes an input device 54 and a display screen 52. The input device may be a keyboard (e.g., a full computer keyboard or a modified keyboard), a light sensitive pad, a touch sensitive pad, or similar input device. A number the parameters controlled by the controller may be dependent on the input of the operator. In the initial set up of the apparatus, the controller may allow the operator to input the type of lens being formed. This information may include type of lens (clear, ultraviolet absorbing, photochromic, colored, etc.), prescription, and type of coatings (e.g., scratch resistant or tint).

Based on this information the controller is preferably configured to transmit information back to the operator. The operator may be instructed to select mold members for the mold assembly. The mold members may be coded such that the controller may indicate to the operator which molds to select by transmitting the code for each mold member. The controller may also determine the type of gasket required to properly seal the mold members together.

Like the mold members, the gaskets may also be coded to make the selection of the appropriate gasket easier.

The lens forming compositions may also be coded. For the production of certain kinds of lenses a specific lens forming composition may be required. The controller may be configured to determine the specific composition required and transmit the code for that composition to the operator. The controller may also signal to the operator when certain operations need to be performed or when a particular operation is completed (e.g., when to place the mold assembly in the lens curing unit, when to remove the mold assembly, when to transfer the mold assembly, etc.).

The controller may also display Help functions to instruct the user on machine use and give general process guidance. The following paragraphs are examples of some of the help files that may be available to an operator:

1) NAVIGATION AND DATA ENTRY

The information entry knob is used for most data selection and entry. Rotating the knob moves the cursor in menus and scrolls through choices on data entry screens. Pressing the knob down enters the selection. Prompts at the top of the screen help the user through the process. The arrow keys allow for correction of previously entered data and can be used as an alternative to the data entry knob during navigation.

The menu key returns the user to the previous menu.

The help key gives general process help and also shows machine malfunctions when there is a problem with the system. When an error is present, the user will be given information about any errors and suggested courses of action to remedy them.

2) SCREEN DESCRIPTIONS

NEW Rx Prescription information is entered in this screen. The availability of molds is displayed on this screen in real time. Molds that are available have a checkmark next to them. Molds that can be added to your kit are displayed with a box next to them. Powers that are out of the range of the machine will produce dashes in the area where the mold information is normally shown. When all prescription information is entered the data entry knob is pressed and the job is saved in memory. The view screen displays the data for cavity creation. If the data was entered in plus cylinder format, it will be transposed and shown in minus cylinder form. If you need to see the data as it was input, it is available in the EDIT Rx screen in both plus and minus cylinder forms.

VIEW and EDIT Allow the user to see and modify jobs that are in memory. Once the view or edit selection is made on the main menu, the user can scroll through all jobs that have been saved. When using edit, pressing the data entry knob will move the cursor into an edit screen where the displayed job's prescription can be modified. In the view menu, pressing the knob will put the user at the main menu.

PURGE/RERUN JOB Allows the user to delete and rerun jobs if necessary. When a single lens of a pair needs to be rerun, edit job can be used to change the job type to left or right only after rerun is selected for that job. Purge all jobs clears all jobs from the memory. If you would like to start your job numbering back at zero, this feature is used. INSTRUMENT STATUS Shows the current status of individual sections of the machine - spin speeds, current being delivered to a device, network errors etc. These screens are useful when diagnosing errors. The system's serial numbers and software version numbers are also in the status screens.

ADVANCED The advanced menu contains all user adjustable settings, program upload options, and mold kit selections. This menu is password protected to minimize the risk that changes will be made by accident. When password is displayed, pressing the data entry knob lets the user enter a password by rotating the data entry knob. Press the knob when the proper password is dialed in. Incorrect passwords will return the user to the password screen. The proper password will take the user to the advanced menu which functions like the main menu. Within these menus, when the desired field is highlighted, the data entry knob is pressed and parentheses appear around the field indicating that it is changeable by rotating the data entry knob. When the proper value is selected, pressing the knob again removes the parentheses and sets the field to the value selected. In the date and time setting screen, changes will not be saved until the save settings field is highlighted and the data entry knob is pressed. The kit menu allows the user to select the available mold package and power range.

3) RUNNING A JOB

Making lenses is a 3 part process. Applying a scratch resistant coating is optional and is covered at the end of this section.

When the user enters a prescription and saves the job, the view screen displays the data required to retrieve the molds and gasket necessary for each lens. The system is designed for minus cylinder format prescriptions. If the Rx information is entered in plus cylinder format, it will be transposed and returned in minus cylinder form. The cavity must be assembled based on the view screen data (the axis will be 90° different from the plus cylinder input). The original prescription can be viewed at the Edit Rx screen along with its transposed return information.

Before assembling a cavity, the molds and gasket must be thoroughly cleaned. Any contaminants on the molds or gasket may be included in the finished lens rendering it undispensable. Spin clean the casting side of each mold

with IPA and acetone. Assemble the cavity next, ensuring that the axis is set properly. Fill the cavity with the appropriate monomer. A filled cavity should not be exposed to room light for more than 3 minutes. High ambient light levels caused by windows or high intensity room lighting can significantly shorten the allowable room light exposure time.

CURING Press the cure button to initiate a curing cycle. Rotating the data entry knob will allow the user to select the job to be run. The necessary filters for the cycle are displayed with the job number. When the correct job is displayed, press the cure key. The area over the key instructs you to put in the pair or the left or right lens only. Ensure that the left and right lenses are always on the proper side of the chamber. Put the cavity in the initial curing drawer and press the cure button. When the initial cure is done, transfer the cavity or cavities to the front part of the post cure drawer and press the post cure key. If the job was split because of power differences in the left and right lenses, the area over the cure button will instruct the user to insert the second cavity in the initial cure drawer and press the cure key again (the first cavity should be in the post cure when performing the initial curing step on the second cavity). When prompted, move the cavity to the post cure section and press the post cure button again.

POST CURING The front openings in the post cure oven drawer are used to post cure the cavities. When the post cure cycle is over, press the post cure key, remove the cavities from the post cure chamber, and allow them to cool for 1 to 2 minutes. After the cooling period, remove the gasket and separate one mold from each assembly with the demolding tool. The tool is inserted in the gap created by the tab on the gasket and the mold is gently pried off the assembly. Place the remaining lens and mold in the Q-Soak container to separate the mold from the lens. Clean the lenses and proceed to the annealing step.

ANNEALING If more than one job is available for annealing, the user can choose which job they would like to anneal by rotating the data entry knob when the area over the anneal button displays a job number. Press the anneal button when the proper job is displayed. The cleaned lens is placed over the rear openings of the post cure chamber drawer. Press the anneal key when prompted at the end of the annealing cycle.

COATING Scratch coating is optional and is applied in the spin bowls of the main chamber. The timed buttons by the spin bowls initiate the coat curing cycle. When the front molds are cleaned and coated, the hood is closed and a 90 second curing cycle is started for the coatings. When the cycle is complete, the light turns off, the motors stop, and the controller signals the user that the molds are ready. The cavity is assembled in the normal fashion and the lens monomer is dispensed into the cavity.

Lens coating is also available and is applied to the finished lens after the annealing step is complete.

4) TINTING TIPS

After edging, lenses may be tinted by conventional means. As with many modem lens materials, tinting results may be improved with slightly modified handling procedures. First, when mounting the lenses in the dye holders, do not use spring-type holders or apply excessive pressure to the lenses. Lenses become somewhat flexible at dye tank temperatures and may bend. Faster and more uniform dye absorption will be achieved if the lenses are agitated in a slow back and forth motion while in the dye tank.

In some embodiments, the controller may be a computer system. A computer system may include a memory medium on which computer programs configured to perform the above described operations of the controller are stored. The term "memory medium" is intended to include an installation medium, e.g., a CD-ROM, or floppy disks, a computer system memory such as DRAM, SRAM, EDO RAM, Rambus RAM, etc., or a nonvolatile memory such as a magnetic media, e.g., a hard drive, or optical storage. The memory medium may comprise other types of memory as well, or combinations thereof. In addition, the memory medium may be located in a first computer in which the programs are executed, or may be located in a second different computer that connects to the first computer over a network. In the latter instance, the second computer provides the program instructions to the first computer for execution. Also, the computer system may take various forms, including a personal computer system, mainframe computer system, workstation, network appliance, Internet appliance, personal digital assistant (PDA), television system or other device. In general, the term "computer system" can be broadly defined to encompass any device having a processor which executes instructions from a memory medium.

The memory medium preferably stores a software program for controlling the operation of a lens forming apparatus. The software program may be implemented in any of various ways, including procedure-based techniques, component-based techniques, and/or object-oriented techniques, among others. For example, the software program may be implemented using ActiveX controls, C++ objects, JavaBeans, Microsoft Foundation Classes (MFC), or other technologies or methodologies, as desired. A CPU, such as the host CPU, executing code and data from the memory medium comprises a means for creating and executing the software program according to the methods or flowcharts described below.

Various embodiments further include receiving or storing instructions and/or data implemented in accordance

with the foregoing description upon a carrier medium. Suitable carrier media include memory media or storage media such as magnetic or optical media, e.g., disk or CD-ROM, as well as signals such as electrical, electromagnetic, or digital signals, conveyed via a communication medium such as networks and/or a wireless link.

## LENS FORMING COMPOSITIONS

The lens forming material may include any suitable liquid monomer or monomer mixture and any suitable photosensitive initiator. As used herein "monomer" is taken to mean any compound capable of undergoing a polymerization reaction. Monomers may include non-polymerized material or partially polymerized material. When partially polymerized material is used as a monomer, the partially polymerized material preferably contains functional groups capable of undergoing further reaction to form a new polymer. The lens forming material preferably includes a photoinitiator that interacts with activating light. In one embodiment, the photoinitiator absorbs ultraviolet light having a wavelength in the range of 300 to 400 nm. In another embodiment, the photoinitiator absorbs actinic light having a wavelength in the range of about 380 nm to 490 nm. The liquid lens forming material is preferably filtered for quality control and placed in the lens molding cavity 382 by pulling the annular gasket 380 away from one of the opposed mold members 378 and injecting the liquid lens forming material into the lens molding cavity 382 (See Fig. 11). Once the lens molding cavity 382 is filled with such material, the annular gasket 380 is preferably replaced into its sealing relation with the opposed mold members 378.

Those skilled in the art will recognize that once the cured lens is removed from the lens molding cavity 382 by disassembling the opposed mold members 378, the lens may be further processed in a conventional manner, such as by grinding its peripheral edge.

A polymerizable lens forming composition includes an aromatic-containing bis(allyl carbonate)-functional monomer and at least one polyethylenic-functional monomer containing two ethylenically unsaturated groups selected from acrylyl or methacrylyl. In a preferred embodiment, the composition further includes a suitable photoinitiator. In other preferred embodiments, the composition may include one or more polyethylenic-functional monomers containing three ethylenically unsaturated groups selected from acrylyl or methacrylyl, and a dye. The lens forming composition may also include activating light absorbing compounds such as ultraviolet light absorbing compounds and photochromic compounds. Examples of these compositions are described in more detail in U.S. Patent No. 5,989,462 to Buazza et al. which is incorporated by reference.

In another embodiment, an ophthalmic eyeglass lens may be made from a lens forming composition comprising a monomer composition and a photoinitiator composition.

The monomer composition preferably includes an aromatic containing polyethylenic polyether functional monomer. In an embodiment, the polyether employed is an ethylene oxide derived polyether, propylene oxide derived polyether, or mixtures thereof. Preferably, the polyether is an ethylene oxide derived polyether. The aromatic polyether polyethylenic functional monomer preferably has the general structure (V), depicted below where each $R_2$ is a polymerizable unsaturated group, m and n are independently 1 or 2, and the average values of j and k are each independently in the range of from about 1 to about 20. Common polymerizable unsaturated groups include vinyl, allyl, allyl carbonate, methacrylyl, acrylyl, methacrylate, and acrylate.

$$R_2\text{-}[CH_2\text{-}(CH_2)_m\text{-}O]_j\text{-}A_1\text{-}[O\text{-}(CH_2)_n\text{-}CH_2]_k\text{-}R_2$$

A, is the divalent radical derived from a dihydroxy aromatic-containing material. A subclass of the divalent radical A, which is of particular usefulness is represented by formula (II):

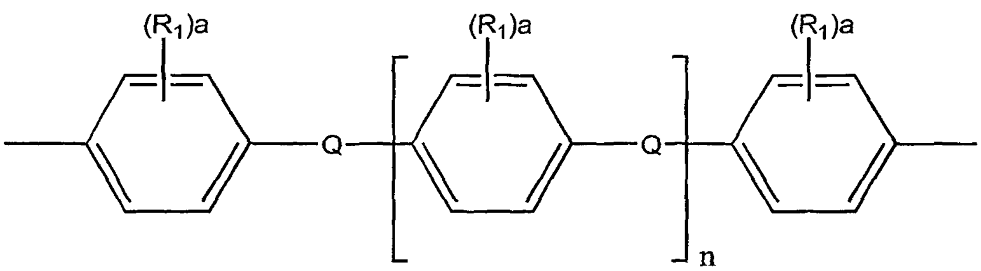

(II)

in which each $R_1$ is independently alkyl containing from 1 to about 4 carbon atoms, phenyl, or halo; the average value

of each (a) is independently in the range of from 0 to 4; each Q is independently oxy, sulfonyl, alkanediyl having from 2 to about 4 carbon atoms, or alkylidene having from 1 to about 4 carbon atoms; and the average value of n is in the range of from 0 to about 3. Preferably Q is methylethylidene, viz., isopropylidene.

Preferably the value of n is zero, in which case A, is represented by formula (III):

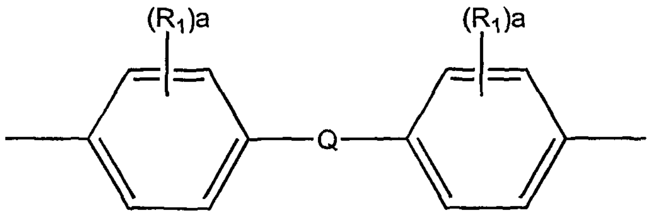

(III)

in which each $R_1$, each a, and Q are as discussed with respect to Formula II. Preferably the two free bonds are both in the ortho or para positions. The para positions are especially preferred.

In an embodiment, when para, para-bisphenols are chain extended with ethylene oxide, the central portion of the aromatic containing polyethylenic polyether functional monomer may be represented by the formula:

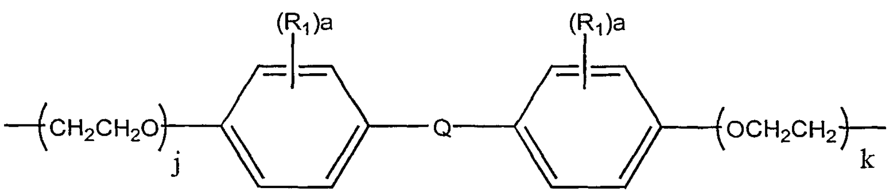

(IV)

where each $R_1$, each a, and Q are as discussed with respect to Formula II, and the average values ofj and k are each independently in the range of from about 1 to about 20.

In another embodiment, the polyethylenic functional monomer is an aromatic polyether polyethylenic functional monomer containing at least one group selected from acrylyl or methacrylyl. Preferably the aromatic polyether polyethylenic functional monomer containing at least one group selected from acrylate and methacrylate has the general structure (VI), depicted below where $R_0$ is hydrogen or methyl, where each $R_1$, each a, and Q are as discussed with respect to Formula II, where the values of j and k are each independently in the range of from about 1 to about 20, and where $R_2$ is a polymerizable unsaturated group (e.g., vinyl, allyl, allyl carbonate, methacrylyl, acrylyl, methacrylate, or acrylate).

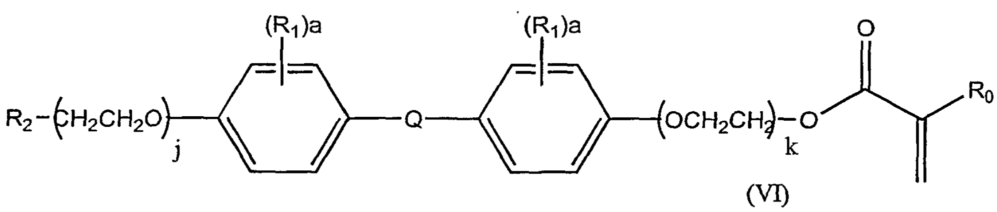

(VI)

In one embodiment, the aromatic containing polyether polyethylenic functional monomer is preferably an ethoxylated bisphenol A di(meth)acrylate. Ethoxylated bisphenol A di(meth)acrylates have the general structure depicted below where each $R_0$ is independently hydrogen or methyl, each $R_1$, each a, and Q are as discussed with respect to Formula II, and the values of j and k are each independently in the range of from about 1 to about 20.

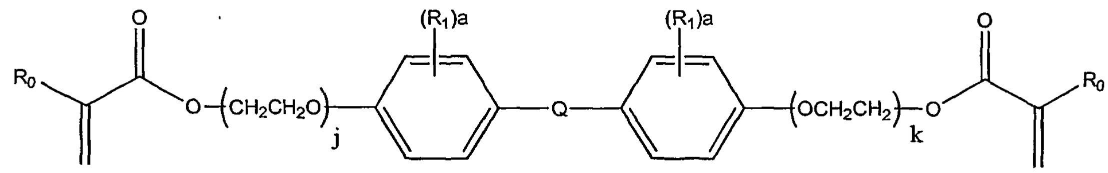

Preferred ethoxylated bisphenol A dimethacrylates include ethoxylated 2 bisphenol A diacrylate (where j + k = 2, and $R_0$ is H), ethoxylated 2 bisphenol A dimethacrylate (where j + k = 2, and $R_0$ is Me), ethoxylated 3 bisphenol A diacrylate (where j + k = 3, and $R_0$ is H), ethoxylated 4 bisphenol A diacrylate (where j + k = 4, and $R_0$ is H), ethoxylated 4 bisphenol A dimethacrylate (where j + k = 4, and $R_0$ is Me), ethoxylated 6 bisphenol A dimethacrylate (where j + k = 6, and $R_0$ is Me), ethoxylated 8 bisphenol A dimethacrylate (where j + k = 8, and $R_0$ is Me), ethoxylated 10 bisphenol A diacrylate (where j + k = 10, and $R_0$ is H), ethoxylated 10 bisphenol A dimethacrylate (where j + k = 10, and $R_0$ is Me), ethoxylated 30 bisphenol A diacrylate (where j + k = 30, and $R_0$ is H), ethoxylated 30 bisphenol A dimethacrylate (where j + k = 30, and $R_0$ is Me). These compounds are commercially available from Sartomer Company under the trade names PRO-631, SR-348, SR-349, SR-601, CD-540, CD-541, CD-542, SR-602, SR-480, SR-9038, and SR-9036 respectively. Other ethoxylated bisphenol A dimethacrylates include ethoxylated 3 bisphenol A dimethacrylate (where j + k = 3, and $R_0$ is Me), ethoxylated 6 bisphenol A diacrylate (where j + k = 30, and $R_0$ is H), and ethoxylated 8 bisphenol A diacrylate (where j + k = 30, and $R_0$ is H). In all of the above described compounds Q is $C(CH_3)_2$.

The monomer composition preferably may also include a polyethylenic functional monomer. Polyethylenic functional monomers are defined herein as organic molecules which include two or more polymerizable unsaturated groups. Common polymerizable unsaturated groups include vinyl, allyl, allyl carbonate, methacrylyl, acrylyl, methacrylate, and acrylate. Preferably, the polyethylenic functional monomers have the general formula (VII) or (VIII) depicted below, where each $R_0$ is independently hydrogen, halo, or a $C_1$-$C_4$ alkyl group and where A, is as described above. It should be understood that while general structures (VII) and (VIII) are depicted as having only two polymerizable unsaturated groups, polyethylenic functional monomers having three (e.g., tri(meth)acrylates), four (e.g., tetra(meth) acrylates), five (e.g., penta(meth)acrylates), six (e.g., hexa(meth)acrylates) or more groups may be used.

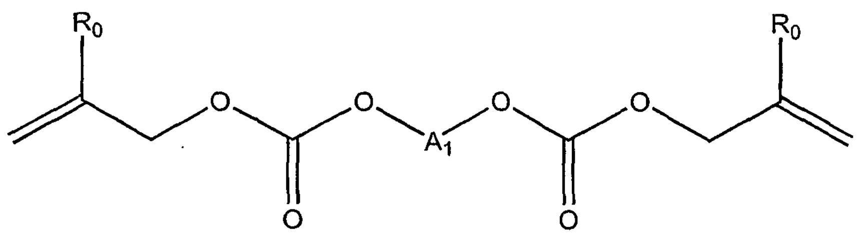

(VII)

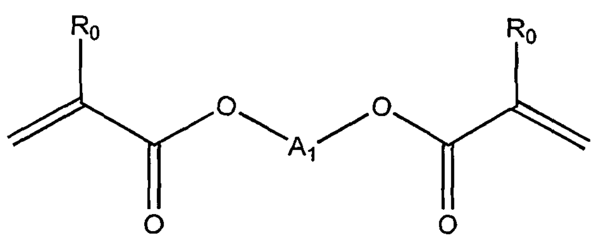

(VIII)

Preferred polyethylenic functional monomers which may be combined with an aromatic containing polyethylenic polyether functional monomer to form the monomer composition include, but are not limited to, ethoxylated 2 bisphenol A dimethacrylate, tris(2-hydroxyethyl)isocyanurate triacrylate, ethoxylated 10 bisphenol A dimethacrylate, ethoxylated 4 bisphenol A dimethacrylate, dipentaerythritol pentaacrylate, 1,6-hexanediol dimethacrylate, isobornyl acrylate, pentaerythritol triacrylate, ethoxylated 6 trimethylolpropane triacrylate, and bisphenol A bis allyl carbonate.

According to one embodiment, the liquid lens forming composition includes ethoxylated 4 bisphenol A dimethacrylate. Ethoxylated 4 bisphenol A dimethacrylate monomer, when cured to form an eyeglass lens, typically produces

lenses that have a higher index of refraction than comparable lenses produced using DEG-BAC. Lenses formed from such a mid-index lens forming composition which includes ethoxylated 4 bisphenol A dimethacrylate may have an index of refraction of about 1.56 compared to the non-ethoxylated monomer compositions which tend to have an index of refraction of about 1.51. A lens made from a higher index of refraction polymer may be thinner than a lens made from a lower index of refraction polymer because the differences in the radii of curvature between the front and back surface of the lens do not have to be as great to produce a lens of a desired focal power. Lenses formed from a lens forming composition which includes ethoxylated 4 bisphenol A dimethacrylate may also be more rigid than lenses formed from non-ethoxylated monomer based compositions.

The monomer composition may include additional monomers, which, when combined with ethoxylated 4 bisphenol A dimethacrylate, may modify the properties of the formed eyeglass lens and/or the lens forming composition. Tris(2-hydroxyethyl)isocyanurate triacrylate, available from Sartomer under the trade name SR-368, is a triacrylate monomer that may be included in the composition to provide improved clarity, high temperature rigidity, and impact resistance properties to the finished lens. Ethoxylated 10 bisphenol A dimethacrylate, available from Sartomer under the trade name SR-480, is a diacrylate monomer that may be included in the composition to provide impact resistance properties to the finished lens. Ethoxylated 2 bisphenol A dimethacrylate, available from Sartomer under the trade name SR-348, is a diacrylate monomer that may be included in the composition to provide tintability properties to the finished lens. Dipentaerythritol pentaacrylate, available from Sartomer under the trade name SR-399, is a pentaacrylate monomer that may be included in the composition to provide abrasion resistance properties to the finished lens. 1,6-hexanediol dimethacrylate, available from Sartomer under the trade name SR-239, is a diacrylate monomer that may be included in the composition to reduce the viscosity of the lens forming composition. Isobornyl acrylate, available from Sartomer under the trade name SR-506, is an acrylate monomer that may be included in the composition to reduce the viscosity of the lens forming composition and enhance tinting characteristics. Bisphenol A bis allyl carbonate may be included in the composition to control the rate of reaction during cure and also improve the shelf life of the lens forming composition. Pentaerythritol triacrylate, available from Sartomer under the trade name SR-444, is a triacrylate monomer that may be included in the composition to promote better adhesion of the lens forming composition to the molds during curing. Ethoxylated 6 trimethylolpropane triacrylate, available from Sartomer under the trade name SR-454, may also be added.

Photoinitiators which may be used in the lens forming composition have been described in previous sections. In one embodiment, the photoinitiator composition preferably includes phenyl bis(2,4,6-trimethylbenzoyl) phosphine oxide (IRG-819) which is commercially available from Ciba Additives under the trade name of Irgacure 819. The amount of Irgacure 819 present in a lens forming composition preferably ranges from about 30 ppm by weight to about 2000 ppm by weight. In another embodiment, the photoinitiator composition may include a mixture of photoinitiator. Preferably, a mixture of Irgacure 819 and 1-hydroxycyclohexylphenyl ketone, commercially available from Ciba Additives under the trade name of Irgacure 184 (IRG-184), is used. Preferably, the total amount of photoinitiators in the lens forming composition ranges from about 50 ppm to about 1000 ppm.

In another embodiment, an ophthalmic eyeglass lens may be made from lens forming composition comprising a monomer composition, a photoinitiator composition, and a co-initiator composition. The lens forming composition, in liquid form, is preferably placed in a mold cavity defined by a first mold member and a second mold member. It is believed that activating light which is directed toward the mold members to activate the photoinitiator composition causes the photoinitiator to form a polymer chain radical. The co-initiator may react with a fragment or an active species of either the photoinitiator or the polymer chain radical to produce a monomer initiating species. The polymer chain radical and the monomer initiating species may react with the monomer to cause polymerization of the lens forming composition.

The monomer composition preferably includes an aromatic containing polyethylenic polyether functional monomer having a structure as shown above. Preferably, the polyethylenic functional monomer is an aromatic polyether polyethylenic functional monomer containing at least one group selected from acrylyl or methacrylyl.

More preferably, the polyethylenic functional monomer is an ethoxylated bisphenol A di(meth)acrylate. The monomer composition may include a mixture of polyethylenic functional monomers, as described above. The photoinitiators which may be present in the lens forming composition have been described above.

The lens forming composition preferably includes a co-initiator composition. The co-initiator composition preferably includes amine co-initiators. Amines are defined herein as compounds of nitrogen formally derived from ammonia ($NH_3$) by replacement of the hydrogens of ammonia with organic substituents. Co-initiators include acrylyl amine co-initiators commercially available from Sartomer Company under the trade names of CN-381, CN-383, CN-384, and CN-386, where these co-initiators are monoacrylyl amines, diacrylyl amines, or mixtures thereof. Other co-initiators include ethanolamines. Examples of ethanolamines include but are not limited to N-methyldiethanolamine (NMDEA) and triethanolamine (TEA) both commercially available from Aldrich Chemicals. Aromatic amines (e.g., aniline derivatives) may also be used as co-initiators. Example of aromatic amines include, but are not limited to, ethyl-4-dimethylaminobenzoate (E-4-DMAB), ethyl-2-dimethylaminobenzoate (E-2-DMAB), *n*-butoxyethyl-4-dimethylaminobenzoate, *p*-dimethylaminobenzaldehyde, *N,N*-dimethyl-*p*-toluidine, and octyl-*p*-(dimethylamino)benzoate commercially available from Aldrich Chemicals or The First Chemical Group of Pascagoula, Mississippi.

Preferably, acrylated amines are included in the co-initiator composition. Acrylyl amines may have the general structures depicted in Fig. 39, where $R_0$ is hydrogen or methyl, n and m are 1 to 20, preferably 1-4, and R, and $R_2$ are independently alkyl containing from 1 to about 4 carbon atoms or phenyl. Monoacrylyl amines may include at least one acrylyl or methacrylyl group (see compounds (A) and (B) in FIG. 16). Diacrylyl amines may include two acrylyl, two methacrylyl, or a mixture of acrylyl or methacrylyl groups (see compounds (C) and (D) in FIG. 16). Acrylyl amines are commercially available from Sartomer Company under the trade names of CN-381, CN-383, CN-384, and CN-386, where these co-initiators are monoacrylyl amines, diacrylyl amines, or mixtures thereof. Other acrylyl amines include dimethylaminoethyl methacrylate and dimethylaminoethyl acrylate both commercially available from Aldrich. In one embodiment, the co-initiator composition preferably includes a mixture of CN-384 and CN-386. Preferably, the total amount of co-initiators in the lens forming composition ranges from about 50 ppm to about 7 % by weight.

An advantage to lens forming compositions which include a co-initiator is that less photoinitiator may be used to initiate curing of the lens forming composition. Typically, plastic lenses are formed from a lens forming composition which includes a photoinitiator and a monomer. To improve the hardness of the formed lenses the concentration of photoinitiator may be increased. Increasing the concentration of photoinitiator, however, may cause increased yellowing of the formed lens, as has been described previously. To offset this increase in yellowing, a permanent dye may be added to the lens forming composition. As the amount of yellowing is increased the amount of dye added may also be increased. Increasing the concentration of the dye may cause the light transmissibility of the lens to decrease.

A lens forming composition that includes a co-initiator may be used to reduce the amount of photoinitiator used. To improve the hardness of the formed lenses a mixture of photoinitiator and co-initiator may be used to initiate curing of the monomer. The above-described co-initiators typically do not significantly contribute to the yellowing of the formed lens. By adding co-initiators to the lens forming composition, the amount of photoinitiator may be reduced. Reducing the amount of photoinitiator may decrease the amount of yellowing in the formed lens. This allows the amount of dyes added to the lens forming composition to be reduced and light transnussibility of the formed lens may be improved without sacrificing the rigidity of the lens.

The lens forming composition may also include activating light absorbing compounds. These compounds may absorb at least a portion of the activating light which is directed toward the lens forming composition during curing. One example of activating light absorbing compounds are photochromic compounds. Photochromic compounds which may be added to the lens forming composition have been previously described. Preferably, the total amount of photochromic compounds in the lens forming composition ranges from about 1 ppm to about 1000 ppm. Examples of photochromic compounds which may be used in the lens forming composition include, but are not limited to Corn Yellow, Berry Red, Sea Green, Plum Red, Variacrol Yellow, Palatinate Purple, CH-94, Variacrol Blue D, Oxford Blue and CH-266. Preferably, a mixture of these compounds is used. Variacrol Yellow is a napthopyran material, commercially available from Great Lakes Chemical in West Lafayette, Indiana. Corn Yellow and Berry Red are napthopyrans and Sea Green, Plum Red and Palatinate Purple are spironaphthoxazine materials commercially available from Keystone Aniline Corporation in Chicago, Illinois. Variacrol Blue D and Oxford Blue are spironaphthoxazine materials, commercially available from Great Lakes Chemical in West Lafayette, Indiana. CH-94 and CH-266 are benzopyran materials, commercially available from Chroma Chemicals in Dayton, Ohio. The composition of a Photochromic Dye Mixture which may be added to the lens forming composition is described in Table 1.

Table 1

| Photochromic Dye Mixture | |
|---|---|
| Corn Yellow | 22.3 % |
| Berry Red | 19.7 % |
| Sea Green | 14.8 % |
| Plum Red | 14.0 % |
| Variacrol Yellow | 9.7 % |
| Palatinate Purple | 7.6 % |
| CH-94 | 4.0 % |
| Variacrol Blue D | 3.7 % |
| Oxford Blue | 2.6 % |
| CH-266 | 1.6 % |

The lens forming composition may also other activating light absorbing compounds such as UV stabilizers, UV absorbers, and dyes. UV stabilizers, such as Tinuvin 770 may be added to reduce the rate of degradation of the formed lens caused by exposure to ultraviolet light. UV absorbers, such as 2-(2H-benzotriazol-2-yl)-4-(1,1,3,3,-tetramethylbutyl)phenol, may be added to the composition to provide UV blocking characteristics to the formed lens. Small amounts of dyes, such as Thermoplast Blue 684 and Thermoplast Red from BASF may be added to the lens forming composition to counteract yellowing. These classes of compounds have been described in greater detail in previous sections.

In an embodiment, a UV absorbing composition may be added to the lens forming composition. The UV absorbing composition preferably includes a photoinitiator and a UV absorber. Photoinitiators and UV absorbers have been described in greater detail in previous sections. Typically, the concentration of UV absorber in the lens forming composition required to achieve desirable UV blocking characteristics is in the range from about 0.1 to about 0.25 % by weight. For example, 2-(2H-benzotriazol-2-yl)-4-(1,1,3,3,-tetramethylbutyl)phenol may be added to the lens forming composition as a UV absorber at a concentration of about 0.17 %.

By mixing a photoinitiator with a UV absorbing compound the combined concentration of the photoinitiator and the UV absorber required to achieve the desired UV blocking characteristics in the formed lens may be lower than the concentration of UV absorber required if used alone. For example, 2-(2H-benzotriazol-2-yl)-4-(1,1,3,3,-tetramethylbutyl)phenol may be added to the lens forming composition as a UV absorber at a concentration of about 0.17 % to achieve the desired UV blocking characteristics for the formed lens. Alternatively, a UV absorbing composition may be formed by a combination of 2-(2H-benzotriazol-2-yl)-4-(1,1,3,3,-tetramethylbutyl)phenol with the photoinitiator 2-isopropyl-thioxanthone (ITX), commercially available from Aceto Chemical in Flushing, New York. To achieve similar UV blocking characteristics in the formed lens, significantly less of the UV absorbing composition may be added to the lens forming composition, compared to the amount of UV absorber used by itself. For example, 2-(2H-benzotriazol-2-yl)-4-(1,1,3,3,-tetramethylbutyl)phenol at a concentration of about 700 ppm, with respect to the lens forming composition, along with 150 ppm of the photoinitiator 2-isopropyl-thioxanthone (2-ITX) may be used to provide UV blocking characteristics. Thus, a significant reduction, (e.g., from 0.15 % down to less than about 1000 ppm), in the concentration of UV absorber may be achieved, without a reduction in the UV blocking ability of the subsequently formed lens. An advantage of lowering the amount of UV absorbing compounds present in the lens forming composition is that the solubility of the various components of the composition may be improved.

Tables 2-6 list some examples of mid-index lens forming compositions. The UV absorber is 2-(2H-benzotriazol-2-yl)-4-(1,1,3,3,-tetramethylbutyl)phenol.

Table 2

| Ingredient | Formula 1 | Formula 2 | Formula 3 | Formula 4 | Formula 5 | Formula 6 |
|---|---|---|---|---|---|---|
| Irgacure 819 | 694.2 ppm | 486 ppm | 480 ppm | 382 ppm | 375 ppm | 414 ppm |
| Irgacure 184 | | | | | | |
| CN 384 | 0.962 % | 0.674% | 0.757% | 0.62% | 0.61% | 0.66% |
| CN386 | 0.962 % | 0.674 % | 0.757 % | 0.62 % | 0.61 % | 0.66 % |
| | | | | | | |
| SR-348 | 97.98 % | 68.65 % | 98.2 % | 81.2 % | 79.6 % | 86.4 % |
| SR-368 | | | | | | |
| SR-480 | | 29.95 % | | | | |
| CD-540 | | | | | | |
| SR-399 | | | | | | |
| SR-239 | | | | | 2.0% | 2.08% |
| SR-506 | | | | | | |
| CR-73 | | | | 17.2% | 16.9 % | 10.0% |
| PRO-629 | | | | | | |
| | | | | | | |
| Tinuvin 770 | | | 290 ppm | | | |

Table 2 (continued)

| Ingredient | Formula 1 | Formula 2 | Formula 3 | Formula 4 | Formula 5 | Formula 6 |
|---|---|---|---|---|---|---|
| UV Absorber | | | 0.173% | | | |
| Themioplast Blue | 0.534 ppm | 0.374 ppm | 0.6 ppm | 0.5 ppm | 4.5 ppm | 4.58 ppm |
| Themioplast Red | 0.019 ppm | 0.0133 ppm | 0.015 ppm | 0.012 ppm | 0.58 ppm | 0.58 ppm |
| Mineral Oil | | | 136 ppm | | | 65 ppm |
| Photochromic Dye Mixture | | | | | 470 ppm | 507 ppm |

Table 3

| Ingredient | Formula 7 | Formula 8 | Formula 9 | Formula 10 | Formula 11 | Formula 12 |
|---|---|---|---|---|---|---|
| Irgacure 819 | 531.2 ppm | 462 ppm | 565.9 ppm | 226 ppm | 443 ppm | 294 ppm |
| Irgacure 184 | 18.7 ppm | | | 144 ppm | | |
| CN 384 | 0.77 % | 0.887 % | 0.78% | 0.40% | 0.61% | |
| CN386 | 0.77 % | 0.887 % | 0.78 % | 0.53 % | 0.61 % | |
| | | | | | | |
| SR-348 | 72.4 % | 70.36 % | 58.20 % | 41.5 % | 88.70 % | |
| SR-368 | 24.1 % | 23.87 % | 21.4 % | 7.0 % | | |
| SR-480 | | | | | | |
| CD-540 | | | 18.7% | 0.74% | | 97.76 % |
| SR-399 | | | | 46.8% | | |
| SR-239 | 1.86 % | 3.65% | 20.1 % | | | 2.00 % |
| SR-506 | | | | | 10.0 % | |
| CR-73 | | | 20.1 % | 2.9 % | | |
| PRO-629 | 0.05 % | | | | | |
| | | | | | | |
| Tinuvin 770 | | | | | | |
| UV Absorber | | | | | | |
| Thermoplast Blue | 0.567 ppm | 3.62 ppm | 0.70 ppm | 0.255 ppm | 0.6 ppm | 4.3 ppm |
| Thermoplast Red | 0.0147 ppm | 0.576 ppm | 0.014 ppm | 0.006 ppm | 0.028 ppm | 0.24 ppm |
| Photochromic Dye Mixture | | 450 ppm | | | | |

Table 4

| Ingredient | Formula 13 | Formula 14 | Formula 15 | Formula 16 | Formula 17 | Formula 18 |
|---|---|---|---|---|---|---|
| Irgacure 819 | 760 ppm | 620 ppm | 289 ppm | | 105 ppm | 343 ppm |
| Irgacure 184 | | | | | | |
| CN 384 | | 0.73 % | 0.34 % | | | 0.475 % |
| CN 386 | | 0.73 % | 0.34 % | 1.00 % | 0.70 % | 0.475 % |
| 2-ITX | | | | | 188 ppm | 141 ppm |
| | | | | | | |
| SR-348 | | | | 89.00% | 92.00 % | 98.90 % |

Table 4 (continued)

| Ingredient | Formula 13 | Formula 14 | Formula 15 | Formula 16 | Formula 17 | Formula 18 |
|---|---|---|---|---|---|---|
| SR-368 | | | | | | |
| SR-480 | | | | | | |
| CD-540 | 97.57 % | 96.20 % | 99.28 % | | 0.34 % | |
| SR-399 | | | | | | |
| SR-239 | 2.30 % | 2.30 % | 0.01% | | | |
| SR-506 | | | | | | |
| SR-444 | | | | | | |
| SR-454 | | | | 10.00 % | 6.9 % | |
| CR-73 | | | | | | |
| PRO-629 | | | | | | |
| | | | | | | |
| Tinuvin 770 | | | | | | |
| UV Absorber | | | | | | 785 ppm |
| Thermoplast Blue | 4.9 ppm | 5.1 ppm | 0.508 ppm | | 0.35 ppm | 0.69 ppm |
| Thermoplast Red | 0.276 ppm | 0.285 ppm | 0.022 ppm | | 0.002 ppm | 0.034 ppm |
| Dioctylphthalate | | | | | | 125 ppm |
| Butyl stearate | | | | | | |
| Photochromic Dye Mixture | 499 ppm | | | | | |

Table 5

| Ingredient | Formula 19 | Formula 20 | Formula 21 | Formula 22 | Formula 23 | Formula 24 |
|---|---|---|---|---|---|---|
| Irgacure 819 | 490 ppm | 635 ppm | 610 ppm | 735 ppm | 320 ppm | 600 ppm |
| Irgacure 184 | | | | | | |
| CN 384 | 0.680 % | 0.746 % | 0.705 % | 0.60% | | |
| CN 386 | 0.680 % | 0.746 % | 0.705 % | 0.60% | | |
| 2-ITX | | | | | | |
| | | | | | | |
| SR-348 | 69.30 % | | | | | 68.60 % |
| SR-368 | | | | | 74.0 % | 22.10 % |
| SR-480 | | | | | | |
| CD-540 | | 98.45% | 92.60 % | 98.50 % | 1.0 % | 1.97% |
| SR-399 | | | | | | |
| SR-239 | | 0.01 % | 3.86 % | 0.16 % | | |
| SR-506 | | | | 0.10% | | |
| SR-444 | 29.30 % | | | | | |
| SR-454 | | | | | 25.0 % | 7.40 % |
| CR-73 | | | | | | |
| PRO-629 | | 0.007 % | 2.06 % | | | |

Table 5 (continued)

| Ingredient | Formula 19 | Formula 20 | Formula 21 | Formula 22 | Formula 23 | Formula 24 |
|---|---|---|---|---|---|---|
| | | | | | | |
| Tinuvin 770 | | | | | | |
| UV Absorber | | | | | | |
| Thermoplast Blue | 0.37 ppm | 0.507 ppm | 3.07 ppm | 4.3 ppm | 0.15 ppm | 0.29 ppm |
| Thermoplast Red | 0.013 ppm | 0.0126 ppm | 0.336 ppm | 0.41 ppm | 0.006 ppm | 0.012 ppm |
| Dioctylphthalate | | | | | | |
| Butyl stearate | | | | | | |
| Photochromi c Dye Mixture | | | 442 ppm | 497 ppm | | |

Table 6

| Ingredient | Formula 25 | Formula 26 | Formula 27 | Formula 28 | Formula 29 | Formula 30 | Formula 31 |
|---|---|---|---|---|---|---|---|
| Irgacure 819 | 650 ppm | 464 ppm | 557 ppm | 448 ppm | 460 ppm | | |
| Irgacure 184 | | | | | | | 300 ppm |
| CN 384 | 0.650 % | 0.70 % | | | | | |
| CN 386 | 0.650 % | 0.70 % | | | | | |
| 2-ITX | | | | | | 600 ppm | 120 ppm |
| | | | | | | | |
| SR-348 | | 39.10 % | | | | | |
| SR-368 | | 13.00 % | | 19.60 % | 20.70 % | | |
| SR-480 | | | | | 10.70 % | | |
| CD-540 | 88.96 % | 41.90 % | 1.60 % | 1.30 % | | 99.94 % | 99.96% |
| SR-399 | | | | | | | |
| SR-239 | | | | | | | |
| SR-506 | | | 98.30 % | 79.00 % | 67.24 % | | |
| SR-444 | 9.70 % | 4.60 % | | | | | |
| SR-454 | | | | | | | |
| CR-73 | | | | | | | |
| PRO-629 | | | | | | | |
| | | | | | | | |
| Tinuvin 770 | | | | | | | |
| UV Absorber | | | | | | | |
| Thermoplast Blue | 0.566 ppm | 0.52 ppm | 0.24 ppm | 0.19 ppm | 0.467 ppm | | |
| Thermoplast Red | 0.02 ppm | 0.013 ppm | 0.01 ppm | 0.008 ppm | 0.024 ppm | | |
| Dioctylphthalate | | | | | | | |
| Butyl stearate | 75 ppm | 35 ppm | | | | | |

Table 6 (continued)

| Ingredient | Formula 25 | Formula 26 | Formula 27 | Formula 28 | Formula 29 | Formula 30 | Formula 31 |
|---|---|---|---|---|---|---|---|
| Photochromic Dye Mixture | | | | | | | |

In one embodiment, plastic lenses may be formed by disposing a mid-index lens forming composition into the mold cavity of a mold assembly and irradiating the mold assembly with activating light. Coating materials may be applied to the mold members prior to filling the mold cavity with the lens forming composition.

After filing the mold cavity of the mold assembly the mold assembly is preferably placed in the lens curing unit and subjected to activating light. Preferably, actinic light is used to irradiate the mold assembly. A clear polycarbonate plate may be placed between the mold assembly and the activating light source. The polycarbonate plate preferably isolates the mold assembly from the lamp chamber, thus preventing airflow from the lamp cooling fans from interacting with the mold assemblies. The activating light source may be configured to deliver from about 0.1 to about 10 milliwatts/cm2 to at least one non-casting face, preferably both non-casting faces, of the mold assembly. Depending on the components of the lens forming composition used the intensity of activating light used may be <1 milliwatt/$cm^2$. The intensity of incident light at the plane of the lens curing unit drawer is measured using an International Light IL-1400 radiometer equipped with an XRL140A detector head. This particular radiometer preferably has a peak detection wavelength at about 400 nm, with a detection range from about 310 nm to about 495 nm. The International Light IL-1400 radiometer and the XRL140A detector head are both commercially available International Light, Incorporated of Newburyport, Massachusetts.

After the mold assembly is placed within the lens curing unit, the mold assemblies are preferably irradiated with activating light continuously for 30 seconds to thirty minutes, more preferably from one minute to five minutes. Preferably, the mold assemblies irradiated in the absence of a cooling air stream. After irradiation, the mold assemblies were removed from the lens curing unit and the formed lens demolded. The lenses may be subjected to a post-cure treatment in the post-cure unit.

In general, it was found that the use of a photoinitiator (e.g., IRG-819 and IRG-184) in the lens forming composition produces lenses with better characteristics than lens formed using a co-initiator only. For example, formula 15, described in the Table 4, includes a monomer composition (a mixture of SR-348 and SR-454) and a co-initiator (CN-386). When this lens forming composition was exposed to activating light for 15 min. there was no significant reaction or gel formation. It is believed that the co-initiator requires an initiating species in order to catalyze curing of the monomer composition. Typically this initiating species is produced from the reaction of the photoinitiator with activating light.

A variety of photoinitiators and photoinitiators combined with co-initiators may be used to initiate polymerization of the monomer composition. One initiator system which may be used includes photoinitiators IRG-819 and 2-ITX and a co-initiator, see Formulas 17-18. Such a system is highly efficient at initiating polymerization reactions. The efficiency of a polymerization catalyst is a measurement of the amount of photoinitiator required to initiate a polymerization reaction. A relatively small amount of an efficient photoinitiator may be required to catalyze a polymerization reaction, whereas a greater amount of a less efficient photoinitiator may be required to catalyze the polymerization reaction. The IRG-819/2-ITX/co-initiator system may be used to cure lenses forming compositions which include a UV absorbing compound. This initiator system may also be used to form colored lenses.

An initiator system that is less efficient than the IRG-819/2-ITX/co-initiator system includes a mixture of the photoinitiators IRG-819 and 2-ITX, see Formula 31. This system is less efficient at initiating polymerization of lens forming compositions than the IRG-819/2-ITX/co-initiator system. The IRG-819/2-ITX system may be used to cure very reactive monomer compositions. An initiator system having a similar efficiency to the IRG-81912-ITX system includes a mixture of IRG-819 and co-initiator, see Formulas 1-6, 8-9, 11, 14-15, 19-22, and 25-26. The IRG-819/co-initiator system may be used to cure clear lenses which do not include a UV blocking compound and photochromic lens forming compositions.

Another initiator system which may be used includes the photoinitiator 2-ITX and a co-initiator. This initiator system is much less efficient at initiating polymerization reactions than the IRG-819/co-initiator system. The 2-ITX/co-initiator system is preferably used for curing monomer compositions which include highly reactive monomers.

The use of the above described mid-index lens forming compositions may minimize or eliminate a number of problems associated with activating light curing of lenses. One problem typical of curing eyeglass lenses with activating light is pre-release. Pre-release may be caused by a number of factors. If the adhesion between the mold faces and the shrinking lens forming composition is not sufficient, pre-release may occur. The propensity of a lens forming composition to adhere to the mold face, in combination with its shrinkage, determine how the process variables are controlled to avoid pre-release. Adhesion is affected by such factors as geometry of the mold face (e.g., high-add flat-top bifocals tend to release because of the sharp change in cavity height at the segment line), the temperature of the mold assembly, and the characteristics of the in-mold coating material. The process variables which are typically varied to control pre-release include the application of cooling fluid to remove exothermic heat, controlling the rate of heat generation by manipulating the intensities and timing of the activating radiation, providing differential light distribution across the thin or thick sections of the mold cavity manipulating the thickness of the molds, and providing in-mold coatings which enhance adhesion. An advantage of the above described mid-index lens forming compositions is that the composition appears to have enhanced adhesion characteristics. This may allow acceptable lenses to be produced over a greater variety of curing conditions. Another advantage is that higher diopter lenses may be produced at relatively low pre-release rates, broadening the achievable prescription range.

Another advantage of the above described mid-index lens forming compositions is that they tend to minimize problems associated with dripping during low intensity curing of lenses (e.g., in the 1 to 6 milliwatt range). Typically, during the irradiation of the lens forming composition with activating light, small amounts of monomer may be squeezed out of the cavity and run onto the non-casting faces of the molds. Alternatively, during filling of the mold assembly with the lens forming composition, a portion of the lens forming composition may drip onto the non-casting faces of the mold assembly. This "dripping" onto the non-casting faces of the mold assembly tends to cause the activating light to focus more strongly in the regions of the cavity located underneath the drippings. This focusing of the activating light may affect the rate of curing. If the rate of curing underneath the drippings varies significantly from the rate of curing throughout the rest of the lens forming composition, optical distortions may be created in the regions below the drippings.

It is believed that differences in the rate of gelation between the center and the edge regions of the lens forming composition may cause dripping to occur. During the curing of a lens forming composition, the material within the mold cavity tends to swell slightly during the gel phase of the curing process. If there is enough residual monomer around the gasket lip, this liquid will tend to be forced out of the cavity and onto the non-casting faces of the mold. This problem tends to be minimized when the lens forming composition undergoes fast, uniform gelation. Typically, a fast uniform gelation of the lens forming composition may be achieved by manipulating the timing, intensities, and distribution of the activating radiation. The above described mid-index lens forming compositions, however, tend to gel quickly and uniformly under a variety of curing conditions, thus minimizing the problems caused by dripping.

Another advantage of the above described mid-index lens forming compositions is that the compositions tend to undergo uniform curing under a variety of curing conditions. This uniform curing tends to minimize optical aberrations within the formed lens. This is especially evident during the formation of high plus power flattop lenses which tend to exhibit optical distortions after the lens forming composition is cured. It is believed that the activating radiation may be reflected off of the segment line and create local differences in the rate of gelation in the regions of the lens forming composition that the reflected light reaches. The above described mid-index lens forming compositions tend to show less optical distortions caused by variations of the intensity of activating radiation throughout the composition.

Other advantages include drier edges and increased rigidity of the formed lens. An advantage of drier edges is that the contamination of the optical faces of the lens by uncured or partially cured lens forming composition is minimized.

In an embodiment, a lens forming composition may be cured into a variety of different lenses. The lens forming composition includes an aromatic containing polyether polyethylenic functional monomer, a co-initiator composition configured to activate curing of the monomer, and a photoinitiator configured to activate the co-initiator composition in response to being exposed to activating light. The lens forming composition may include other components such as ultraviolet light absorbers and photochromic compounds. Lenses which may be cured using the lens forming composition include, but are not limited to, spheric single vision, aspheric single vision lenses, flattop bifocal lenses, and asymmetrical progressive lenses.

One lens forming composition, includes a mixture of the following monomers.

| | |
|---|---|
| 98.25 % | Ethoxylated$_{(4)}$bisphenol A dimethacrylate (CD-540) |
| 0.75 % | Difunctional reactive amine coinitiator (CN-384) |
| 0.75 % | Monofunctional reactive amine coinitiator (CN-386) |
| 0.15 % | Phenyl bis(2,4,6-trimethylbenzoyl) phosphine oxide (Irgacure-819) |
| 0.10 % | 2-(2H-Benzotriazol-2-yl)-4-(1,1,3,3-tetramethylbutyl)phenol |
| 0.87 ppm | Thermoplast Blue 684 |
| 0.05 ppm | Thermoplast Red LB 454 |

Another lens forming composition includes a mixture of the following monomers. The presence of photochromic compounds in this composition allows the composition to be used to form photochromic lenses.

| | |
|---|---|
| 97.09 % | Ethoxylated(4)bisphenol A dimethacrylate (CD-540) |
| 1.4% | Difunctional reactive amine coinitiator (CN-384) |
| 1.4% | Monofunctional reactive amine coinitiator (CN-386) |
| 0.09 % | Phenyl bis(2,4,6-trimethylbenzoyl) phosphine oxide (Irgacure-819) |
| 0.9 ppm | Thermoplast Red LB 454 |
| 50 ppm | Variacrol Blue D |
| 73.5 ppm | Variacrol Yellow |
| 145 ppm | Berry Red |
| 29 ppm | Palatinate Purple |
| 55.5 ppm | Corn Yellow |
| 62 ppm | Sea Green |
| 85 ppm | Plum Red |

A lens forming composition which includes an aromatic containing polyether polyethylenic functional monomer, a co-initiator composition and a photoinitiator may be used to form a variety of prescription eyeglass lenses, including eyeglass lenses which have a sphere power ranging from about +4.0 diopter to about -6.0 diopter. The lenses formed from this lens forming composition are substantially free of distortions, cracks, patterns and striations, and that have negligible yellowing, in less than thirty minutes by exposing the lens forming composition to activating light and heat. An advantage of the lens forming composition is that it exhibits increased adhesion to the molds. This may reduce the incidence of premature release of the formed lens from the molds. Additionally, the use of adhesion promoting agents, typically applied to the molds to prevent premature release, may no longer be necessary.

The increased adhesion of the lens forming composition to the molds allows curing of the lens forming composition at higher temperatures. Typically, control of the temperature of the lens forming composition may be necessary to prevent premature release of the lens from the molds. Premature release may occur when the lens forming composition shrinks as it is cured. Shrinkage typically occurs when the lens forming composition is rapidly heated during curing. Lens forming compositions which include an aromatic containing polyether polyethylenic functional monomer, a co-initiator composition and a photoinitiator may reduce the incidence of premature release. The increased adhesion of this lens forming composition may allow higher curing temperatures to be used without increasing the incidence of premature release. It is also believed that this lens forming composition may exhibit less shrinkage during curing which may further reduce the chance of premature release.

An advantage of curing at higher temperatures is that an eyeglass lens having a high crosslink density may be formed. The crosslink density of an eyeglass lens is typically related to the curing temperature. Curing a lens forming composition at a relatively low temperature leads to a lower crosslink density than the crosslink density of a lens cured at a higher temperature. Lenses which have a higher crosslink density generally absorb tinting dyes substantially evenly without blotching or streaking. Lenses which have a high crosslink density also may exhibit reduced flexibility.

METHODS OF FORMING PLASTIC LENSES

Plastic lenses may be formed by disposing a lens forming composition into the mold cavity of a mold assembly and irradiating the mold assembly with activating light. Coating materials may be applied to the mold members prior to filling the mold cavity with the lens forming composition. The lens may be treated in a post-cure unit after the lens-curing process is completed.

The operation of the above described system to provide plastic lenses involves a number of operations. These operations are preferably coordinated by the controller 50, which has been described above. After powering the system, an operator is preferably signaled by the controller to enter the prescription of the lens, the type of lens, and the type of coating materials for the lens. Based on these inputted values the controller will preferably indicate to the operator which molds and gaskets will be required to form the particular lens.

The formation of lenses involves: 1) Preparing the mold assembly; 2) Filling the mold assembly with the lens forming composition; 3) Curing the lens; 4) Post-curing the lens; and 5) Annealing the lens. Optionally, the lens may be coated before use. The formation of lenses may be accomplished using the plastic lens curing apparatus described above.

The preparation of a mold assembly includes selecting the appropriate front and back molds for a desired prescription and lens type, cleaning the molds, and assembling the molds to form the mold assembly. The prescription of the lens determines which front mold, back mold, and gasket are used to prepare the mold assembly. In one embodiment, a chart which includes all of the possible lens prescriptions may be used to allow a user to determine the

appropriate molds and gaskets. Such a chart may include thousands of entries, making the determination of the appropriate molds and gaskets somewhat time consuming.

In an embodiment, the controller 50 of the plastic lens curing apparatus 10 (see Fig. 1) will display the appropriate front mold, back mold, and gasket identification markings when a prescription is submitted to the controller. The controller will prompt the user to enter the 1) the monomer type; 2) the lens type; 3) spherical power; 4) cylindrical power; 5) axis; 6) add power, and 7) the lens location (i.e., right or left lens). Once this information is entered the computer will determine the correct front mold, back mold and gasket to be used. The controller may also allow a user to save and recall prescription data.

Fig. 17 shows an embodiment of a front panel for the controller 50. The controller includes an output device 610 and at least one input device. A variety of input devices may be used. Some input devices include pressure sensitive devices (e.g., buttons), movable data entry devices (e.g., rotatable knobs, a mouse, a trackball, or moving switches), voice data entry devices (e.g., a microphone), light pens, or a computer coupled to the controller. Preferably the input devices include buttons 630, 640, 650 and 660 and a selection knob 620. The display panel preferably displays the controller data requests and responses. The output device may be a cathode ray tube, an LCD panel, or a plasma display screen.

When initially powered, the controller will preferably display a main menu, such as the menu depicted in Fig. 17. If the main menu is not displayed, a user may access the main menu by pressing button 650, which may be labeled Main Menu. In response to activating the Main Menu button 650, the controller will cause the main menu screen to be displayed. As depicted in Fig. 17, a display screen offers a number of initial options on the opening menu. The options may include 1) NEW Rx; 2) EDIT Rx; and 3) VIEW Rx. The main menu may also offer other options which allow the operator to access machine status information and instrument setup menus. The scrolling buttons 630 preferably allow the user to navigate through the options by moving a cursor 612 which appears on the display screen to the appropriate selection. Selection knob 620 is preferably configured to be rotatable to allow selection of options on the display screen. Knob 620 is also configured to allow entry of these items. In one embodiment, selection knob 620 may be depressed to allow data entry. That is, when the appropriate selection is made, the knob may be pushed down to enter the selected data. In the main menu, when the cursor 612 is moved to the appropriate selection, the selection may be made by depressing the selection knob 620.

Selection of the NEW Rx menu item will cause the display screen to change to a prescription input menu, depicted in Fig. 18. The prescription input menu will preferably allow the user to enter data pertaining to a new lens type. The default starting position will be the lens monomer selection box. Once the area is highlighted, the selection knob 620 is rotated to make a choice among the predetermined selections. When the proper selection is displayed, the selection knob may be pushed down to enter the selection. Entry of the selection may also cause the cursor to move to the next item on the list. Alternatively, a user may select the next item to be entered using the scrolling arrows 630.

Each of the menu items allows entry of a portion of the lens prescription. The lens prescription information includes 1) the monomer type; 2) the lens type; 3) lens location (i.e., left lens or right lens); 4) spherical power; 5) cylindrical power; 6) axis; and 7) add power. The monomer selection may include choices for either clear or photochromic lenses. The lens type item may allow selection between spheric single vision, aspheric single vision lenses, flattop bifocal lenses, and asymmetrical progressive lenses. The sphere item allows the sphere power of the lens to be entered. The cylinder item allows the cylinder power to be entered. The axis item allows the cylinder axis to be entered. The add item allows the add power for multifocal prescriptions to be added. Since the sphere power, cylinder power, cylinder axis, and add power may differ for each eye, and since the molds and gaskets may be specific for the location of the lens (i.e., right lens or left lens), the controller preferably allows separate entries for right and left lenses. If an error is made in any of the entry fields, the scrolling arrows 630 preferably allow the user to move the cursor to the incorrect entry for correction.

After the data relating to the prescription has been added, the controller may prompt the user to enter a job number to save the prescription type. This preferably allows the user to recall a prescription type without having to renter the data. The job number may also be used by the controller to control the curing conditions for the lens. The curing conditions typically vary depending on the type and prescription of the lens. By allowing the controller access to the prescription and type of lens being formed, the controller may automatically set up the curing conditions without further input from the user.

After the job is saved, the display screen will preferably display information which allows the user to select the appropriate front mold, back mold and gasket for preparing the lens, as depicted in Fig. 19. This information is preferably generated by the use of a stored database which correlates the inputted data to the appropriate lenses and gasket. The prescription information is also summarized to allow the user to check that the prescription has been entered correctly. The mold and gasket information may be printed out for the user. A printer may be incorporated into the controller to allow print out of this data. Alternatively, a communication port may be incorporated into the controller to allow the data to be transferred to a printer or personal computer. Each of the molds and gaskets has a predetermined

identification marking. Preferably, the identification markings are alphanumeric sequences. The identification markings for the molds and gasket preferably correspond to alphanumeric sequences for a library of mold members. The user, having obtained the mold and gasket identification markings, may then go to the library and select the appropriate molds and gaskets.

The controller is preferably configured to run a computer software program which, upon input of the eyeglass prescription, will supply the identification markings of the appropriate front mold, back mold and gasket. The computer program includes a plurality of instructions configured to allow the controller to collect the prescription information, determine the appropriate front mold, back mold, and gasket required to a form a lens having the inputted prescription, and display the appropriate identification markings for the front mold, back mold and gasket. In one embodiment, the computer program may include an information database. The information database may include a multidimensional array of records. Each records may include data fields corresponding to identification markings for the front mold, the back mold, and the gasket. When the prescription data is entered, the computer program is configured to look up the record corresponding to the entered prescription. The information from this record may be transmitted to the user, allowing the user to select the appropriate molds and gasket.

In one embodiment the information database may be a three dimensional array of records. An example of a portion of a three dimensional array of records is depicted in Table 9. The three dimensional array includes array variables of sphere, cylinder, and add. A record of the three dimensional array includes a list of identification markings. Preferably this list includes identification markings for a front mold (for either a left or right lens), a back mold and a gasket. When a prescription is entered the program includes instructions which take the cylinder, sphere and add information and look up the record which is associated with that information. The program obtains from the record the desired information and transmits the information to the user. For example, if a prescription for left lens having a sphere power of +1.00, a cylinder power of -0.75 and an add power of 2.75 is entered, the front mold identification marking will be FT-34, the back mold identification marking will be TB-101, and the gasket identification marking will be G25. These values will be transmitted to the user via an output device. The output device may include a display screen or a printer. It should be understood that the examples shown in Table 9 represent a small portion of the entire database. The sphere power may range from +4.00 to -4.00 in 0.25 diopter increments, the cylinder power may range from 0.00 diopters to -2.00 diopters in 0.25 diopter increments, and the add power may range from +1.00 to +3.00 in 0.25 diopter increments.

Table 9

| ARRAY VARIABLES | | | IDENTIFICATION MARKINGS | | | |
|---|---|---|---|---|---|---|
| Sphere | Cylinder | Add | **Front (Right)** | **Front (Left)** | **Back** | **Gasket** |
| +1.00 | -0.75 | +1.25 | FT-21 | FT-22 | TB-101 | G25 |
| +1.00 | -0.75 | +1.50 | FT-23 | FT-24 | TB-101 | G25 |
| +1.00 | -0.75 | +1.75 | FT-25 | FT-26 | TB-101 | G25 |
| +1.00 | -0.75 | +2.00 | FT-27 | FT-28 | TB-101 | G25 |
| +1.00 | -0.75 | +2.25 | FT-29 | FT-30 | TB-101 | G25 |
| +1.00 | -0.75 | +2.50 | FT-31 | FT-32 | TB-101 | G25 |
| +1.00 | -0.75 | +2.75 | FT-33 | FT-34 | TB-101 | G25 |
| +1.00 | -0.75 | +3.00 | FT-35 | FT-36 | TB-101 | G25 |
| +0.75 | -0.75 | +1.00 | FT-19 | FT-20 | TB-102 | G25 |
| +0.75 | -0.75 | +1.25 | FT-21 | FT-22 | TB-102 | G25 |
| +0.75 | -0.75 | +1.50 | FT-23 | FT-24 | TB-102 | G25 |
| +0.75 | -0.75 | +1.75 | FT-25 | FT-26 | TB-102 | G25 |
| +0.75 | -0.75 | +2.00 | FT-27 | FT-28 | TB-102 | G25 |
| +0.75 | -0.75 | +2.25 | FT-29 | FT-30 | TB-102 | G25 |
| +0.75 | -0.75 | +2.50 | FT-31 | FT-32 | TB-102 | G25 |
| +0.75 | -0.75 | +2.75 | FT-33 | FT-34 | TB-102 | G25 |

Table 9 (continued)

| ARRAY VARIABLES | | | IDENTIFICATION MARKINGS | | | |
|---|---|---|---|---|---|---|
| Sphere | Cylinder | Add | **Front (Right)** | **Front (Left)** | **Back** | **Gasket** |
| +0.75 | -0.75 | +3.00 | FT-35 | FT-36 | TB-102 | G25 |
| +0.50 | -0.75 | +1.00 | FT-19 | FT-20 | TB-103 | G25 |
| +0.50 | -0.75 | +1.25 | FT-21 | FT-22 | TB-103 | G25 |

A second information database may include information related to curing the lens forming composition based on the prescription variables. Each record may include information related to curing clear lenses (i.e., non-photochromic lenses) and photochromic lenses. The curing information may include filter information, initial curing dose information, postcure time and conditions, and anneal time. An example of a portion of this database is depicted in Table 10. Curing conditions typically depend on the sphere power of a lens, the type of lens being formed (photochromic or non-photochromic), and whether the lens will be tinted or not. Curing information includes type of filter being used, initial dose conditions, postcure time, and anneal time. A filter with a 50 mm aperture (denoted as "50 mm") or a clear plate filter (denoted as "clear") may be used. Initial dose is typically in seconds, with the irradiation pattern (e.g., top and bottom, bottom only) being also designated. The postcure time represents the amount of time the mold assembly is treated with activating light and heat in the postcure unit. The anneal time represents the amount of time the demolded lens is treated with heat after the lens is removed from the mold assembly. While this second database is depicted as a separate database, the database may be incorporated into the mold and gasket database by adding the lens curing information to each of the appropriate records.

The controller may also be configured to warn the user if the lens power is beyond the range of the system or if their mold package does not contain the necessary molds to make the desired lens. In these cases, the user may be asked to check the prescription information to ensure that the proper prescription was entered.

The controller may also be used to control the operation of the various components of the plastic lens curing apparatus. A series of input devices 640 may allow the operation of the various components of the system. The input devices may be configured to cause the commencement of the lens coating process (640a), the cure process (640b), the postcure process (640c), and the anneal process (640d).

In an embodiment, activating any of the input devices 640 may cause a screen to appear requesting a job number corresponding to the type of lenses being formed. The last job used may appear as a default entry. The user may change the displayed job number by cycling through the saved jobs. When the proper job is displayed the user may enter the job by depressing the selection knob.

Table 10

| **LENS INFORMATION** | | | **CURING INFORMATION** | | | |
|---|---|---|---|---|---|---|
| **Sphere** | **Lens Type** | **Tinted** | **Filter** | **Initial Dose** | **Postcure Time** | **Anneal Time** |
| +2.25 | Clear | No | 50 mm | 90 Sec. Top and Bottom | 13 Min. | 7 Min. |
| +2.25 | Clear | Yes | 50 mm | 90 Sec. Top and Bottom | 15Min. | 7 Min. |
| +2.25 | Photochromic | No | 50 mm | 90 Sec. Top and Bottom | 13 Min. | 7 Min. |
| +2.00 | Clear | No | Clear | 7 Sec. Bottom | 13 Min. | 7 Min. |
| +2.00 | Clear | Yes | Clear | 7 Sec. Bottom | 15 Min. | 7 Min. |
| +2.00 | Photochromic | No | Clear | 15 Sec. Bottom | 13 Min. | 7 Min. |

After the job has been entered, the system will be ready to commence the selected function. Activating the same input device again (e.g., depressing the button) will cause the system to commence the selected function. For example, pressing the cure button a second time may cause a preprogrammed cure cycle to begin. After the selected function is complete the display screen may display a prompt informing the user that the action is finished.

The controller may be configured to prevent the user from using curing cycles other than those that have been prescribed by the programmer of the controller. After a prescription is entered, the job enters the work stream where the controller allows only the prescribed curing conditions. Timers (set by the algorithm picked at prescription input)

may run constantly during the lens cycle to monitor doses and deliver both audible and visible prompts to the user of at times of transition in the process. The system tracks job completion and status and gives visual representation of job status in the view job screen. Boxes at the bottom of the screen are checked as the necessary steps are competed. In sensitive parts of the lens cycle, no deviation from the established method is allowed. Operator discretion is allowed when the process is not time critical. The software warns the user during procedures that will interrupt jobs during their execution, erase jobs that are not finished, rerun jobs that are not finished, etc.

The system may be configured to prevent a new cure cycle from being started until the previous job's cure is finished. This "gatekeeper" function ensures post cure chamber availability during time sensitive transitions. When the cure stage is finished, both audible and visual prompts instruct the user to place the cavities in the post cure area.

The main menu may also include selections allowing a saved job to be edited. Returning to the main menu screen, depicted in Fig. 17, selecting the edit menu item will cause an interactive screen to be displayed similar to the input screen. This will allow a user to change the prescription of a preexisting job. The view menu item will allow a user to view the prescription information and mold/gasket selection information from an existing job.

Once the desired mold and gasket information has been obtained, the proper molds and gasket are selected from a collection of molds and gaskets. The molds may be placed into the gasket to create a mold assembly. Prior to placing the molds in the gasket, the molds are preferably cleaned. The inner surface (i.e., casting surface) of the mold members may be cleaned on a spin coating unit 20 by spraying the mold members with a cleaning solution while spinning the mold members. Examples of cleaning solutions include methanol, ethanol, isopropyl alcohol, acetone, methyl ethyl ketone, or a water based detergent cleaner. Preferably, a cleaning solution which includes isopropyl alcohol is used to clean the mold members. As the mold member is contacted with the cleaning solution, dust and dirt may be removed and transferred into the underlying dish 115 of the curing unit. After a sufficient amount of cleaning solution has been applied the mold members may be dried by continued spinning without the application of cleaning solution.

In an embodiment, the inner surface, i.e., the casting face, of the front mold member may be coated with one or more hardcoat layers before the lens forming composition is placed within the mold cavity. Preferably, two hardcoat layers are used so that any imperfections, such as pin holes in the first hardcoat layer, are covered by the second hardcoat layer. The resulting double hardcoat layer is preferably scratch resistant and protects the subsequently formed eyeglass lens to which the double hardcoat layer adheres. The hardcoat layers are preferably applied using a spin coating unit 20. The mold member is preferably placed in the spin coating unit and the coating material applied to the mold while spinning at high speeds (e.g., between about 900 to 1000 RPM). After a sufficient amount of coating material has been applied, the coating material may be cured by the activating light source disposed in the cover. The cover is preferably closed and activating light is preferably applied to the mold member while the mold member is spinning at relatively low speeds (e.g., between about 150 to 250 RPM). Preferably control of the spinning and the application of activating light is performed by controller 50. Controller 50 is preferably configured to prompt the operator to place the mold members on the coating unit, apply the coating material to the mold member, and close the cover to initiate curing of the coating material.

In an embodiment, the eyeglass lens that is formed may be coated with a hydrophobic layer, e.g. a hardcoat layer. The hydrophobic layer preferably extends the life of the photochromic pigments near the surfaces of the lens by preventing water and oxygen molecules from degrading the photochromic pigments.

In a preferred embodiment, both mold members may be coated with a cured adhesion-promoting composition prior to placing the lens forming composition into the mold cavity. Providing the mold members with such an adhesion-promoting composition is preferred to increase the adhesion between the casting surface of the mold and the lens forming composition. The adhesion-promoting composition thus reduces the possibility of premature release of the lens from the mold. Further, it is believed that such a coating also provides an oxygen and moisture barrier on the lens which serves to protect the photochromic pigments near the surface of the lens from oxygen and moisture degradation. Yet further, the coating provides abrasion resistance, chemical resistance, and improved cosmetics to the finished lens.

In an embodiment, the casting face of the back mold member may be coated with a material that is capable of being tinted with dye prior to filling the mold cavity with the lens forming composition. This tintable coat preferably adheres to the lens forming composition so that dyes may later be added to the resulting eyeglass lens for tinting the lens. The tintable coat may be applied using the spin coating unit as described above.

The clean molds are placed on the gasket to form a mold assembly. The front mold is preferably placed on the gasket first. For single vision prescriptions, the front mold does not have to be placed in any particular alignment. For flat-top bifocal or progressive front molds, the molds are preferably aligned with alignment marks positioned on the gasket. Once the front mold has been placed into the gasket, the back mold is placed onto the gasket. If the prescription calls for cylinder power, the back mold must be aligned with respect to the front mold. If the prescription is spherical (e.g., the lens has no cylinder power), the back mold may be placed into the gasket without any special alignment. Once assembled the mold assembly will be ready for filling.

The controller may prompt the user to obtain the appropriate lens forming composition. In one embodiment, the controller will inform the user of which chemicals and the amounts of each chemical that is required to prepare the

lens forming composition. Alternatively, the lens forming compositions may be preformed. In this case the controller may indicate to the operator which of the preformed lens forming compositions should be used.

In an embodiment, dyes may be added to the lens forming composition. It is believed that certain dyes may be used to attack and encapsulate ambient oxygen so that the oxygen may be inhibited from reacting with free radicals formed during the curing process. Also, dyes may be added to the composition to alter the color of an unactivated photochromic lens. For instance, a yellow color that sometimes results after a lens is formed may be "hidden" if a blue-red or blue-pink dye is present in the lens forming composition. The unactivated color of a photochromic lens may also be adjusted by the addition of non-photochromic pigments to the lens forming composition.

In a preferred technique for filling the lens molding cavity 382, the annular gasket 380 is placed on a concave or front mold member 392 and a convex or back mold member 390 is moved into place. The annular gasket 380 is preferably pulled away from the edge of the back mold member 390 at the uppermost point and a lens forming composition is preferably injected into the lens molding cavity 382 until a small amount of the lens forming composition is forced out around the edge. The excess is then removed, preferably, by vacuum. Excess liquid that is not removed could spill over the face of the back mold member 390 and cause optical distortion in the finished lens.

The lens forming composition is typically stored at temperatures below about 38°C (100°F). At these temperatures, however, the lens forming composition may be relatively viscous. The viscosity of the solution may make it difficult to fill a mold cavity without creating bubbles within the lens forming composition. The presence of bubbles in the lens forming composition may cause defects in the cured eyeglass lens. To reduce the viscosity of the solution, and therefore reduce the incidence of air bubbles during filling of the mold cavity, the lens forming composition may be heated prior to filling the mold cavity. In an embodiment, the lens forming composition may be heated to a temperature of about 25°C about (70 °F) to about 104°C (220 °F), preferably from about 54°C (130 °F) to about 77°C (170 °F) prior to filing the mold cavity.. Preferably, the lens forming composition is heated to a temperature of about 66°C (150 °F) prior to filling the mold cavity.

The lens forming composition may be heated by using an electric heater, an infrared heating system, a hot air system, a hot water system, or a microwave heating system. Preferably, the lens forming composition is heated in a monomer heating system, such as depicted in Figs. 20 and 21. Fig. 20 depicts an isometric view of the monomer heating system and Fig. 21 depicts a side view of the monomer heating system depicted in Fig. 20. The monomer heating system includes a body 1500 configured to hold the lens forming composition and a valve 1520 for transferring the heated lens forming composition from the body to a mold assembly. The monomer heating system may also include a mold assembly support 1540 for holding a mold assembly 1550 proximate the valve. The monomer heating system may also include an opening for receiving a container 1560 that holds a monomer composition.

Fig. 22 depicts a cross sectional view of the monomer heating system. The body includes a monomer 1502 and top 1504. The top of the body 1504 may include an opening 1506 sized to allow a fluid container 1560 to be inserted within the opening. The opening may be sized such that the bottle rests at an angle when placed in the opening, as depicted in Fig. 22. In some embodiments, the angle of the bottle may be between about 5 and about 45 degrees. In one embodiment, the opening is sized to receive a cap 1562 of a fluid container 1560. The cap 1562 and the opening 1506 may be sized to allow the cap to be easily inserted through the opening. If all of the fluid in the fluid container 1562 will fit in the body 1500 of the monomer heating system, the cap 1562 may be removed and the bottle placed in the opening. The fluid container 1560 may be left until all of the fluid has been emptied into the body 1500. The fluid container 1560 may be removed or left in the opening after the monomer has emptied into the body 1500.

In another embodiment, the fluid container 1560 may include a self sealing cap 1562 coupled to the fluid container body 1569. A cross sectional view of the fluid container 1560 with a self sealing cap is depicted in Fig. 23. The self sealing cap 1562 may be configured to fit within the opening 1506 in the body. The self senling cap 1562 may be couplable to the fluid container body 1569 via a threaded fit (e.g., screwed onto the fluid container) or, alternatively, may be fastened to the fluid container body using a suitable adhesive. In another embodiment, the cap 1562 may be fastened to the fluid container body by both a threaded fit and the use of a suitable adhesive.

The cap 1562 includes, in one embodiment, a fluid control member 1564 and an elastic member 1566. The fluid control member 1564 may have a size and shape to substantially fit against an inner surface of the top of cap 1562 such that the fluid control member inhibits the passage of fluid out of the fluid container. The elastic member 1566 may be coupled to the fluid control member 1564 such that the elastic member exerts a force on the fluid control member such that the fluid control member is forced against the top inner surface of the cap. In one embodiment, the elastic member may be a spring while the fluid control member may be a substantially spherical object. In a normal resting position, the elastic member 1566 exerts a force against the fluid control member 1564, forcing it against the top inner surface 1568 of the cap. The top of the cap is sized to inhibit the passage of the spherical object 1564 through the top 1568 of the cap. Thus, when not is use, the fluid control member 1564 is forced against the top 1568 of the cap 1562, forming a seal that inhibits the flow of a fluid through the cap.

When the monomer heating station is to be filled, the fluid container 1560 may be inserted into opening 1506 of the body 1500. If a self sealing cap is used, as depicted in Fig. 23, the body may be configured to force the fluid

control member away from the top of the fluid container. As the fluid control member is moved away from the top of the cap, the fluid will flow around the fluid control member and out of the fluid container. In one embodiment, the body 1500 may include a projection 1508 (see Fig. 23) that extends from the bottom 1502 of the body and toward the opening. When the fluid container is inserted into the opening, the projection may hit the fluid control member forcing the fluid control member away from the top. When the bottle is removed, the projection will move away from the fluid control member and the fluid control member may be pushed back to its resting position, thus inhibiting the further flow of fluid from the fluid container.

A heating system 1510 is preferably coupled to the body. The heating system 1510 is preferably configured to heat the lens forming composition to a temperature of between about 27°C (80 °F) to about 104°C (220 °F). Preferably a resistive heater is used to heat the lens forming composition. Other heating systems such as hot air system, hot water systems, and infrared heating systems may also be used. In one embodiment, the heating system may include a silicon pad heater. A silicon pad heater includes one or more of resistive heating elements embedded within a silicon rubber material.

The heating system is preferably disposed within the body, as depicted in Fig. 22. In an embodiment, the body may be divided into a main chamber 1512 and a heating system chamber 1514. The lens forming composition may be disposed within the main chamber 1514, while the heating system 1510 is preferably disposed within the heating system chamber 1512. The heating system chamber 1512 preferably isolates the heating system 1510 from the main chamber 1512 such that the lens forming composition is inhibited from contacting the heating system. Typically, the heating system 1510 may attain temperatures significantly higher than desired. If the heating system 1510 were to come into contact with the lens forming composition, the higher temperature of the heating system may cause the contacted lens forming composition to become partially polymerized. By isolating the heating system 1510 from the lens forming composition such partial polymerization may be avoided. To further prevent partial polymerization, the heating system is preferably insulated from the bottom surface of the main chamber. An insulating material may be placed between the heating system and the bottom of the main chamber. Alternatively, an air gap may be formed between the heating system and the bottom of the main chamber to prevent overheating of the bottom of the main chamber.

A thermostat 1530 may be placed within the chamber, in contact with either the lens forming composition and/or the heating system chamber. In another embodiment, the thermostat may be placed in the heating system chamber between the main chamber and the heating element. When positioned in this manner, the thermostat may be more response to changes in the temperature of the monomer. The thermostat 1530 preferably monitors the temperature of the lens forming composition. In an embodiment, the thermostat may be a bi-metal immersion temperature switch. Such thermostats may be obtained from Nason, West Union, South Carolina. The temperature switch may be configured for a specific temperature by the manufacturer. For example, the optimal monomer composition may be about 66°C (150 °F). The temperature switch may be preset by the manufacturer for about 66°C (150 °F). When the monomer solution is below 66°C (150 °F), the switch may be in an "on" state, which causes the heating system to continue operating. Once the temperature of the monomer solution reaches about 66°C (150 °F), the temperature switch may change to an "off" state. In the off state the heating system may be switched off. As the temperature of the monomer solution cools to below 66°C (150 °F), the switch may cause the heating system to turn back on.

Alternatively, a controller 1570 may be coupled to a thermocouple 1530 and the heating system 1510. The thermocouple 1530 may provide a signal to the controller that indicates a temperature determined by the thermocouple. The thermocouple may be positioned within an aluminum block disposed within the main chamber and adjacent to the heating system chamber. The temperature detected by the thermocouple may be a combination of the temperature of the heating system chamber wall and the lens forming composition. The controller 1540 may monitor the temperature of the lens forming composition via the signals produced by thermocouple 1530 and controls the heating system 1510 to keep the lens forming composition at a predetermined temperature. For example, as the lens forming composition becomes cooler the controller may activate the heating system 1510 to heat the lens forming composition back to the desired temperature. The controller 1540 may be a computer, programmable logic controller, or any of other known controller systems known in the art. These systems may include a proportional-integral ("PI") controller or a proportional-integral-derivative ("PID") controller.

A body 1500 may be in the form of a small volume conduit for transferring the lens forming composition out of the body. The use of a small volume conduit may minimize the amount of monomer solution that is in contact with the heating system at any given time. Monomer solution passes through the body and exits the body via the outlet valve 1520.

A fluid monitor 1580 may be used to monitor the level of fluid in the body 1500. A fluid monitor 1580 may be positioned within the body 1500. Fluid monitors are commercially available from Gems Sensors Inc., PIainville,CT. IN one embodiment model ELS-1100HT from Gems Sensors may be used. The fluid monitor may be configured to monitor the level of fluid in the body 1500. If the fluid level drops below a preselected minimum, the fluid sensor may produce a signal to a controller. A controller may be coupled to the monomer heating system (e.g., controller 1570) or may be

part of the lens forming apparatus (e.g., controller 50). In one embodiment, the controller may produce a warning message when a low fluid level signal is received from the fluid sensor. The warning message may be an alphanumeric readout on a controller output device (e.g., and LCD screen) or the warning message may involve causing a light to turn on signifying the low fluid level. The controller may also be configured to turn the heating system 1510 off when the fluid level within the body is too low.

Outlet valve 1520 is positioned near the outlet of the body. The outlet valve includes an elongated member 1522 and a movable member 1524 for altering the position of the elongated member, as depicted in Fig. 22. The elongated member 1522 preferably inhibits the flow of lens forming composition through the conduit when the elongated member is in a closed position. The elongated member may be moved into an open position such that the lens forming composition may flow through the conduit.

As depicted in Fig. 22, the elongated member 1522 is in an open position. The elongated member 1522 is preferably oriented perpendicular to the longitudinal axis of the body 1500, as depicted in Fig. 22. The elongated member 1522 resides in a channel 1526 extending through the top 1504 of the body 1500. When in the open position, the elongated member 1522 is positioned away from the outlet of the body. The end of the elongated member, as depicted in Fig. 22, has been moved past a portion of the bottom surface 1502 of the conduit such that the lens forming solution may flow through the conduit and out of the body. The elongated member may be positioned to control the flow rate of the lens forming composition through the conduit. For example, as depicted in Fig. 22, the elongated member, although in an open position, still partially blocks the conduit, thus partially inhibiting flow of the lens forming composition through the conduit. As the elongated member is moved further away from the outlet, the flow may of the lens forming composition may increase. The flow rate of the lens forming composition may reach a maximum when the elongated member no longer blocks the conduit.

In a closed position, the elongated member 1522 may extend to the bottom surface 1502 near the outlet. Preferably, the elongated member 1522 extends past the outer surface of the bottom of the body proximate the outlet, when in the closed position. Configuring the elongated member 1522 such that it extends past the outer surface of the conduit may inhibit any residual lens forming composition from building up near the outlet. As the elongated member 1522 is extended toward the outlet any lens forming composition present may be forced out, leaving the outlet substantially clear of lens forming composition. The outlet may be subsequently cleaned by removing the excess lens forming composition from the outer surface of the conduit and the elongated member.

The interaction of the elongated member 1522 with the movable member 1524 allows the elongated member to be positioned in either a closed or open position. The movable member 1524 preferably includes a plurality of threads the interact with complimentary threads along the elongate member 1526. Rotation of the movable member may cause the elongated member to move away from or toward the outlet, depending on the direction of rotation of the movable member.

A mold assembly holder 1540 may be coupled to the body of the monomer heating system, as depicted in Fig. 22. The mold assembly holder 1540 is configured to hold the mold assembly at a preferred location with respect to the outlet of the body 1500. he mold assembly holder may secure the mold assembly during filling. In one embodiment, the molds assembly holder is spring mounted to the bottom surface of the monomer heating system. The mold assembly holder includes an arm 1542 that is coupled to the body 1500 by hinge 1544. The hinge allows the mold assembly holder to be rotated away form or toward the body 1500 of the monomer heating solution. Hinge 1544 may be spring loaded such that a constant force is exerted on the arm, forcing the arm toward the bottom of the body 1500. To place the mold assembly 1550 on the mold assembly arm 1544, the arm may be rotated away from the body and the mold assembly placed onto a portion of the arm configured to hold the mold assembly. The portion of the arm configured to hold the mold assembly may include a clamping system to secure the mold assembly.

To fill the mold assembly, the mold assembly is placed on the mold assembly holders and positioned proximate to the outlet. The monomer solution is preferably introduced into the body of the fill station and heated to a temperature of about 66°C (150 °F). After the mold assembly is in place, the valve of the mold fill station is aligned with a fill port of the mold assembly. The lens forming composition is now flowed through the valve and into the mold assembly. The movable member 1524, may be adjusted to control the flow rate of the monomer.

After the mold assembly is filled, any monomer which may have spilled on the surface of the molds is removed using a lint free wipe. Excess monomer that may be around the edge of the filling port may be removed by using a micro vacuum unit. The mold assembly may be inspected to insure that the mold cavity is filled with monomer. The mold assembly is also inspected to insure that no air bubbles are present in the mold cavity. Any air bubbles in the mold cavity may be removed by rotating the mold assembly such that the air bubbles rise to the top of the assembly.

The heating of the monomer solution may be coordinated with the entry of a prescription using a controller. In one embodiment, the monomer heating system may be electrically coupled to a lens forming apparatus, such as the apparatus depicted in Fig. 1. The monomer may have ports that are appropriate for using standard data transfer cables to couple to ports that are disposed on the lens forming apparatus. The operation of the monomer heating system may thus coordinated with the operation of the lens forming apparatus. In some embodiments, it may be desirable to minimize the amount of time a monomer solution is heated. In these instances may be desirable to heat the monomer solution just before filling the mold assembly. The controller 50 of the lens forming apparatus may be configured to coordinate the filling operation with the needs of an operator.

When forming a prescription lens, an operator may first enter the prescription into the controller 50 as described above. Once the prescription has been entered, the operator typically spends some time finding and cleaning the appropriate molds for the prescription and assembling the molds with a gasket. In one embodiment, the controller may signal a monomer heating system to begin heating the monomer solution when a prescription is entered. By the time the mold assembly has been assembled, the monomer solution may be at or near the desired temperature. This may minimize the amount of time required by the operator to prepare and fill the mold assembly. In some instances the operator may, after preparing a first prescription enter additional prescriptions to process. In this case, the monomer heating system may be left in an "on" state. If a prescription is not entered after a predetermined amount of time, the controller may turn off the monomer heating system, so that the monomer in the system does not remain in a heated state for long periods of time. In some embodiments, the predetermined amount of time may be about 10 or more minutes.

After filing the mold assembly, the lens forming composition may be cured using a lens curing apparatus. In one embodiment, the curing of the lens forming composition may be accomplished by a procedure involving the application of heat and activating light to the lens forming composition. Initially, activating light is directed toward at least one of the mold members. The activating light is directed for a sufficient time to initiate curing of the lens forming composition. Preferably, the activating light is directed toward at least one of the mold members for a time of less than about 2 minutes. In some embodiments, the activating light is directed toward at least one of the mold members for a time of less than about 25 seconds. In other embodiments, the activating light is directed toward at least one of the mold members for a time of less than about 10 seconds. The activating light is preferably stopped before the lens forming composition is completely cured.

After the curing is initiated, the mold assembly may be transferred to a post cure unit In the post cure unit the mold assembly is preferably treated with additional activating light and heat to further cure the lens forming composition. The activating light may be applied from the top, bottom, or from both the top and bottom of the curing chamber during the post cure process. The lens forming composition may exhibit a yellow color after the curing is initiated. It is believed that the yellow color is produced by the photoinitiator. As the lens forming composition cures, the yellow color may gradually disappear as the photoinitiator is used up. Preferably, the mold assembly is treated in the post cure unit for a time sufficient to substantially remove the yellow color from the formed eyeglass lens. The mold assembly may be treated in the post cure unit for a time of up to about 15 minutes, preferably for a time of between about 10 minutes to 15 minutes. After the lens is treated in the post cure unit, the formed eyeglass lens may be demolded and placed back into the post cure unit.

Table 11

| LENS INFORMATION | | | CURING INFORMATION | | | |
|---|---|---|---|---|---|---|
| Sphere | Lens Type | Tinted | Filter | Initial Dose | Postcure Time | Anneal Time |
| +4.00 to +2.25 | Clear | No | 50 mm | 90 Sec. Back and Front | 13 Min. | 7 Min. |
| +4.00 to +2.25 | Clear | Yes | 50 mm | 90 Sec. Back and Front | 15 Min. | 7 Min. |
| +4.00 to +2.25 | Photo | | 50 mm | 90 Sec. Back and Front | 13 Min. | 7 Min. |
| +2.00 to -4.00 | Clear | No | Clear Plate | 7 Sec. Front | 13 Min. | 7 Min. |
| +2.00 to -4.00 | Clear | Yes | Clear Plate | 7 Sec. Front | 15 Min. | 7 Min. |
| +2.00 to piano | Photo | | Clear Plate | 15 Sec. Front | 13 Min. | 7 Min. |
| -0.25 to -4.00 | Photo | | Clear Plate | 20 Sec. Back, w/7 Sec. Front starting @ 13 Sec. elapsed time. | 13 Min. | 7 Min. |

In some instances, it may be desirable to subject the lens to an anneal process. When a lens, cured by the activating light, is removed from a mold assembly, the lens may be under a stressed condition. It is believed that the power of the lens can be more rapidly brought to a final resting power by subjecting the lens to an anneal treatment to relieve the internal stresses developed during the cure. Prior to annealing, the lens may have a power that differs from the desired final resting power. The anneal treatment is believed to reduce stress in the lens, thus altering the power of the lens to the desired final resting power. Preferably, the anneal treatment involves heating the lens at a temperature between about 93°C (200 °F) to 107°C (225 °F) for a period of up to about 10 minutes. The heating may

be performed in the presence or absence of activating light.

The post-cure and anneal times given in Table 11 are strictly exemplary of the particular system described herein. It should be understood that the time for the post-cure and anneal process may vary if the intensity of the lamps or the temperature of the process is altered. For example, increasing the intensity of light used during the post-cure process may allow a shorter post-cure time. Similarly, reducing the temperature of the post-cure unit during the annealing process may cause an increase in the anneal time. Generally, the post-cure process is believed to be related to the time required to substantially complete curing of the lens forming composition. The anneal process is believed to be related to the amount of time required to bring the formed lens to its final resting power.

The use of a lens forming composition which includes an aromatic containing polyether polyethylenic functional monomer, a co-initiator composition and a photoinitiator allows much simpler curing conditions than other lens forming compositions. While pulsed activated light curing sequences may be used to cure the lenses, continuous activating light sequences may also be used, as described in Table 11. The use of continuous activating light sequences allows the lens curing equipment to be simplified. For example, if continuous activating light is used, rather than pulsed light, equipment for generating light pulses is no longer required. Thus, the cost of the lens curing apparatus may be reduced. Also the use of such a lens forming composition allows more general curing processes to be used. As shown in Table 11, seven different processes may be used to cure a wide variety of lenses. This greatly simplifies the programming and operation of the lens curing unit.

Furthemore, the use a lens forming composition which includes an aromatic containing polyether polyethylenic functional monomer, a co-initiator composition and a photoinitiator may alleviate the need for cooling of the lens forming composition during curing. This may further simplify the procedure since cooling fans, or other cooling systems, may no longer be required. Thus, the lens curing apparatus may be further simplified by removing the mold apparatus cooling systems.

Table 11 shows the preferable curing conditions for a variety of lenses. The sphere column refers to the sphere power of the lens. The monomer type is either clear (i.e., non-photochromic) or photochromic. Note that the lens type (e.g., spheric single vision, aspheric single vision lens, flat-top bifocal lens or progressive multifocal lens) does not significantly alter the lens curing conditions. Tinted refers to whether the formed eyeglass lens will be soaked in a dye bath or not.

Based on the prescription information the lens curing conditions may be determined. There are four curing variables to be set. The type of light filter refers to the filter placed between the lamps and the mold assembly in the curing unit and the post cure unit. The initial does refers to the time that activating light is applied to the lens forming composition in the curing unit. The irradiation pattern (e.g., irradiation of the front mold only, the back mold only, or both molds) is also dependent on the lens being formed. After the initial dose is applied the mold assembly is transferred to the post cure unit where it is treated with activating light and heat. The chart lists the preferred time spent in the post cure chamber. After treatment in the post cure chamber the formed eyeglass lens is removed from the mold assembly. The lens may undergo an annealing process, for the time listed, in which the lens is heated either in the presence or absence of activating light. It should be noted that all of the lens curing processes recited are preferably performed without any cooling of the mold apparatus.

To further illustrate this procedure, the method will be described in detail for the production of a clear, non-tinted lens having sphere power of +3.00. A mold assembly is filled with a non-photochromic monomer solution. The mold assembly is placed in a lens curing unit to apply the initial dose to the lens forming composition. The curing of the lens forming composition is preferably controlled by controller 50. As shown in Fig. 17, the controller 50 includes a number of input devices which allow an operator to initiate use of the various components of the plastic lens curing apparatus 10. In an embodiment, buttons 640 may be used to control operation of the coating process (640a), the curing process (640b), the postcure process (640c), and the anneal process (640d). After the mold assembly is placed in the lens curing unit, the curing process button 640b may be pressed to set the curing conditions. In one embodiment, an operator has preloaded the prescription information and saved the information as described above. Pressing the cure button may cause the controller to prompt the user to enter a reference code corresponding to the saved prescription information. The controller is preferably configured to analyze the prescription information and set up the appropriate initial dose conditions.

After determining the appropriate lens forming conditions, the controller may inform the user of the type of filters to be used. The controller may pause to allow the proper filters to be installed within the lens curing unit Typically; two types of filters may be used for the initial cure process. The filters are preferably configured to distribute the light so that the activating light which is imparted to the lens molds is properly distributed with respect to the prescription of the lens. A clear plate filter refers to a plate that is substantially transparent to activating light. The clear plate may be composed of polycarbonate or glass. A 50 mm filter refers to filter which includes a 50 mm aperture positioned in a central portion of the filter. The 50 mm aperture is preferably aligned with the mold assembly when the filter is placed in the curing unit. Preferably, two filters are used, the first being placed between the top lamps and the mold assembly, the second being placed between the bottom lamps and the mold assembly.

After the filters have been placed, the user may indicate to the controller that the filters are in place. Alternatively, the controller may include a sensor disposed within the lens curing unit which informs the controller when a filter is placed within the curing unit After the filters are placed in the curing unit, the controller may prompt the user to ensure that the mold assembly is in the curing unit prior to commencing the curing process. When the filters and mold are in place, the initial dose may be started by the controller. For a clear, non-tinted lens having sphere power of +3.00 the initial dose will be 90 seconds of activating light applied to both the front and back molds. A 50 mm filter is preferably positioned between the top and bottom lamps.

After the initial cure process is completed, the mold assembly is transferred to the post cure unit The completion of the initial cure process may cause the controller to alert the operator that the process is completed. An alarm may go off to indicate that the process is completed. To initiate the post cure process, the post cure button 640c may be pressed. Pressing the post cure button may cause the controller to prompt the user to enter a reference code corresponding to the saved prescription information. The controller is preferably configured to analyze the prescription information and set up the appropriate post cure conditions. For a clear, non-tinted lens having sphere power of +3.00 the post cure conditions will include directing activating light toward the mold assembly in a heated post cure unit for 13 minutes. The post cure unit is preferably heated to a temperature of about 93°C (200 °F) to about 107°C (225 °F) during the post cure process.

After the post cure process is completed, the mold assembly is disassembled and the formed lens is removed from the mold members. The completion of the post cure process may cause the controller to alert the operator that the process is completed. An alarm may go off to indicate that the process is completed. After the molds are removed from the post cure unit, the gasket is removed and the molds placed in a demolding solution. A demolding solution is commercially available as "Q-Soak Solution" commercially available from Optical Dynamics Corporation, Louisville, KY. The demolding solution causes the lens to separate from the molds. The demolding solution also aids in the subsequent cleaning of the molds. After the lens has been demolded, the lens is preferably cleaned of dust particles using a solution of isopropyl alcohol and water.

In some instances it is desirable that the formed lens undergoes an anneal process. To initiate the anneal process the anneal button 640d may be pressed. Pressing the anneal button will set the conditions for the anneal process. For a clear, non-tinted lens having sphere power of +3.00 the anneal conditions will include heating the lens in the post cure unit, in the absence of activating light, for about 7 minutes. The post cure unit is preferably heated to a temperature of about 93°C (200 °F) to about 107°C (225 °F) during the anneal process.

In one embodiment, the drawer of the post cure unit includes a front row of mold assembly holders and a back row of lens holders. For the post cure process, the mold assemblies are preferably placed in the front row. The front row is preferably oriented under the post cure lamps when the post cure drawer is closed. For the anneal process the lenses are preferably placed in the back row of the post-cure drawer. The back row may be misaligned with the lamps such that little or no activating light reaches the back row.

After the anneal process, the lens may be coated in the coating unit with a scratch resistant hard coat The lens may also be tinted by placing in a tinting bath. It is believed that tinting of the lens is influenced by the crosslink density of the lens. Typically, a lens having a relatively high crosslink density exhibits more homogenous absorption of the dye. Problems such as blotching and streaking of the dye are typically minimized by highly crosslinked lenses. The crosslink density of a lens is typically controlled by the temperature of curing of the lens. A lens which is cured at relatively high temperatures typically exhibits a crosslink density that is substantially greater than a low temperature cured lens. The curing time may also influence the hardness of a lens. Treating a lens for a long period of time in a post cure unit will typically produce a lens having a greater crosslink density than lenses treated for a shorter amount of time. Thus, to produce lenses which will be subsequently treated in a tinting bath, the lens forming composition is treated with heat and activating light in the post cure unit for a longer period of time than for the production of non-tinted lenses. As shown in table 11, non-tinted clear lenses are treated in the postcure unit for about 13 minutes. For clear lenses which will be subsequently tinted, the post cure time is extended to about 15 minutes, to produce a lens having a relatively high crosslink density.

The formation of flat-top bifocal lenses may also be accomplished using the above described procedure. One problem typical of curing flat-top bifocal eyeglass lenses with activating light is premature release. Flat-top bifocals include a far vision correction zone and a near vision correction region. The far vision correction zone is the portion of the lens which allows the user to see far away objects more clearly. The near vision correction zone is the region that allows the user to see nearby objects clearer. The near vision correction zone is characterized by a semicircular protrusion which extends out from the outer surface of an eyeglass lens. As seen in FIG. 24, the portion of the mold cavity which defines the near vision correction zone 1610 is substantially thicker than the portion of the mold cavity defining the far vision correction zone 1620. Directing activating light toward the mold members causes the polymerization of the lens forming composition to occur. It is believed that the polymerization of the lens forming composition begins at the casting face of the irradiated mold and progresses through the mold cavity toward the opposite mold. For example, irradiation of the front mold 1630 causes the polymerization to begin at the casting surface of the front mold 1632 and

progress toward the back mold 1640. As the polymerization reaction progresses, the lens forming composition is transformed from a liquid state to a gel state. Thus, shortly after the front mold 1632 is irradiated with activating light, the portion of the lens forming composition proximate the casting face of the front mold member 1632 will become gelled while the portion of the lens forming composition proximate the back mold member 1640 will remain substantially liquid. If the polymerization is initiated from the back mold 1640, the lens forming composition throughout the far vision correction zone 1620 may become substantially gelled prior to gelation of the lens forming composition in the near vision correction zone proximate the casting surface of the front mold member 1610 (herein referred to as the "front portion of the near.vision correction zone"). It is believed that when the gelation of the lens forming composition in the front portion of the near vision correction zone 1610 occurs after the far vision correction zone 1620 has substantially gelled, the resulting strain may cause premature release of the lens.

To reduce the incidence of premature release in flat-top bifocal lenses, it is preferred that polymerization of the lens forming composition in the front portion of the near vision correction zone 1610 is initiated before the portion of the lens forming composition in the far vision correction zone proximate the back mold member 1640 is substantially gelled. Preferably, this may be achieved by irradiating the front mold 1630 with activating light prior to irradiating the back mold 1640 with activating light. This causes the polymerization reaction to begin proximate the front mold 1630 and progress toward the back mold 1640. It is believed that irradiation in this manner causes the lens forming composition in the front portion of the near vision correction zone 1610 to become gelled before the lens forming composition proximate the back mold 1640 becomes gelled. After the polymerization is initiated, activating light may be directed at either mold or both molds to complete the polymerization of the lens forming composition. The subsequent post cure and anneal steps for the production of flat-top bifocal lenses are substantially the same as described above.

Alternatively, the incidence of premature release may also be reduced if the front portion of the near vision correction zone 1610 is gelled before gelation of the lens forming composition extends from the back mold member 1640 to the front mold member 1630. In this embodiment, the polymerization of the lens forming composition may be initiated by irradiation of the back mold 1640. This will cause the gelation to begin proximate the back mold 1640 and progress toward the front mold 1630. To reduce the incidence of premature release, the front mold 1630 is irradiated with activating light before the gelation of the lens forming composition in the far vision correction zone 1620 reaches the front mold. After the polymerization is initiated in the front portion of the near vision correction zone 1610, activating light may be directed at either mold or both molds to complete the polymerization of the lens forming composition. The subsequent post cure and anneal steps for the production of flat-top bifocal lenses are substantially the same as described above.

In another embodiment, a single curing unit may be used to perform the initial curing process, the post cure process, and the anneal process. A lens curing unit is depicted in Fig. 25 and Fig. 26. The curing unit 1230 may include an upper light source 1214, a lens drawer assembly 1216, and a lower light source 1218. Lens drawer assembly 1216 preferably includes a mold assembly holder 1220 (see Fig. 26), more preferably at least two mold assembly holders 1220. Each of the mold assembly holders 1220 is preferably configured to hold a pair of mold members that together with a gasket form a mold assembly. Preferably, the lens drawer assembly may also include a lens holder 1221 (see Fig. 26), more preferably at least two lens holders 1221. The lens holders 1221 are preferably configured to hold a formed eyeglass lens. The lens drawer assembly 1216 is preferably slidingly mounted on a guide 1217. During use, mold assemblies and/or lenses may be placed in the mold assembly holders 1220 or lens holders 1221, respectively, while the lens drawer assembly is in the open position (i.e., when the door extends from the front of the lens curing unit). After the holders have been loaded, the door may be slid into a closed position, with the mold assemblies directly under the upper light source 1214 and above the lower light source 1218. The lens holders and lenses disposed upon the lens holders may not be oriented directly under the upper and lower light sources. As depicted in Fig. 26, the light sources 1214 and 1218 preferably extend across a front portion of the curing unit, while no lamps are placed in the rear portion of the curing unit. When the lens drawer assembly is slid back into the curing unit, the mold assembly holders 1220 are oriented under the lamps, while the lens holders 1221 are oriented in the back portion where no lamps are present By orienting the holders in this manner curing process which involve light and heat (e.g., post cure processes) and annealing processes, which may involve either application of heat and light or the application of heat only, may be performed in the same unit

The light sources 1214 and 1218, preferably generate activating light. Light sources 1214 and 1218 may be supported by and electrically connected to suitable fixtures 1242. Lamps 1214 may generate either ultraviolet light, actinic light, visible light, and/or infrared light. The choice of lamps is preferably based on the monomers and photoinitiator system used in the lens forming composition. In one embodiment, the activating light may be generated from a fluorescent lamp. The fluorescent lamp preferably has a strong emission spectra in the 380 to 490 nm region. A fluorescent lamp emitting activating light with the described wavelengths is commercially available from Philips as model TLD-15W/03. In another embodiment, the lamps may be ultraviolet lights.

In one embodiment, an upper light filter 1254 may be positioned between upper light source 1214 and lens drawer assembly 1216, as depicted in Fig. 25. A lower light filter 1256 may be positioned between lower light source

1218 and lens drawer assembly 1216. Examples of suitable light filters have been previously described. The light filters are used to create a proper distribution of light with regard to the prescription of the eyeglass lens. The light filters may also insulate the lamps from the curing chamber. During post cure and annealing process it is preferred that the chamber is heated to temperatures between about 104 (200) and 107°C (225 °F). Such temperatures may have a detrimental effects on the lamps such as shortening the lifetime of the lamps and altering the intensity of the light being produced. The light filters 1254 and 1256, when mounted into the guide 1217, will form an inner chamber which partially insulates the lamps from the heated portion of the chamber. In this manner, the temperatures of the lamps may be maintained within the usual operating temperatures..

Alternatively, a heat barrier 1260 may be disposed within the curing chamber. The heat barrier may insulate the lamps from the curing chamber, while allowing the activated light generated by the lamps to pass into the chamber. In one embodiment, the heat barrier may include a borosilicate plate of glass (e.g., PYREX glass) disposed between the light sources and the mold assembly. In one embodiment, a pair of borosilicate glass plates 1264 and 1262 with an intervening air gap between the plates 1263 serves as the heat barrier. The use of borosilicate glass allows the activating radiation to pass from the light sources to the lamps without any significant reduction intensity.

Along with the heat barrier 1260 and filter 1254, an opaque plate 1270, may be placed between the light sources and the mold assembly. The opaque plate is substantially opaque toward the activating light. Apertures are preferably disposed in the opaque plate to allow light to pass through the plate onto the mold assemblies.

In order to allow post cure and annealing procedures to be performed, a beating system 1250 is preferably disposed within the curing unit, as depicted in Fig. 26. The heating system 1250 may be a resistive heating system, a hot air system, or an infrared heating system The heating system 1250 may be oriented along the back side of the curing chamber. The heating system 1250 is preferably disposed at a position between the two filters, such that the heating system is partially insulated from the lamps 1214 and 1218. Preferably, the heating system is configured to heat the curing chamber to a temperature of about 232 (200 °F) to about 107°C (225 °F).

The incorporation of a heating system into a system which allows irradiation of a mold assembly from both sides will allow many of the above described operations to be performed in a single curing unit. The use of lamps in the front portion of the curing unit, while leaving the back portion of the curing chamber substantially free of lamps, allows both activating light curing steps and annealing steps to performed in the same unit at the same time. Thus the curing conditions described in Table 11 may be performed in a single unit, rather than the two units as described above. '

In another embodiment, the method of producing the lenses may be modified such that all of the initial curing process is performed while heat is applied to the lens forming composition. Table 12 shows alternate curing conditions which may be used to cure the lens forming compositions.

Table 12

| LENS INFORMATION | | | CURING INFORMATION | | |
|---|---|---|---|---|---|
| Sphere | Lens Type | Tinted | Filter | Curing Conditions | Anneal Time |
| +4.00 to +2.25 | Clear | No | 50 mm | 90 Seconds Front and Back 13 Minutes Back Temperature (225 °F) 107°C | 7 Min. |
| +4.00 to +2.25 | Clear | Yes | 50 mm | 90 Seconds Front and Back 15 Minutes Front Temperature (225° F) 107°C | 7 Min. |
| +4.00 to +2.25 | Photo | | 50 mm. | 90 Seconds Front and Back 13 Minutes Front Temperature (225 °F) 107°C | 7 Min. |
| +2.00 to -4.00 | Clear | No | Clear Plate | 7 Seconds Front 13 Minutes Back Temperature (225 °F) 107°C | 7 Min. |
| +2.00 to -4.00 | Clear | Yes | Clear Plate | 7 Seconds Front 15 Minutes Back Temperature(225 °F) 107°C | 7 Min. |
| +2.00 to plane | Photo | | Clear Plate | 15 Seconds Front 13 Minutes Back Temperature (225 °F) 107°C. | 7 Min. |
| -0.25 to -4.00 | Photo | | Clear Plate | 20 Seconds Back w/7 Sec. Front starting @ 13 Sec. elapsed time 13 Minutes Back Temperature (225 °F) 107°C | 7 Min. |

After the mold assembly is filled with the appropriate monomer solution the mold assemblies are placed in the mold assembly holders of the drawer of the curing unit. The drawer is slid back into the curing unit The curing unit may be preheated to a temperature of about 107°C (225°F) prior to placing the mold assemblies in the curing unit.

The curing conditions include applying activating light to one or both of the mold members while substantially simultaneously applying heat to the mold assemblies. As shown in Table 12, the light curing conditions are similar to the previously described conditions. However, the initial dose and the post-cure processes have been combined into a single process. Thus, for the formation of a photochromic lens having a sphere power of +1.50, the mold assemblies are placed in the lens curing unit and irradiated with activating light from the bottom of the unit for about 15 seconds. The curing unit is preferably at a temperature of about 107°C (225 °F) while the activating light is applied. After 15 seconds, the bottom light is turned off and the mold assemblies are treated with activating light from the top lamps for about 13 minutes. This subsequent treatment with activating light is also performed at a curing chamber temperature of about 107°C (225 °F). After the 13 minutes have elapsed, the lights may be turned off, the lens removed from the molds and an anneal process begun.

The anneal process may be performed in the same unit that the cure process is performed. The demolded lens is preferably placed in the lens holders of the curing unit drawer. The curing unit is preferably at a temperature of about 107°C (225 °F), when the lens are placed in the curing unit. Preferably, the lens holders are positioned away from the lamps, such that little activating light reaches the lenses when the lamps are on. This allows anneal processed to be performed at the same time that curing processes are performed and within the same curing unit Lenses that have been formed with a mixture of heating and light typically exhibit crosslink density that are greater than lenses which are cured using combinations of light only curing with light and heat curing.

The mold assembly, with a lens forming composition disposed within the mold cavity, is preferably placed within the lens curing unit. Curing of the lens forming composition is preferably initiated by the controller after the lens curing unit door is closed. The curing conditions are preferably set by the controller based on the prescription and type of lens being formed.

After the curing cycle has been completed. The controller preferably prompts the user to remove the mold assembly from the lens curing unit In an embodiment, the cured lens may be removed from the mold apparatus. The cured lens may be complete at this stage and ready for use.

In another embodiment, the cured lens may require a post cure treatment After the lens is removed from the mold apparatus the edges of the lens may be dried and scraped to remove any uncured lens forming composition near the edges. The controller may prompt the user to place the partially cured lens into a post-cure unit After the lens has been placed within the post-cure unit the controller may apply light and/or heat to the lens to complete the curing of the lens. In an embodiment, partially cured lenses may be heated to about 115 °C while being irradiated with activating light. This post-treatment may be applied for about 5 minutes.

It has been determined that in some embodiments the finished power of an activating light polymerized lens may be controlled by manipulating the curing temperature of the lens forming composition. For instance, for an identical combination of mold members and gasket, the focusing power of the produced lens may be increased or decreased by changing the intensity of activating light across the lens mold cavity or the faces of the opposed mold members. Methods for altering the power of a formed lens are described in U.S. Patent No. 5,989,462 to Buazza which is incorporated by reference.

In certain applications, all of the lens forming composition may fail to completely cure by exposure to activating light when forming the lens. In particular, a portion of the lens forming composition proximate the gasket often remains in a liquid state following formation of the lens. It is believed that the gaskets may be often somewhat permeable to air, and, as a result, oxygen permeates them and contacts the portions of the lens forming material that are proximate the gasket. Since oxygen tends to inhibit the polymerization process, portions of the lens forming composition proximate the gasket tend to remain uncured as the lens is formed. The wet edge problem has been addressed by a variety of methods described in U.S. Patent No. 5,529,728 to Buazza et. al. and 5,989,462 to Buazza et al. which are incorporated by reference.

Methods for curing a lens forming composition by the use of pulses of ultraviolet light are described in U.S. Patent No. 6,022,498 which is incorporated by reference.

Materials (hereinafter referred to as "activating light absorbing compounds") that absorb various degrees of ultraviolet/visible light may be used in an eyeglass lens to inhibit ultraviolet/visible light from being transmitted through the eyeglass lens. Such an eyeglass lens advantageously inhibits ultraviolet/visible light from being transmitted to the eye of a user wearing the lens. Curing of an eyeglass lens using activating light to initiate the polymerization of a lens forming composition that includes activating light absorbing compositions is described in detail in U.S. Patent No. 5,989,462 which is incorporated by reference.

Referring now to Fig. 27, a high-volume lens curing apparatus is generally indicated by reference numeral 800. As shown in Fig. 27, lens forming apparatus 800 includes at least a first lens curing unit 810 and a second lens curing unit 820. The lens forming apparatus may, optionally, include an anneal unit 830. In other embodiments, a post cure unit may be a separate apparatus which is not an integral part of the lens curing apparatus. A conveyance system 8S0 may be positioned within the first and/or second lens curing units. The conveyance system 850 may be configured to allow a mold assembly, such as has been described above, to be transported from the first lens curing unit 810 to

the second lens curing unit 820.

Lens curing units 810 and 820 include an activating light source for producing activating light. The activating light sources disposed in units 810 and 820 are preferably configured to direct light toward a mold assembly. Anneal unit 830 may be configured to apply heat to an at least partially relive or relax the stresses caused during the polymerization of the lens forming material. Anneal unit 830, in one embodiment, includes a heat source. A controller 840 may be a programmable logic controller, e.g., a computer. Controller 840 may be coupled to lens curing units 810 and 820 and, if present, an anneal unit 830, such that the controller is capable of substantially simultaneously operating the three units 810, 820, and 830.

As shown in Fig. 28, the first curing unit 810 may include an upper light source 812 and a lower light source 814. Fig. 29 depicts a cut away top view of the first curing unit 810. As shown in Fig. 29 the light sources 812 and 814 of the first curing unit 810 may include a plurality of activating light generating devices or lamps. In one embodiment, the lamps are oriented proximate each other to form a row of lights, as depicted in Fig. 29. While the lamps are depicted as substantially U-shaped, it should be understood that the lamps may be linear, circular, or any other shape that allows a uniform irradiation of a lens forming assembly placed in the first curing unit. In one embodiment, three or four lamps are positioned to provide substantially uniform radiation over the entire surface of the mold assembly to be cured. The lamps may generate activating light.

The lamps may be supported by and electrically connected to suitable fixtures 811. Lamps 812 and 114 may generate either ultraviolet light, actinic light, visible light, and/or infrared light. The choice of lamps is preferably based on the monomers used in the lens forming composition. In one embodiment, the activating light may be generated from a fluorescent lamp. The fluorescent lamp preferably has a strong emission spectra in the 380 to 490 nm region. A fluorescent lamp emitting activating light with the described wavelengths is commercially available as model number FB290D15/ACT/2PC from LCD Lighting, Inc. in Orange CT.

In some embodiments, the activating light sources may be turned on and off frequently during use. Fixture 811 may also include electronic hardware to allow a fluorescent lamp to be frequently turned on and off. Ballasts systems, such as the ones previously described, may be used to operate the lamps. In some embodiments, a barrier 815 may be placed between the lamps 811. The barrier may be configured to inhibit the passage of activating light from one set of lamps to the other. In this manner, the lamp sets may be optically isolated from each other. The lamps may be connected to separate ballast systems and a controller. Thus, the lamps may be operated independently of each other. This may be useful when lenses that require different initial curing sequences are being processed at the same time. The barrier 815 may inhibit the passage of light from one set of lamps to a mold assembly positioned below the other set of lamps.

In some embodiments, at least four independently controllable lamps or sets of lamps may be disposed in the first curing unit. The lamps may be disposed in left and right top positions and left and right bottom positions. As shown in Table 12, a variety of different initial curing conditions may be required depending on the prescription. In some instances the left eyeglass lens may require initial curing conditions that are substantially different from the initial curing conditions of the right eyeglass lens. To allow both lenses to be cured substantially simultaneously, the four sets of lamps may be independently controlled. For example, the right set of lamps may be activated to apply light to the back face of the mold assembly only, while, at the same time, the left set of lamps may be activated to apply light to both sides of the mold assembly. In this manner a pair of eyeglass lenses whose left and right eyeglass prescriptions require different initial curing conditions may be cured at substantially the same time. Since the lenses may thus advantageously remain together in the same mold assembly holder throughout the process, the production process is simpler with minimized job tracking and handling requirements.

To facilitate the positioning and the conveyance of mold assemblies, a mold assembly holder may be used. An isometric view of a mold assembly holder 900 is depicted in Fig. 30. The mold assembly holder includes at least one, preferably two, portions 910 and 912 configured to hold a mold assembly 930. In one embodiment, the portions 910 and 912 are indentations machined into a plastic or metal block that is configured to hold a standard mold assembly. The mold assembly may be placed in the indentation. An advantage of such the indentations, is that the mold assemblies may be positioned in the optimal location for curing in the first and second curing units 810 and 820.

The indentations 910 and 912 may be sized to hold the mold assembly such that substantially all of the molds may be exposed to activating light when the mold assembly is positioned above or below an activating light source. The mold assembly holder may include an opening extending through the mold assembly holder. The opening may be positioned in the indentations 910 and 912 such that activating light may be shone through the mold assembly holder to the mold assembly. In some embodiments, the opening may be of a diameter that is substantially equal to the diameter of the molds. The opening will therefore allow substantially all of the surface area of the mold to be irradiated with activated light. In another embodiment, the diameter of the opening may be substantially less than a diameter of the molds. In this respect the opening may serve as an aperture which reduces the amount of light that contacts the outer edges of the molds. This may be particularly useful for curing positive lenses in which curing is initiated with more activating light being applied to the central portion of the molds than the edges. The indentations

may extend in the body to a depth such that the mold assemblies, when placed in the indentations is even with or below the upper surface of the mold assembly holder. This imparts a low vertical profile to the mold assembly holder and allows the curing units of the high volume system to be constructed with a low vertical profile. In this manner the size of the unit may be minimized.

The mold assembly holder 900 may also include further machined indentations for holding the unassembled pieces of the mold assembly (e.g., the molds and the gasket). During the assembly of the mold assembly, an operator typically will find and clean the molds and gasket before assembly. To minimize the possibility of mixing up the molds and gaskets, and to help minimize recontamination after the molds are cleaned, the mold assembly holder 900 includes sections to hold the various components. As depicted in Fig. 30, indentations 922, 924, 926, and 928 may also be formed in the mold assembly holder 900. The indentations may be labeled to facilitate the placement of the molds or gaskets. For example, indentation 922 may be labeled left lens, front mold, 924 may be labeled left lens, back mold, 928 may be labeled right lens, front mold, and 926 may be labeled right lens, back mold. Other variations of labeling and positioning of the indentations 922, 924, 926, and 928 may be used. This may help prevent operators from making mistakes due to use of incorrect molds to assemble the mold assemblies.

The mold assembly holder may also include a location for holding a job ticket Job ticket may be placed in a holder mounted to a side of the mold assembly holder. Alternatively, the job ticket may have an adhesive that allows the ticket to be attached to the side of the mold assembly. The job ticket may include information such as: the prescription information, the mold ID numbers, the gasket ID numbers, the time, date, and type of lens being formed. The job ticket may also include a job number, the job number may correspond to a job number generated by the controller when the prescription is entered into the controller. The job number may also be depicted using a UPC coding scheme. Use of a UPC code on the job ticket may allow the use of bar-code scanners to determine the job number corresponding to the mold assemblies placed on the mold assembly holder.

The mold assembly holder 900 is used in combination with a conveyor system 850 to transfer mold assemblies from the first curing unit to the second curing unit. The second curing unit is configured to apply activating light and heat to the mold assemblies after the curing is initiated by the first curing unit. The use of two curing units in this manner facilitates the application of curing sequences such as the sequences outlined in Table 11. In these embodiments, the mold assembly is subjected to an initiating dose of activating light, followed by a post-cure dose of activating light and heat. The initial dose may last from about 7 to 90 seconds. After the initial dose is applied the mold assembly is subjected to a combination of activating light and heat for about 5 to 15 minutes. In many instances, subjecting the mold assembly to longer times under the post-cure conditions does not significantly effect the quality of the formed lens. Thus, the second curing unit is designed such that the amount of time that the mold assemblies spend in the second unit is not less than about 5 minutes.

During operation a mold assembly or mold assembly holder is placed on the conveyor system and the mold assembly is moved to a position within the first curing unit 810. In the first curing unit 810, the mold assemblies receive the initial dose of light based on the prescription of the lens, e.g., as outlined in Table 11. After the mold assemblies receive their initial dose, the mold assemblies are moved by the conveyor system 850 to the second curing unit. In the second curing unit, the mold assemblies are treated with activating light and heat. The time it takes for the mold assembly to pass entirely through the second curing unit may be equal to or greater than the post-cure time.

In one embodiment, the conveyor system may be a single continuous system extending from the first curing unit through the second curing unit. During the operation of the lens forming apparatus 800, it is envisioned that a continuous stream of mold assemblies may be placed on the apparatus. Fig. 32 depicts a top cut away of a system in which a continuous stream of mold assembly holders 900 are moving through the first and second curing units. Because the curing for any given prescription lens is complete in the first curing unit in a time of 90 seconds or less, the second unit may be constructed as a rectangular shaped unit that will hold multiple mold assemblies, as depicted in Fig. 27. The length of the second cure unit is determined by the time required for each mold assembly in the first unit. Because the conveyor system is a single continuous unit, the molds will move through the second curing unit in increments equal to the amount of time spent in the first curing unit. Thus, the molds move only when the curing cycle of the first curing unit is complete and the mold assemblies or mold assembly holder is advanced to the second curing unit.

In one embodiment, the mold assemblies are placed on a mold assembly holder 900 as described above. The mold assembly holder may have a predetermined length ($L_H$). After the mold assemblies are loaded onto the mold assembly holder, the mold assembly holder may be placed on the conveyor system 850 and advanced to the first curing unit. The mold assembly holder will remain in the first curing unit for a predetermined minimum amount of time, i.e., the initiation time ($T_I$). For example, for most of the lens forming compositions and prescriptions outlined above, this maximum time will be about 90 sec. After the initial cure is performed, the mold assembly holder is advanced to the second curing unit and another mold assembly holder is advanced to the first curing unit. To properly cure lens forming composition, the mold assemblies may need to remain in the second curing unit for a minimum amount of time, i.e., the post-cure time ($T_P$). The required minimum length of the second curing unit ($L_{SC}$) may, therefore be calculated by these predetermined values using the following equation.

$$L_{SC} = L_H \, X \, (T_P/T_I)$$

By constructing the second curing unit to have a length based on this equation, the mold assembly holder will exit from the second curing unit after the correct amount of post-curing has occurred. This will ensure that the mold assembly will remain in a post-cure situation even if the minimal initiation times are used.

In practice there is a wide variation in the initiation times based on the prescription and the type of lenses being formed. For example, Table 11 discloses some typical initiation times that range from about 7 sec. to about 90 sec. In order to optimize the system, the length of the second curing unit may be altered based on the maximum predetermined initiation time. For example, the ($T_I$) rather than being the minimum time will be the maximum time possible for initiation of the curing. In practice, the conveyor system may be configure to advance a mold assembly holder from the first curing unit to the second curing unit at time intervals equal to the maximum possible initial curing cycle (e.g., about 90 sec. for the above-described compositions) To accommodate the different initial curing cycles, a controller may be coupled to the lamps of the first curing unit. The controller may be configured to turn on the lamps such that the initial curing cycle ends at the end of the maximum initial curing time. For example, if the maximum initial curing time is 90 sec., however the prescription and lens type calls for only a 7 sec, cure. The lamps are kept off until 7 sec. before the end of the 90 sec. time interval (i.e., for 83 seconds). The lamps are, therefore, only activated for the last 7 sec. This may ensure that the time interval between the end of the completion of the initial cure and the entry into the second curing unit is the same regardless of the actual initiation dosage. The length of the second curing unit may be adjusted accordingly to accommodate this type of curing sequence.

In another embodiment, the conveyor system may include two independently operated conveyors. The first conveyor may be configured to convey the mold assembly holder or mold assemblies from the first curing unit to the second curing unit. A second conveyor may be positioned within the second curing unit. The second conveyor may be configured to convey the mold assemblies or the mold assembly holder through the second curing unit. In this manner the second curing unit may be designed independently of the initial curing times. Instead the length of the second curing unit may be based on the time required for a typical post-cure sequence. Thus the length of the second curing unit may be determined by the rate at which the second conveyor system is operated and the amount of time required for a post-cure. This also allows an operator to operate the curing units independently of the other.

The conveyor system may be configured to convey either mold assemblies or a mold assembly holder (e.g., mold assembly holder 900) through the first and second curing units. A view of the conveyor system in which the curing units have been removed from the lens forming apparatus is depicted in Fig. 31. The conveyor system includes a platform for conveying a mold assembly holder. The platform may be configured to support the mold assembly holder 900 as it passes through the first and second curing units. In one embodiment, the platform is formed from two rails 852 that extend the length of the lens forming apparatus. The rails, 852 may be any width, however should be spaced apart from each other at a distance that allows activating light to pass past the rails 852 and to the mold assemblies on the mold assembly holder 900.

The conveyor system includes a flexible member 854 (e.g., a belt or chain) that is configured to interact with the mold assembly holder 900. The flexible member will interact with the mold assembly holder and pull or push the mold assembly holder along the platform. Fig. 33 depicts a close up view of a portion of the flexible member. In this embodiment, the flexible member is composed of a chain 854 that includes a number of projections 856 and 858 that are placed at predetermined positions along the chain. The projections may be configured to interact with the mold assembly holder. In one embodiment, the mold assembly holder may include a ridge along the bottom surface. The ridge will interact with the projections when the chain is moved to the appropriate position. While depicted as a chain, it should be understood that the flexible member may be formed of other materials such as a rubber belt.

The flexible member 854 may be coupled to a pair of wheels or gears disposed at opposite ends of the lens forming apparatus. Fig. 33 depicts a portion of the flexible member that is resting on a gear disposed at an end of the lens forming apparatus. The flexible member may be moved along the lens forming apparatus by turning either of the wheels or gears. The wheels or gears may be manually turned or may be coupled to a motor. Fig. 34 depicts a lens forming apparatus in which a motor 851 is coupled to an end of the second curing unit. The motor may be coupled to the flexible member such that the flexible member may be moved by the operation of the motor. The motor 851 may either pull or push the flexible member along the length of the lens forming apparatus.

The second curing unit may be configured to apply heat and activating light to a mold assembly as it passes through the second curing unit. The second curing unit may be configured to apply activating light to the top, bottom, or both top and bottom of the mold assemblies. As depicted in Figs. 28 and 35, the second curing unit may include a bank of activating light producing lamps 822 and heating systems 824. The bank of lamps may include one or more substantially straight fluorescent lamps that extend through the entire length of the second curing unit. The activating light sources in the second curing unit may produce light having the same spectral output as the activating light sources in the first curing unit. The spectral output refers to the wavelength range of light produced by a lamp, and the relative

intensity of the light at the specific wavelengths produced. Alternatively, a series of smaller lamps may be disposed with the curing unit. In either case, the lamps are positioned such that the mold assemblies will receive activating light as they pass through the second curing unit. The heating unit may be a resistive heater, hot air system, hot water systems, or infrared heating systems. An air distributor 826 (e.g., a fan) may be disposed within the heating system to aid in air circulation within the second curing unit. By circulating the air within the second curing unit, the temperature within the second curing may be more homogenous.

In some embodiments, an anneal unit may also be coupled to the lens forming apparatus. As depicted in Fig. 27, an anneal unit 830 may be placed above the second curing unit. Alternatively, the anneal unit may be placed below or alongside of the first or second curing units. The anneal unit is configured to apply heat and, optionally light, to anneal a demolded lens. When a lens, cured by the activating light, is removed from a mold assembly, the lens may be under a stressed condition. It is believed that the power of the lens can be more rapidly brought to a final resting power by subjecting the lens to an anneal treatment to relieve the internal stresses developed during the cure. Prior to annealing, the lens may have a power that differs from the desired final resting power. The anneal treatment is believed to reduce stress in the lens, thus altering the power of the lens to the desired final resting power. Preferably, the anneal treatment involves heating the lens at a temperature between about 93°C (200 °F) to 107°C (225 °F) for a period of up to about 10 minutes. It should be understood that the anneal time may be varied depending on the temperature of the anneal unit Generally, the higher the temperature of the anneal unit, the faster the anneal process will be completed. The anneal process time is predetermined based on the amount of time, at a predetermined temperature, a formed lens will need to be annealed to be brought to its final resting power.

In the embodiment depicted in Fig. 27, the anneal unit may be constructed in a similar manner to the second curing unit. Turning to Fig. 35, the anneal unit may include a conveyor system 832 for moving a demolded lens through the anneal unit. The demolded lens may be placed in the same mold assembly holder that was used for the first and second curing units. The mold assembly holder 900 may be configured to hold either the mold assembly and/or a demolded lens. The anneal unit includes a heating element 834 (depicted in Fig. 28). The heating element may include a air distributor 836 for circulating air throughout the anneal unit

The anneal unit may have a length that is determined by the rate at which the mold assembly holders are transported through the anneal unit and the time required for the anneal process. For example, in some of the compositions listed above, an anneal time of about 10 min. may be used to bring the lens to its final resting power. The conveyor system of the anneal unit may therefore be configured such that the demolded lenses spend about 10 minutes within the anneal unit as the lenses traverse the length of the unit. A conveyor system similar to the system described above for the first and second curing units may be used.

The controller 840 may be configured to control operation of the lens-curing units. The controller may perform some and/or all of a number of functions during the lens curing process, including, but not limited to: (i) determining the initial dose of light required for the first curing mit based on the prescription: (ii) applying the activating light with an intensity and duration sufficient to equal the determined dose; (iii) applying the activating light with an intensity and duration sufficient to equal the determined second curing unit dose; (iv) turning the lamps sources on and off independently and at the appropriate times; and (v) triggering the movement of the proper light filters into the proper position based on the prescription. These functions may be performed in response to information read by the bar code reader from the job ticket positioned on the mold assembly holder. This information may include the prescription information and may be correlated with the initial curing conditions by the controller 840.

The controller may also control the flow of the mold assembly holder through the system. The controller may include a monitoring device for determining the job number associated with a mold assembly holder. Fig. 29 depicts a monitoring device 817 which is coupled to the lens forming apparatus proximate the first curing unit. The monitoring device may be a laser or infra-red reading device. In some embodiments, the monitoring device may be a bar code reader for reading a UPC bar code. The monitoring device may be positioned within the first curing unit When a mold assembly holder is placed on the conveyer system, it may be moved to a position such that the monitoring device may read a job number printed on the job ticket. In one embodiment, the job number is in the form of a UPC bar code. The monitoring device may be coupled to the controller. The controller may use the job number, read from the mold assembly holder, to determine the curing conditions required for the job that is being transferred to the first curing unit As described before, the job number may correspond to a prescription that was previously entered into the controller. In this manner the proper curing conditions may be achieved without relying on the operator to input the correct parameters.

Another advantage of the monitoring of the job number is that accidental usage of the lamps may be avoided. If the monitoring device is positioned within the first cure unit, the controller may prevent the activation of the first cure unit lamps, until a job ticket is detected. The detection of a job ticket may indicate that a mold assembly holder is placed in the proper position within the first curing unit Once the mold assembly holder is placed within the first curing unit, the lamps of the first curing unit may be activated to initiate curing. If no job ticket is detected, the apparatus may wait in a stand-by mode until the mold assembly holder is inserted into the first curing unit

It should be understood, that the above-described lens curing system may be used in combination with any

of the features of the previously described embodiments.

Further modifications and alternative embodiments of various aspects of the invention will be apparent to those skilled in the art in view of this description. Accordingly, this description is to be construed as illustrative only and is for the purpose of teaching those skilled in the art the general manner of carrying out the invention. It is to be understood that the forms of the invention shown and described herein are to be taken as the presently preferred embodiments. Elements and materials may be substituted for those illustrated and described herein, parts and processes may be reversed, and certain features of the invention may be utilized independently, all as would be apparent to one skilled in the art after having the benefit of this description of the invention.

**Claims**

1. An apparatus for preparing an eyeglass lens (110), comprising:

   a first lens curing unit (30) comprising a first activating light source (240), wherein the first lens curing unit is configured to produce activating light directed toward a mold assembly (220) during use; **characterised in that** it further comprises

   a second lens curing unit (40) comprising a second activating light source (414) and heating system (418) wherein the activating light source is configured to direct activating light toward a mold assembly (420) during use; and

   wherein the heat system is configured to heat the interior of the second lens curing unit; and a conveyor system (850) configured to convey the mold assembly from the first lens curing unit into and through the second lens curing unit.

2. The apparatus of claim 1, wherein the first activating light source is an ultraviolet light source.

3. The apparatus of claim 1 to 2, wherein the second activating light source is an ultraviolet light

4. The apparatus of claim 1 to 3, wherein the first and second activating light sources have substantially the same spectral output.

5. The apparatus of claim 1 to 4, wherein the first and second activating light sources have a peak light intensity at a range of about 385 nm to about 490 nm.

6. The apparatus of claim 1 to 5, wherein the first activating light source comprises a first set of lamps and a second set of lamps, wherein the first and second set of lamps are positioned on opposite sides of the first curing unit

7. The apparatus of claim 1 to 6 wherein the first activating light source is configured to generate pulses of activating light.

8. The apparatus of claim 1 to 7 wherein the second activating light source is configured to generate pulses of activating light

9. The apparatus of claim 1 to 8, further comprising a filter disposed directly adjacent to the first activating light source, the filter being configured to manipulate an intensity of the activating light emanating from the first activating light source.

10. The apparatus of claim 1 to 9, further comprising a filter disposed directly adjacent to the second activating light source, the filter being configured to manipulate an intensity of the activating light emanating from the second activating light source.

11. The apparatus of claim 9 to 10, wherein the filter comprises a plate defining an aperture, wherein the plate is formed from a material that is opaque to the activating light

12. The apparatus of claim 9 to 10, wherein the filter comprises a plate defining an aperture, wherein the plate is formed from a material that is opaque to the activating light

**13.** The apparatus of claim 1 to 12, further comprising an air distributor positioned within the second curing unit, the air distributor being configured to circulate air within the second curing unit during use.

**14.** The apparatus of claim 1 to 13, further comprising an anneal unit, the anneal unit comprising an anneal unit heating system, wherein the anneal unit heating system is configured to heat the interior of the anneal unit

**15.** The apparatus of claim 14, wherein the anneal unit heating system is configured to heat the interior of the anneal unit to a temperature of up to about 121°C (250 °F).

**16.** The apparatus of claim 14 to 15, wherein the anneal unit further comprises an anneal unit conveyor system configured to convey the mold assembly through the anneal unit

**17.** The apparatus of claim 1 to 16, further comprising a programmable controller configured to substantially simultaneously control operation of the first curing unit and the second curing unit during use.

**18.** The apparatus of claim 1 to 17, wherein the first activating light source comprises a first set of lamps and a second set of lamps, and further comprising a programmable controller configured to individually control the first and second sets of lamps.

**19.** The apparatus of claim 1 to 18, further comprising a programmable controller configured to control operation of the first curing unit as a function of the eyeglass lens prescription.

**20.** The apparatus of claim 1 to 19, wherein the first activating light source comprises a fluorescent lamp, and wherein the first activating light source further comprises a flasher ballast system coupled to the fluorescent lamp.

**21.** The apparatus of claim 1 to 20, wherein the second activating light source comprises a fluorescent lamp, and wherein the second activating light source further comprises a flasher ballast system coupled to the fluorescent lamp.

**22.** The apparatus of claim 20 to 21, wherein the flasher ballast system comprises an instant start ballast and a transformer.

**23.** The apparatus of claim 1 to 22, wherein the first activating light source comprises two or more lamps, and wherein the lamps are independently operable.

**24.** The apparatus of claim 1 to 23, wherein the conveyor system comprises a continuous flexible member extending from the first curing unit through the second curing unit, wherein the flexible member is configured to interact with a mold assembly to convey the mold assembly through the first curing unit, to the second curing unit, and through the second curing unit.

**25.** The apparatus of claim 1 to 24, wherein the conveyor system comprises two discrete conveyors, wherein the first conveyor is configured to convey the mold assembly from the first curing unit to the second curing unit, and wherein the second conveyor is configured to convey the mold assemblies through the second curing unit.

**26.** The apparatus of claim 1 to 25, wherein the conveyor system comprises a flexible member configured to interact with a mold assembly, and wherein the flexible member is coupled to a motor configured to move the flexible member through the conveyor system.

**27.** The apparatus of claims 1 to 26, wherein the apparatus is configured such that a substantially clear eyeglass lens is formed in a time period of less than 1 hour.

**28.** The apparatus for preparing an eyeglass lens of claims 1 to 27 comprising:

an anneal unit, the anneal unit comprising an anneal unit heating system, wherein the anneal unit heating system is configured to heat the interior of the anneal unit;

wherein the apparatus is configured such that a substantially clear eyeglass lens is formed in a time period of less than 1 hour.

**29.** A system for preparing an eyeglass lens, comprising the apparatus of claims 1 to 28 and further comprising:

a mold assembly comprising:

a first mold member having a casting face and a non-casting face;
a second mold member having a casting face and a non-casting face, the second mold member being configured to be spaced apart from the first mold member during use such that the casting faces of the first mold member and the second mold member at least partially define a mold cavity.

**30.** The system of claim 29, further comprising a programmable controller configured to substantially simultaneously control operation of the first curing unit and the second curing unit during use.

**31.** The system of claim 29 to 30, wherein the first activating light source comprises a first set of lamps and a second set of lamps, and further comprising a programmable controller configured to individually control the first and second sets of lamps.

**32.** The system of claim 29 to 31, further comprising a programmable controller configured to control operation of the first curing unit as a function of the eyeglass lens prescription.

**33.** The system of claim 29 to 32, wherein the first activating light source comprises a fluorescent lamp, and
wherein the first activating light source further comprises a flasher ballast system coupled to the fluorescent lamp.

**34.** The system of claim 29 to 33, wherein the second activating light source comprises a fluorescent lamp, and wherein the second activating light source further comprises a flasher ballast system coupled to the fluorescent lamp.

**35.** The system of claim 29 to 34 wherein the mold assembly further comprises a gasket configured to engage the first mold member and the second mold member, the gasket comprising at least four discrete projections for spacing the mold members, and wherein the projections are arranged on an interior surface of the gasket, and
wherein the gasket further comprises a fifth projection positioned such that the projection contacts one of the mold members during use.

**36.** The system of claim 35, wherein the at least four discrete projections of the gasket are evenly spaced around the interior surface of the gasket.

**37.** The system of claim 35 to 36, wherein the at least four discrete projections of the gasket are spaced at about 90 degree increments around the interior surface of the gasket.

**38.** The system of claim 35 to 37, wherein the gasket further comprises a fill port for receiving a lens forming composition while the gasket is fully engaged to a mold set.

**39.** The system of claim 38, wherein the fill port extends from an interior surface of the gasket to an exterior surface of the gasket.

**40.** The system of claim 35 to 39, wherein the fifth projection is positioned such that the projection contacts the first mold member, and wherein the gasket further comprises a fill port for receiving a lens forming composition while the gasket is engaged to the molds, and wherein the fill port is positioned near the second mold member during use.

**41.** The system of claim 29 to 40, further comprising a mold assembly holder configured to support the mold assembly, comprising:

a body, wherein the body is configured to allow activating light to reach the mold assembly;
an indentation formed in the body, wherein the indentation is complementary to the shape of the mold assembly.

**42.** The system of claim 41, wherein the indentation defines an opening, and wherein the opening is positioned such that activating light from the first activating light source passes through the opening and onto the mold assembly when the mold assembly is positioned within the first lens curing unit.

**43.** The system of claim 41 to 42, wherein the indentation defines an opening, and wherein the opening is positioned such that activating light from the second activating light source passes through the opening and onto the mold assembly when the mold assembly is positioned within the second lens curing unit.

**44.** The system of claim 41 to 43, wherein the mold assembly holder further comprises additional indentations for holding a mold or a gasket of the mold assembly.

**45.** The system of claim 41 to 44, wherein the mold assembly holder further comprises a ridge disposed on the bottom surface, wherein the ridge is configured to interact with a conveyor system.

**46.** The system of claim 29 to 45, further comprising a monomer heating apparatus for dispensing a heated polymerizable lens forming composition comprising:

a body, the body being configured to hold the lens forming composition, the body comprising an opening for receiving a fluid container and an outlet;
a heating system positioned within the body for heating the lens forming composition;
a valve positioned proximate the outlet, wherein the valve comprises an elongated member,

wherein the elongated member is positionable within the outlet in a closed position, wherein the elongated member in the closed position inhibits flow of the lens forming composition through the outlet, and wherein the elongated member is positionable within the outlet in an open position, wherein the elongated member in an open position allows flow of the lens forming composition flows through the outlet during use.

**47.** The system of claim 46, further comprising a programmable controller, wherein the programmable controller is configured to control the operation of the first curing unit, the second curing unit, and the monomer heating apparatus.

**48.** A system for preparing an eyeglass lens, comprising:

a mold assembly comprising:

a first mold member having a casting face and a non-casting face;
a second mold member having a casting face and a non-casting face, the second mold member being configured to be spaced apart from the first mold member during use such that the casting faces of the first mold member and the second mold member at least partially define a mold cavity;
The apparatus of claim 1 and
a lens forming composition configured to be disposed within the mold cavity during use, comprising:

a monomer that cures by exposure to activating light to form the eyeglass lens during use; and
a photoinitiator that initiates curing of the monomer in response to being exposed to activating light during use.

**49.** The system of claim 48, wherein the lens forming composition further comprises a photochromic compound.

**50.** The system of claim 48 to 49, wherein the lens forming composition further comprises an ultraviolet/visible light absorbing compound.

**51.** The system of claim 48, wherein the monomer comprises an aromatic containing bis(allyl carbonate)-functional monomer.

**52.** The system of claim 48, wherein the monomer comprises an aromatic containing polyethylenic polyether functional monomer.

**53.** The system of claim 48, wherein the monomer composition comprises a polyethylenic functional monomer.

**54.** The system of claim 48 to 53, wherein the lens forming composition further comprises a co-initiator composition, wherein the co-initiator composition comprises an amine.

**55.** The system of claim 54,
wherein the co-initiator composition comprises an acrylyl amine.

**56.** The system of claim 48 to 53, wherein the lens forming composition further comprises a co-initiator composition, wherein the co-initiator composition comprises an acrylyl amine, the acrylyl amine comprising monoacrylated amines, diacrylated amines, or mixtures thereof.

**57.** The system of claim 48 to 56 wherein the photoinitiator comprises bis(2,6-dimethoxybenzoyl)-(2,4,4-trimethylphenyl)phosphine oxide.

**58.** The system of claim 48 to 57, wherein the lens forming composition further comprises a dye to form a background color within the lens.

**59.** The system of claim 48 to 58 wherein the lens forming composition is curable to a substantially aberration free lens in less than about 30 minutes.

**60.** The system of claim 48 to 59, wherein the first activating light source is an ultraviolet light source.

**61.** The system of claim 48 to 60, wherein the second activating light source is an ultraviolet light source.

**62.** The system of claim 48 to 61, wherein the first and second activating light sources have substantially the same spectral output.

**63.** The system of claim 48 to 62, wherein the first and second activating light sources have a peak light intensity at a range of about 385 nm to about 490 nm.

**64.** The system of claim 48 to 63, wherein the first activating light source comprises a first set of lamps and a second set of lamps, wherein the first and second set of lamps are positioned on opposite sides of the first curing unit.

**65.** The system of claim 48 to 64 wherein the first activating light source is configured to generate pulses of activating light.

**66.** The system of claim 48 to 65 wherein the second activating light source is configured to generate pulses of activating light.

**67.** The system of claim 48 to 66, further comprising a filter disposed directly adjacent to the first activating light source, the filter being configured to manipulate an intensity of the activating light emanating from the first activating light source.

**68.** The system of claim 48 to 66, further comprising a filter disposed directly adjacent to the second activating light source, the filter being configured to manipulate an intensity of the activating light emanating from the second activating light source.

**69.** The system of claim 67 to 68, wherein the filter is comprises a metal plate defining an aperture.

**70.** The system of claim 48 to 69, further comprising an air distributor positioned within the second curing unit, the air distributor being configured to circulate air within the second curing unit during use.

**71.** The system of claim 48 to 70, further comprising an anneal unit, the anneal unit comprising an anneal unit heating system, wherein the anneal unit heating system is configured to heat the interior of the anneal unit

**72.** The system of claim 71, wherein the anneal unit heating system is configured to heat the interior of the anneal unit to a temperature of up to about 121 °C (250° F).

**73.** The system of claim 71 to 72, wherein the anneal unit further comprises an anneal unit conveyor system configured to convey the mold assembly through the anneal unit.

**74.** The system of claim 48 to 73, further comprising a programmable controller configured to substantially simultaneously control operation of the first curing unit and the second curing unit during use.

**75.** The system of claim 48 to 74, wherein the first activating light source comprises a first set of lamps and a second set of lamps, and further comprising a programmable controller configured to individually control the first and second sets of lamps.

**76.** The system of claim 48 to 75, further comprising a programmable controller configured to control operation of the first curing unit as a function of the eyeglass lens prescription.

**77.** The system of claim 48 to 76, wherein the first activating light source comprises a fluorescent lamp, and wherein the first activating light source further comprises a flasher ballast system coupled to the fluorescent lamp.

**78.** The system of claim 48 to 77, wherein the second activating light source comprises a fluorescent lamp, and wherein the second activating light source further comprises a flasher ballast system coupled to the fluorescent lamp.

**79.** The system of claim 77 to 78, wherein the flasher ballast system comprises an instant start ballast and a transformer.

**80.** The system of claim 48 to 79, wherein the first activating light source comprises two or more lamps, and wherein the lamps are independently operable.

**81.** The system of claim 48 to 80, wherein the conveyor system comprises a continuous flexible member extending from the first curing unit through the second curing unit, wherein the flexible member is configured to interact with a mold assembly to convey the mold assembly through the first curing unit, to the second curing unit, and through the second curing unit.

**82.** The system of claim 48 to 80, wherein the conveyor system comprises two discrete conveyors, wherein the first conveyor is configured the convey the mold assembly from the first curing unit to the second curing unit, and wherein the second conveyor is configured to convey the mold assemblies through the second curing unit.

**83.** The system of claim 48 to 82, wherein the conveyor system comprises a flexible member configured to interact with a mold assembly, and wherein the flexible member is coupled to a motor configured to move the flexible member through the conveyor system.

**84.** The system of claim 48 to 83, wherein the mold assembly further comprises a gasket configured to engage the first mold member and the second mold member, the gasket comprising at least four discrete projections for spacing the mold members, and wherein the projections are arranged on an interior surface of the gasket, and wherein the gasket further comprises a fifth projection positioned such that the projection contacts one of the mold members during use.

**85.** The system of claim 84, wherein the at least four discrete projections of the gasket are evenly spaced around the interior surface of the gasket.

**86.** The system of claim 84 to 85, wherein the at least four discrete projections of the gasket are spaced at about 90 degree increments around the interior surface of the gasket.

**87.** The system of claim 84 to 86, wherein the gasket further comprises a fill port for receiving a lens forming composition while the gasket is fully engaged to a mold set.

**88.** The system of claim 87, wherein the fill port extends from an interior surface of the gasket to an exterior surface of the gasket.

**89.** The system of claim 84 to 88, wherein the fifth projection is positioned such that the projection contacts the first mold member, and wherein the gasket further comprises a fill port for receiving a lens forming composition while the gasket is engaged to the molds, and wherein the fill port is positioned near the second mold memeber during use.

**90.** The system of claim 48 to 89, further comprising a mold assembly holder configured to support the mold assembly, comprising:

a body, wherein the body is configured to allow activating light to reach the mold assembly;
an indentation formed in the body, wherein the indentation is complementary to the shape of the mold assembly.

**91.** The system of claim 90, wherein the indentation defines an opening, and wherein the opening is positioned such that activating light from the first activating light source passes through the opening and onto the mold assembly when the mold assembly is positioned within the first lens curing unit.

**92.** The system of claim 90 to 91, wherein the indentation defines an opening, and wherein the opening is positioned such that activating light from the second activating light source passes through the opening and onto the mold assembly when the mold assembly is positioned within the second lens curing unit.

**93.** The system of claim 90 to 92, wherein the mold assembly holder further comprises additional indentations for holding a mold or a gasket of the mold assembly.

**94.** The system of claim 90 to 93, wherein the mold assembly holder further comprises a ridge disposed on the bottom surface, wherein the ridge is configured to interact with a conveyor system.

**95.** The system of claim 48 to 94, further comprising a monomer heating apparatus for dispensing a heated polymerizable lens forming composition comprising:

a body, the body being configured to hold the lens forming composition, the body comprising an opening for receiving a fluid container and an outlet;
a heating system positioned within the body for heating the lens forming composition
a valve positioned proximate the outlet, wherein the valve comprises an elongated member,

wherein the elongated member is positionable within the in a closed position, wherein the elongated member in the closed position inhibits flow of the lens forming composition through the outlet, and wherein the elongated member is positionable within the conduit in an open position, wherein the elongated member in an open position allows flow of the lens forming composition flows through the outlet during use.

**96.** The system of claim 95, further comprising a programmable controller, wherein the programmable controller is configured to control the operation of the first curing unit, the second curing unit, and the monomer heating apparatus.

**Patentansprüche**

**1.** Vorrichtung zur Anfertigung einer Brillenlinse (10), umfassend
eine erste Linsenhärtungseinheit (30), die eine erste Aktivierungslichtquelle (240) umfasst, wobei die erste Linsenhärtungseinheit dazu gestaltet ist, während der Verwendung Aktivierungslicht zu erzeugen, das zu einem Formaufbau (220) gerichtet ist; **dadurch gekennzeichnet, dass** die Vorrichtung ferner Folgendes umfasst:

eine zweite Linsenhärtungseinheit (40), die eine zweite Aktivierungslichtquelle (414) und ein Heizsystem (418) umfasst, wobei die Aktivierungslichtquelle dazu gestaltet ist, während der Verwendung Aktivierungslicht zu einem Formaufbau (420) zu richten; und wobei.das Heizsystem dazu gestaltet ist, das Innere der zweiten Linsenhärtungseinheit zu erhitzen; und
ein Beförderungssystem (850), das dazu gestaltet ist, den Formaufbau von der ersten Linsenhärtungseinheit in und durch die zweite Linsenhärtungseinheit zu befördern.

**2.** Vorrichtung nach Anspruch 1, wobei die erste Aktivierungslichtquelle eine Ultraviolettlichtquelle ist.

**3.** Vorrichtung nach Anspruch 1 bis 2, wobei die zweite Aktivierungslichtquelle eine Ultraviolettlichtquelle ist.

**4.** Vorrichtung nach Anspruch 1 bis 3, wobei die erste und die zweite Aktivierungslichtquelle im Wesentlichen den gleichen spektralen Ausgang aufweisen.

**5.** Vorrichtung nach Anspruch 1 bis 4, wobei die erste und die zweite Aktivierungslichtquelle eine Spitzenlichtstärke in einem Bereich von etwa 385 nm bis etwa 490 nm aufweisen.

6. Vorrichtung nach Anspruch 1 bis 5, wobei die erste Aktivierungslichtquelle einen ersten Lampensatz und einen zweiten Lampensatz umfasst, wobei der erste und der zweite Lampensatz an gegenüberliegenden Seiten der ersten Härtungseinheit positioniert sind.

7. Vorrichtung nach Anspruch 1 bis 6, wobei die erste Aktivierungslichtquelle dazu gestaltet ist, Aktivierungslichtimpulse zu erzeugen.

8. Vorrichtung nach Anspruch 1 bis 7, wobei die zweite Aktivierungslichtquelle dazu gestaltet ist, Aktivierungslichtimpulse zu erzeugen.

9. Vorrichtung nach Anspruch 1 bis 8, ferner umfassend ein Filter, das direkt neben der ersten Aktivierungslichtquelle angeordnet ist, wobei das Filter dazu gestaltet ist, eine Stärke des Aktivierungslichts, das von der ersten Aktivierungslichtquelle ausgeht, zu beeinflussen.

10. Vorrichtung nach Anspruch 1 bis 9, ferner umfassend ein Filter, das direkt neben der zweiten Aktivierungslichtquelle angeordnet ist, wobei das Filter dazu gestaltet ist, eine Stärke des Aktivierungslichts, das von der zweiten Aktivierungslichtquelle ausgeht, zu beeinflussen.

11. Vorrichtung nach Anspruch 9 bis 10, wobei das Filter eine Platte umfasst, die eine Öffnung definiert, wobei die Platte aus einem Material gebildet ist, das für das Aktivierungslicht undurchlässig ist.

12. Vorrichtung nach Anspruch 9 bis 10, wobei das Filter eine Platte umfasst, die eine Öffnung definiert, wobei die Platte aus einem Material gebildet ist, das für das Aktivierungslicht undurchlässig ist.

13. Vorrichtung nach Anspruch 1 bis 12, ferner umfassend einen Luftverteiler, der in der zweiten Härtungseinheit positioniert ist, wobei der Luftverteiler dazu gestaltet ist, während der Verwendung Luft in der zweiten Härtungseinheit umzuwälzen.

14. Vorrichtung nach Anspruch 1 bis 13, ferner umfassend eine Tempereinheit, wobei die Tempereinheit ein Tempereinheitsheizsystem umfasst, wobei das Tempereinheitsheizsystem dazu gestaltet ist, das Innere der Tempereinheit zu erhitzen.

15. Vorrichtung nach Anspruch 14, wobei das Tempereinheitsheizsystem dazu gestaltet ist, das Innere der Tempereinheit auf bis zu etwa 121 °C (250 °F) zu erhitzen.

16. Vorrichtung nach Anspruch 14 bis 15, wobei die Tempereinheit ferner ein Tempereinheitsbeförderungssystem umfasst, das dazu gestaltet ist, den Formaufbau durch die Tempereinheit zu befördern.

17. Vorrichtung nach Anspruch 1 bis 16, ferner umfassend eine programmierbare Steuerung, die dazu gestaltet ist, den Betrieb der ersten Härtungseinheit und der zweiten Härtungseinheit während der Verwendung im Wesentlichen gleichzeitig zu steuern.

18. Vorrichtung nach Anspruch 1 bis 17, wobei die erste Aktivierungslichtquelle einen ersten Lampensatz und einen zweiten Lampensatz umfasst, ferner umfassend eine programmierbare Steuerung, die dazu gestaltet ist, den ersten und den zweiten Lampensatz einzeln zu steuern.

19. Vorrichtung nach Anspruch 1 bis 18, ferner umfassend eine programmierbare Steuerung, die dazu gestaltet ist, den Betrieb der ersten Härtungseinheit als eine Funktion der Brillenlinsenverschreibung zu steuern.

20. Vorrichtung nach Anspruch 1 bis 19, wobei die erste Aktivierungslichtquelle eine Leuchtstofflampe umfasst, und wobei die erste Aktivierungslichtquelle ferner ein mit der Leuchtstofflampe gekoppeltes Blitzgebervorschaltgerätesystem umfasst.

21. Vorrichtung nach Anspruch 1 bis 20, wobei die zweite Aktivierungslichtquelle eine Leuchtstofflampe umfasst, und wobei die zweite Aktivierungslichtquelle ferner ein mit der Leuchtstofflampe gekoppeltes Blitzgebervorschaltgerätesystem umfasst.

22. Vorrichtung nach Anspruch 20 bis 21, wobei das Blitzgebervorschaltgerätesystem ein Direktstartvorschaltgerät

und einen Transformator umfasst.

**23.** Vorrichtung nach Anspruch 1 bis 22, wobei die erste Aktivierungslichtquelle zwei oder mehr Lampen umfasst, und wobei die Lampen unabhängig betrieben werden können.

**24.** Vorrichtung nach Anspruch 1 bis 23, wobei das Beförderungssystem ein fortlaufendes biegsames Element umfasst, das sich von der ersten Härtungseinheit durch die zweite Härtungseinheit erstreckt, wobei das biegsame Element dazu gestaltet ist, mit einem Formaufbau zusammenzuwirken, um den Formaufbau durch die erste Härtungseinheit, zur zweiten Härtungseinheit, und durch die zweite Härtungseinheit zu befördern.

**25.** Vorrichtung nach Anspruch 1 bis 24, wobei das Beförderungssystem zwei diskrete Beförderungseinrichtungen umfasst, wobei die erste Beförderungseinrichtung dazu gestaltet ist, den Formaufbau von der ersten Härtungseinheit zur zweiten Härtungseinheit zu befördern, und wobei die zweite Beförderungseinrichtung dazu gestaltet ist, die Formaufbauten durch die zweite Härtungseinheit zu befördern.

**26.** Vorrichtung nach Anspruch 1 bis 25, wobei das Beförderungssystem ein biegsames Element umfasst, das dazu gestaltet ist, mit einem Formaufbau zusammenzuwirken, und wobei das biegsame Element mit einem Motor gekoppelt ist, der dazu gestaltet ist, das biegsame Element durch das Beförderungssystem zu bewegen.

**27.** Vorrichtung nach Anspruch 1 bis 26, wobei die Vorrichtung so gestaltet ist, dass in einem Zeitraum von weniger als 1 Stunde eine im Wesentlichen klare Brillenlinse gebildet wird.

**28.** Vorrichtung zur Anfertigung einer Brillenlinse nach Anspruch 1 bis 27, umfassend
eine Tempereinheit, wobei die Tempereinheit ein Tempereinheitsheizsystem umfasst, wobei das Tempereinheitsheizsystem dazu gestaltet ist, das Innere der Tempereinheit zu erhitzen;
wobei die Vorrichtung so gestaltet ist, dass in einem Zeitraum von weniger als 1 Stunde eine im Wesentlichen klare Brillenlinse gebildet wird.

**29.** System zur Anfertigung einer Brillenlinse, umfassend die Vorrichtung von Anspruch 1 bis 28, und ferner umfassend ein erstes Formelement, das eine Gußfläche und eine Nichtgußfläche aufweist;
ein zweites Formelement, das eine Gußfläche und eine Nichtgußfläche aufweist, wobei das zweite Formelement dazu gestaltet ist, während der Verwendung vom ersten Formelement beabstandet zu sein, so dass die Gußflächen des ersten Formelements und des zweiten Formelements zumindest teilweise einen Formhohlraum definieren.

**30.** System nach Anspruch 29, ferner umfassend eine programmierbare Steuerung, die dazu gestaltet ist, den Betrieb der ersten Härtungseinheit und der zweiten Härtungseinheit während der Verwendung im Wesentlichen gleichzeitig zu steuern.

**31.** System nach Anspruch 29 bis 30, wobei die erste Aktivierungslichtquelle einen ersten Lampensatz und einen zweiten Lampensatz umfasst, ferner umfassend eine programmierbare Steuerung, die dazu gestaltet ist, den ersten und den zweiten Lampensatz einzeln zu steuern.

**32.** System nach Anspruch 29 bis 31, ferner umfassend eine programmierbare Steuerung, die dazu gestaltet ist, den Betrieb der ersten Härtungseinheit als eine Funktion der Brillenlinsenverschreibung zu steuern.

**33.** System nach Anspruch 29 bis 32, wobei die erste Aktivierungslichtquelle eine Leuchtstofflampe umfasst, und wobei die erste Aktivierungslichtquelle ferner ein mit der Leuchtstofflampe gekoppeltes Blitzgebervorschaltgerätesystem umfasst.

**34.** System nach Anspruch 29 bis 33, wobei die zweite Aktivierungslichtquelle eine Leuchtstofflampe umfasst, und wobei die zweite Aktivierungslichtquelle ferner ein mit der Leuchtstofflampe gekoppeltes Blitzgebervorschaltgerätesystem umfasst.

**35.** System nach Anspruch 29 bis 34, wobei der Formaufbau ferner eine Dichtung umfasst, die dazu gestaltet ist, mit dem ersten Formelement und dem zweiten Formelement einzugreifen, wobei die Dichtung zumindest vier diskrete Vorsprünge umfasst, um die Formelemente zu beabstanden, und wobei die Vorsprünge an einer inneren Oberfläche der Dichtung angeordnet sind, und wobei die Dichtung ferner einen fünften Vorsprung umfasst, der so positioniert ist, dass der Vorsprung während der Verwendung mit einem der Formelemente in Kontakt steht.

**36.** System nach Anspruch 35, wobei die zumindest vier diskreten Vorsprünge der Dichtung gleichmäßig um die innere Oberfläche der Dichtung beabstandet sind.

**37.** System nach Anspruch 35 bis 36, wobei die zumindest vier diskreten Vorsprünge der Dichtung in Schrittweiten von 90 Grad um die innere Oberfläche der Dichtung beabstandet sind.

**38.** System nach Anspruch 35 bis 37, wobei die Dichtung ferner eine Einfüllöffnung umfasst, um eine linsenbildende Zusammensetzung aufzunehmen, während die Dichtung vollständig mit einem Formsatz in Eingriff steht.

**39.** System nach Anspruch 38, wobei sich die Einfüllöffnung von einer inneren Oberfläche der Dichtung zu einer äußeren Oberfläche der Dichtung erstreckt.

**40.** System nach Anspruch 35 bis 39, wobei der fünfte Vorsprung so positioniert ist, dass der Vorsprung mit dem ersten Formelement in Kontakt steht, und wobei die Dichtung ferner eine Einfüllöffnung umfasst, um eine linsenbildende Zusammensetzung aufzunehmen, während die Dichtung mit den Formen in Eingriff steht, und wobei die Einfüllöffnung während der Verwendung in der Nähe des zweiten Formelements positioniert ist.

**41.** System nach Anspruch 29 bis 40, ferner umfassend eine Formaufbauhalterung, die dazu gestaltet ist, den Formaufbau zu tragen, umfassend
einen Körper, wobei der Körper dazu gestaltet ist, Aktivierungslicht ein Erreichen des Formaufbaus zu gestatten;
eine im Körper gebildete Vertiefung, wobei die Vertiefung zur Form des Formaufbaus komplementär ist.

**42.** System nach Anspruch 41, wobei die Vertiefung eine Öffnung definiert, und wobei die Öffnung so positioniert ist, dass Aktivierungslicht von der ersten Aktivierungslichtquelle durch die Öffnung und auf den Formaufbau verläuft, wenn der Formaufbau in der ersten Linsenhärtungseinheit positioniert ist.

**43.** System nach Anspruch 41 bis 42, wobei die Vertiefung eine Öffnung definiert, und
wobei die Öffnung so positioniert ist, dass Aktivierungslicht von der zweiten Aktivierungslichtquelle durch die Öffnung und auf den Formaufbau verläuft, wenn der Formaufbau in der zweiten Linsenhärtungseinheit positioniert ist.

**44.** System nach Anspruch 41 bis 43, wobei die Formaufbauhalterung ferner zusätzliche Vertiefungen umfasst, um eine Form oder eine Dichtung des Formaufbaus zu halten.

**45.** System nach Anspruch 41 bis 44, wobei die Formaufbauhalterung ferner einen Steg umfasst, der an der unteren Oberfläche angeordnet ist, wobei der Steg dazu gestaltet ist, mit einem Beförderungssystem zusammenzuwirken.

**46.** System nach Anspruch 29 bis 45, ferner umfassend eine Monomererhitzungsvorrichtung, um eine erhitzte polymerisierbare linsenbildende Zusammensetzung abzugeben, umfassend
einen Körper, wobei der Körper dazu gestaltet ist, die linsenbildende Zusammensetzung zu halten, wobei der Körper eine Öffnung zum Aufnehmen eines Fluidbehälters und einen Auslass umfasst;
ein im Körper positioniertes Erhitzungssystem, um die linsenbildende Zusammensetzung zu erhitzen;
ein nächst dem Auslass positioniertes Ventil, wobei das Ventil ein längliches Element umfasst, wobei das längliche Element im Auslass in eine geschlossene Stellung stellbar ist, wobei das längliche Element in der geschlossenen Stellung einen Fluss der linsenbildenden Zusammensetzung durch den Auslass verhindert, und wobei das längliche Element im Auslass in eine offene Stellung stellbar ist, wobei das längliche Element in einer offenen Stellung während der Verwendung einen Fluss der linsenbildenden Zusammensetzung durch den Auslass gestattet.

**47.** System nach Anspruch 46, ferner umfassend eine programmierbare Steuerung,
wobei die programmierbare Steuerung dazu gestaltet ist, den Betrieb der ersten Härtungseinheit, der zweiten Härtungseinheit, und der Monomererhitzungsvorrichtung zu steuern.

**48.** System zur Anfertigung einer Brillenlinse, umfassend
einen Formaufbau, umfassend

ein erstes Formelement, das eine Gußfläche und eine Nichtgußfläche aufweist;

ein zweites Formelement, das eine Gußfläche und eine Nichtgußfläche aufweist, wobei das zweite Formelement dazu gestaltet ist, während der Verwendung vom ersten Formelement beabstandet zu sein, so dass die Gußflächen des ersten Formelements und des zweiten Formelements zumindest teilweise einen Formhohlraum definieren;

die Vorrichtung nach Anspruch 1; und
eine linsenbildende Zusammensetzung, die dazu gestaltet ist, während der Verwendung im Formhohlraum angeordnet zu werden, und Folgendes umfasst:

ein Monomer, das während der Verwendung durch eine Aktivierungslichtaussetzung härtet, um die Brillenlinse zu bilden; und
einen Photoinitiator, der während der Verwendung als Reaktion auf die Aktivierungslichtaussetzung die Härtung des Monomers auslöst.

**49.** System nach Anspruch 48, wobei die linsenbildende Zusammensetzung ferner eine photochrome Verbindung umfasst.

**50.** System nach Anspruch 48 bis 49, wobei die linsenbildende Zusammensetzung ferner eine Verbindung umfasst, die ultraviolettes/sichtbares Licht absorbiert.

**51.** System nach Anspruch 48, wobei das Monomer ein aromatenhaltiges funktionelles Bis(allylcarbonat)-Monomer umfasst.

**52.** System nach Anspruch 48, wobei das Monomer ein aromatenhaltiges funktionelles Polyethylen-Polyethermonomer umfasst.

**53.** System nach Anspruch 48, wobei die Monomerzusammensetzung ein funktionelles Polyethylen-Monomer umfasst.

**54.** System nach Anspruch 48 bis 53, wobei die linsenbildende Zusammensetzung ferner eine Co-Initiator-Zusammensetzung umfasst, wobei die Co-Initiator-Zusammensetzung ein Amin umfasst.

**55.** System nach Anspruch 54, wobei die Co-Initiator-Zusammensetzung ein Acrylylamin umfasst.

**56.** System nach Anspruch 48 bis 53, wobei die linsenbildende Zusammensetzung ferner eine Co-Initiator-Zusammensetzung umfasst, wobei die Co-Initiator-Zusammensetzung ein Acrylylamin umfasst, wobei das Acrylylamin monoacrylierte Amine, diacrylierte Amine, oder Gemische davon umfasst.

**57.** System nach Anspruch 48 bis 56, wobei der Photoinitiator Bis(2,6-Dimethoxibenzoyl)-(2,4,4-Trimethylphenyl) phosphinoxid umfasst.

**58.** System nach Anspruch 48 bis 57, wobei die linsenbildende Zusammensetzung ferner einen Farbstoff umfasst, um in der Linse eine Hintergrundfarbe zu bilden.

**59.** System nach Anspruch 48 bis 58, wobei die linsenbildende Zusammensetzung in weniger als etwa 30 Minuten zu einer im Wesentlichen aberrationsfreien Linse gehärtet werden kann.

**60.** System nach Anspruch 48 bis 59, wobei die erste Aktivierungslichtquelle eine Ultraviolettlichtquelle ist.

**61.** System nach Anspruch 48 bis 60, wobei die zweite Aktivierungslichtquelle eine Ultraviolettlichtquelle ist.

**62.** System nach Anspruch 48 bis 61, wobei die erste und die zweite Aktivierungslichtquelle im Wesentlichen den gleichen spektralen Ausgang aufweisen.

**63.** System nach Anspruch 48 bis 62, wobei die erste und die zweite Aktivierungslichtquelle eine Spitzenlichtstärke in einem Bereich von etwa 385 nm bis etwa 490 nm aufweisen.

**64.** System nach Anspruch 48 bis 63, wobei die erste Aktivierungslichtquelle einen ersten Lampensatz und einen zweiten Lampensatz umfasst, wobei der erste und der zweite Lampensatz an gegenüberliegenden Seiten der ersten Härtungseinheit positioniert sind.

**65.** System nach Anspruch 48 bis 64, wobei die erste Aktivierungslichtquelle dazu gestaltet ist, Aktivierungslichtimpulse zu erzeugen.

**66.** System nach Anspruch 48 bis 65, wobei die zweite Aktivierungslichtquelle dazu gestaltet ist, Aktivierungslichtimpulse zu erzeugen.

**67.** System nach Anspruch 48 bis 66, ferner umfassend ein Filter, das direkt neben der ersten Aktivierungslichtquelle angeordnet ist, wobei das Filter dazu gestaltet ist, eine Stärke des Aktivierungslichts, das von der ersten Aktivierungslichtquelle ausgeht, zu beeinflussen.

**68.** System nach Anspruch 48 bis 66, ferner umfassend ein Filter, das direkt neben der zweiten Aktivierungslichtquelle angeordnet ist, wobei das Filter dazu gestaltet ist, eine Stärke des Aktivierungslichts, das von der zweiten Aktivierungslichtquelle ausgeht, zu beeinflussen.

**69.** System nach Anspruch 67 bis 68, wobei das Filter eine Metallplatte umfasst, die eine Öffnung definiert.

**70.** System nach Anspruch 48 bis 69, ferner umfassend einen Luftverteiler, der in der zweiten Härtungseinheit positioniert ist, wobei der Luftverteiler dazu gestaltet ist, während der Verwendung Luft in der zweiten Härtungseinheit umzuwälzen.

**71.** System nach Anspruch 48 bis 70, ferner umfassend eine Tempereinheit, wobei die Tempereinheit ein Tempereinheitsheizsystem umfasst, wobei das Tempereinheitsheizsystem dazu gestaltet ist, das Innere der Tempereinheit zu erhitzen.

**72.** System nach Anspruch 71, wobei das Tempereinheitsheizsystem dazu gestaltet ist, das Innere der Tempereinheit auf bis zu etwa 121°C (250 °F) zu erhitzen.

**73.** System nach Anspruch 71 bis 72, wobei die Tempereinheit ferner ein Tempereinheitsbeförderungssystem umfasst, das dazu gestaltet ist, den Formaufbau durch die Tempereinheit zu befördern.

**74.** System nach Anspruch 48 bis 73, ferner umfassend eine programmierbare Steuerung, die dazu gestaltet ist, den Betrieb der ersten Härtungseinheit und der zweiten Härtungseinheit während der Verwendung im Wesentlichen gleichzeitig zu steuern.

**75.** System nach Anspruch 48 bis 74, wobei die erste Aktivierungslichtquelle einen ersten Lampensatz und einen zweiten Lampensatz umfasst, ferner umfassend eine programmierbare Steuerung, die dazu gestaltet ist, den ersten und den zweiten Lampensatz einzeln zu steuern.

**76.** System nach Anspruch 48 bis 75, ferner umfassend eine programmierbare Steuerung, die dazu gestaltet ist, den Betrieb der ersten Härtungseinheit als eine Funktion der Brillenlinsenverschreibung zu steuern.

**77.** System nach Anspruch 48 bis 76, wobei die erste Aktivierungslichtquelle eine Leuchtstofflampe umfasst, und wobei die erste Aktivierungslichtquelle ferner ein mit der Leuchtstofflampe gekoppeltes Blitzgebervorschaltgerätesystem umfasst.

**78.** System nach Anspruch 48 bis 77, wobei die zweite Aktivierungslichtquelle eine Leuchtstofflampe umfasst, und wobei die zweite Aktivierungslichtquelle ferner ein mit der Leuchtstofflampe gekoppeltes Blitzgebervorschaltgerätesystem umfasst.

**79.** System nach Anspruch 77 bis 78, wobei das Blitzgebervorschaltgerätesystem ein Direktstartvorschaltgerät und einen Transformator umfasst.

**80.** System nach Anspruch 48 bis 79, wobei die erste Aktivierungslichtquelle zwei oder mehr Lampen umfasst, und wobei die Lampen unabhängig betrieben werden können.

**81.** System nach Anspruch 48 bis 80, wobei das Beförderungssystem ein fortlaufendes biegsames Element umfasst, das sich von der ersten Härtungseinheit durch die zweite Härtungseinheit erstreckt, wobei das biegsame Element dazu gestaltet ist, mit einem Formaufbau zusammenzuwirken, um den Formaufbau durch die erste Härtungseinheit, zur zweiten Härtungseinheit, und durch die zweite Härtungseinheit zu befördern.

**82.** System nach Anspruch 48 bis 80, wobei das Beförderungssystem zwei diskrete Beförderungseinrichtungen umfasst, wobei die erste Beförderungseinrichtung dazu gestaltet ist, den Formaufbau von der ersten Härtungseinheit zur zweiten Härtungseinheit zu befördern, und wobei die zweite Beförderungseinrichtung dazu gestaltet ist, die Formaufbauten durch die zweite Härtungseinheit zu befördern.

**83.** System nach Anspruch 48 bis 82, wobei das Beförderungssystem ein biegsames Element umfasst, das dazu gestaltet ist, mit einem Formaufbau zusammenzuwirken, und wobei das biegsame Element mit einem Motor gekoppelt ist, der dazu gestaltet ist, das biegsame Element durch das Beförderungssystem zu bewegen.

**84.** System nach Anspruch 48 bis 83, wobei der Formaufbau ferner eine Dichtung umfasst, die dazu gestaltet ist, mit dem ersten Formelement und dem zweiten Formelement einzugreifen, wobei die Dichtung zumindest vier diskrete Vorsprünge umfasst, um die Formelemente zu beabstanden, und wobei die Vorsprünge an einer inneren Oberfläche der Dichtung angeordnet sind, und wobei die Dichtung ferner einen fünften Vorsprung umfasst, der so positioniert ist, dass der Vorsprung während der Verwendung mit einem der Formelemente in Kontakt steht.

**85.** System nach Anspruch 84, wobei die zumindest vier diskreten Vorsprünge der Dichtung gleichmäßig um die innere Oberfläche der Dichtung beabstandet sind.

**86.** System nach Anspruch 84 bis 85, wobei die zumindest vier diskreten Vorsprünge der Dichtung in Schrittweiten von 90 Grad um die innere Oberfläche der Dichtung beabstandet sind.

**87.** System nach Anspruch 84 bis 86, wobei die Dichtung ferner eine Einfüllöffnung umfasst, um eine linsenbildende Zusammensetzung aufzunehmen, während die Dichtung vollständig mit einem Formsatz in Eingriff steht.

**88.** System nach Anspruch 87, wobei sich die Einfüllöffnung von einer inneren Oberfläche der Dichtung zu einer äußeren Oberfläche der Dichtung erstreckt.

**89.** System nach Anspruch 84 bis 88, wobei der fünfte Vorsprung so positioniert ist, dass der Vorsprung mit dem ersten Formelement in Kontakt steht, und wobei die Dichtung ferner eine Einfüllöffnung umfasst, um eine linsenbildende Zusammensetzung aufzunehmen, während die Dichtung mit den Formen in Eingriff steht, und wobei die Einfüllöffnung während der Verwendung in der Nähe des zweiten Formelements positioniert ist.

**90.** System nach Anspruch 48 bis 89, ferner umfassend eine Formaufbauhalterung, die dazu gestaltet ist, den Formaufbau zu tragen, umfassend
einen Körper, wobei der Körper dazu gestaltet ist, Aktivierungslicht ein Erreichen des Formaufbaus zu gestatten;
eine im Körper gebildete Vertiefung, wobei die Vertiefung zur Form des Formaufbaus komplementär ist.

**91.** System nach Anspruch 90, wobei die Vertiefung eine Öffnung definiert, und wobei die Öffnung so positioniert ist, dass Aktivierungslicht von der ersten Aktivierungslichtquelle durch die Öffnung und auf den Formaufbau verläuft, wenn der Formaufbau in der ersten Linsenhärtungseinheit positioniert ist.

**92.** System nach Anspruch 90 bis 91, wobei die Vertiefung eine Öffnung definiert, und
wobei die Öffnung so positioniert ist, dass Aktivierungslicht von der zweiten Aktivierungslichtquelle durch die Öffnung und auf den Formaufbau verläuft, wenn der Formaufbau in der zweiten Linsenhärtungseinheit positioniert ist.

**93.** System nach Anspruch 90 bis 92, wobei die Formaufbauhalterung ferner zusätzliche Vertiefungen umfasst, um eine Form oder eine Dichtung des Formaufbaus zu halten.

**94.** System nach Anspruch 90 bis 93, wobei die Formaufbauhalterung ferner einen Steg umfasst, der an der unteren Oberfläche angeordnet ist, wobei der Steg dazu gestaltet ist, mit einem Beförderungssystem zusammenzuwirken.

**95.** System nach Anspruch 48 bis 94, ferner umfassend eine Monomererhitzungsvorrichtung, um eine erhitzte polymerisierbare linsenbildende Zusammensetzung abzugeben, umfassend
einen Körper, wobei der Körper dazu gestaltet ist, die linsenbildende Zusammensetzung zu halten, wobei der Körper eine Öffnung zum Aufnehmen eines Fluidbehälters und einen Auslass umfasst;
ein in dem Körper positioniertes Erhitzungssystem, um die linsenbildende Zusammensetzung zu erhitzen;
ein nächst dem Auslass positioniertes Ventil, wobei das Ventil ein längliches Element umfasst, wobei das längliche Element im Auslass in eine geschlossene Stellung stellbar ist, wobei das längliche Element in der geschlossenen Stellung einen Fluss der linsenbildenden Zusammensetzung durch den Auslass verhindert, und wobei das längliche Element in der Leitung in eine offene Stellung stellbar ist, wobei das längliche Element in einer offenen Stellung während der Verwendung einen Fluss der linsenbildenden Zusammensetzung durch den Auslass gestattet.

**96.** System nach Anspruch 95, ferner umfassend eine programmierbare Steuerung, wobei die programmierbare Steuerung dazu gestaltet ist, den Betrieb der ersten Härtungseinheit, der zweiten Härtungseinheit, und der Monomererhitzungsvorrichtung zu steuern.

## Revendications

**1.** Appareil (10) de fabrication de verres de lunettes, comprenant :

- une première unité (30) de cuisson de verre, comportant une première source (240) de lumière d'activation, laquelle première unité de cuisson de verre est conçue pour produire, en cours de service, une lumière d'activation dirigée vers un assemblage moule (220);

**caractérisé en ce qu'**il comporte en outre :

- une deuxième unité (40) de cuisson de verre, comportant une deuxième source (414) de lumière d'activation et un système de chauffage (418), laquelle source de lumière d'activation est conçue pour envoyer, en cours de service, une lumière d'activation vers un assemblage moule (420), et lequel système de chauffage est conçu pour chauffer l'intérieur de la deuxième unité de cuisson de verre ;
- et un système transporteur (850) conçu pour transporter l'assemblage moule depuis la première unité de cuisson de verre jusqu'à la deuxième unité de cuisson de verre et à travers celle-ci.

**2.** Appareil conforme à la revendication 1, dans lequel la première source de lumière d'activation est une source de lumière ultraviolette.

**3.** Appareil conforme à l'une des revendications 1 à 2, dans lequel la deuxième source de lumière d'activation est une source de lumière ultraviolette.

**4.** Appareil conforme à l'une des revendications 1 à 3, dans lequel la première et la deuxième sources de lumière d'activation ont pratiquement le même spectre d'émission.

**5.** Appareil conforme à l'une des revendications 1 à 4, dans lequel la première et la deuxième sources de lumière d'activation ont un maximum d'intensité lumineuse dans l'intervalle allant à peu près de 385 à 490 nm.

**6.** Appareil conforme à l'une des revendications 1 à 5, dans lequel la première source de lumière d'activation comporte un premier jeu de lampes et un second jeu de lampes, lesquels premier et second jeux de lampes sont placés sur des côtés opposés de la première unité de cuisson.

**7.** Appareil conforme à l'une des revendications 1 à 6, dans lequel la première source de lumière d'activation est conçue pour générer des impulsions de lumière d'activation.

**8.** Appareil conforme à l'une des revendications 1 à 7, dans lequel la deuxième source de lumière d'activation est conçue pour générer des impulsions de lumière d'activation.

**9.** Appareil conforme à l'une des revendications 1 à 8, qui comporte en outre un filtre placé en position directement adjacente à la première source de lumière d'activation, lequel filtre est conçu pour permettre de jouer sur l'intensité de la lumière d'activation émise par la première source de lumière d'activation.

**10.** Appareil conforme à l'une des revendications 1 à 9, qui comporte en outre un filtre placé en position directement adjacente à la deuxième source de lumière d'activation, lequel filtre est conçu pour permettre de jouer sur l'intensité de la lumière d'activation émise par la deuxième source de lumière d'activation.

**11.** Appareil conforme à l'une des revendications 9 à 10, dans lequel le filtre comprend une plaque définissant une ouverture, laquelle plaque est constituée d'un matériau opaque à la lumière d'activation.

**12.** Appareil conforme à l'une des revendications 9 à 10, dans lequel le filtre comprend une plaque définissant une ouverture, laquelle plaque est constituée d'un matériau opaque à la lumière d'activation.

**13.** Appareil conforme à l'une des revendications 1 à 12, qui comporte en outre un distributeur d'air placé à l'intérieur de la deuxième unité de cuisson, lequel distributeur d'air est conçu pour faire circuler, en cours de service, de l'air dans la deuxième unité de cuisson.

**14.** Appareil conforme à l'une des revendications 1 à 13, qui comporte en outre une unité de recuit, laquelle unité de recuit comporte un système de chauffage d'unité de recuit, lequel système de chauffage d'unité de recuit est conçu pour chauffer l'intérieur de l'unité de recuit.

**15.** Appareil conforme à la revendication 14, dans lequel le système de chauffage d'unité de recuit est conçu pour chauffer l'intérieur de l'unité de recuit à une température pouvant aller jusque vers 121 °C (250 °F).

**16.** Appareil conforme à l'une des revendications 14 à 15, dans lequel l'unité de recuit comporte en outre un système transporteur d'unité de recuit, conçu pour transporter l'assemblage moule à travers l'unité de recuit.

**17.** Appareil conforme à l'une des revendications 1 à 16, qui comporte en outre un dispositif programmable de commande, conçu pour commander de façon pratiquement simultanée le fonctionnement de la première unité de cuisson et de la deuxième unité de cuisson, en cours de service.

**18.** Appareil conforme à l'une des revendications 1 à 17, dans lequel la première source de lumière d'activation comporte un premier jeu de lampes et un second jeu de lampes, et qui comporte en outre un dispositif programmable de commande, conçu pour commander individuellement chacun de ces premier et second jeux de lampes.

**19.** Appareil conforme à l'une des revendications 1 à 18, qui comporte en outre un dispositif programmable de commande, conçu pour commander le fonctionnement de la première unité de cuisson en fonction de la prescription de verre de lunettes.

**20.** Appareil conforme à l'une des revendications 1 à 19, dans lequel la première source de lumière d'activation comporte une lampe à fluorescence et dans lequel la première source de lumière d'activation comporte en outre un système de ballast à éclairs, couplé à la lampe à fluorescence.

**21.** Appareil conforme à l'une des revendications 1 à 20, dans lequel la deuxième source de lumière d'activation comporte une lampe à fluorescence et dans lequel la deuxième source de lumière d'activation comporte en outre un système de ballast à éclairs, couplé à la lampe à fluorescence.

**22.** Appareil conforme à l'une des revendications 20 à 21, dans lequel le système de ballast à éclairs comporte un ballast à démarrage instantané et un transformateur.

**23.** Appareil conforme à l'une des revendications 1 à 22, dans lequel la première source de lumière d'activation comporte deux lampes ou plus, et dans lequel on peut faire fonctionner ces lampes indépendamment.

**24.** Appareil conforme à l'une des revendications 1 à 23, dans lequel le système transporteur comporte un élément flexible et continu qui s'étend depuis la première unité de cuisson à travers la deuxième unité de cuisson, lequel élément flexible est conçu pour interagir avec un assemblage moule de manière à transporter l'assemblage moule à travers la première unité de cuisson, jusqu'à la deuxième unité de cuisson et à travers la deuxième unité de cuisson.

**25.** Appareil conforme à l'une des revendications 1 à 24, dans lequel le système transporteur comporte deux transporteurs distincts, parmi lesquels le premier transporteur est conçu pour transporter l'assemblage moule depuis la première unité de cuisson jusqu'à la deuxième unité de cuisson et le deuxième transporteur est conçu pour transporter l'assemblage moule à travers la deuxième unité de cuisson.

**26.** Appareil conforme à l'une des revendications 1 à 25, dans lequel le système transporteur comporte un élément flexible conçu pour interagir avec un assemblage moule et l'élément flexible est couplé à un moteur conçu pour déplacer l'élément flexible dans le système transporteur.

**27.** Appareil conforme à l'une des revendications 1 à 26, lequel appareil est conçu pour qu'un verre de lunettes sensiblement transparent y soit formé en un laps de temps inférieur à une heure.

**28.** Appareil de fabrication de verres de lunettes, conforme à l'une des revendications 1 à 27, comportant une unité de recuit, laquelle unité de recuit comporte un système de chauffage d'unité de recuit, lequel système de chauffage d'unité de recuit est conçu pour chauffer l'intérieur de l'unité de recuit, et lequel appareil est conçu pour qu'un verre de lunettes sensiblement transparent y soit formé en un laps de temps inférieur à une heure.

**29.** Système de fabrication de verre de lunettes, comportant un appareil conforme à l'une des revendications 1 à 28 et comportant en outre un assemblage moule comprenant :

- un premier élément de moule, doté d'une face de coulée et d'une face où il n'y a pas coulée,
- et un deuxième élément de moule, doté d'une face de coulée et d'une face où il n'y a pas coulée, lequel deuxième élément de moule est conçu pour être, en cours de service, placé à distance du premier élément de moule de telle sorte que les faces de coulée du premier élément de moule et du deuxième élément de moule définissent, au moins en partie, une cavité de moule.

**30.** Système conforme à la revendication 29, qui comporte en outre un dispositif programmable de commande, conçu pour commander de façon pratiquement simultanée le fonctionnement de la première unité de cuisson et de la deuxième unité de cuisson, en cours de service.

**31.** Système conforme à l'une des revendications 29 à 30, dans lequel la première source de lumière d'activation comporte un premier jeu de lampes et un second jeu de lampes, et qui comporte en outre un dispositif programmable de commande, conçu pour commander individuellement chacun de ces premier et second jeux de lampes.

**32.** Système conforme à l'une des revendications 29 à 31, qui comporte en outre un dispositif programmable de commande, conçu pour commander le fonctionnement de la première unité de cuisson en fonction de la prescription de verre de lunettes.

**33.** Système conforme à l'une des revendications 29 à 32, dans lequel la première source de lumière d'activation comporte une lampe à fluorescence et dans lequel la première source de lumière d'activation comporte en outre un système de ballast à éclairs, couplé à la lampe à fluorescence.

**34.** Système conforme à l'une des revendications 29 à 33, dans lequel la deuxième source de lumière d'activation comporte une lampe à fluorescence et dans lequel la deuxième source de lumière d'activation comporte en outre un système de ballast à éclairs, couplé à la lampe à fluorescence.

**35.** Système conforme à l'une des revendications 29 à 34, dans lequel l'assemblage moule comporte en outre un joint conçu pour être en prise avec le premier élément de moule et avec le deuxième élément de moule, lequel joint porte au moins quatre saillies distinctes qui servent à écarter l'un de l'autre les éléments de moule et qui sont disposées sur la surface interne du joint, lequel joint comporte en outre une cinquième saillie disposée de telle sorte que, en cours de service, cette saillie est en contact avec l'un des éléments de moule.

**36.** Système conforme à la revendication 35, dans lequel les saillies distinctes au nombre d'au moins quatre que porte le joint sont disposées régulièrement autour de la surface interne du joint.

**37.** Système conforme à l'une des revendications 35 à 36, dans lequel les saillies distinctes au nombre d'au moins quatre que porte le joint sont disposées à intervalles d'à peu près 90° autour de la surface interne du joint.

**38.** Système conforme à l'une des revendications 35 à 37, dans lequel le joint comporte en outre un orifice de remplissage destiné à recevoir une composition de formation de verre pendant que le joint est parfaitement en prise dans l'assemblage moule.

**39.** Système conforme à la revendication 38, dans lequel l'orifice de remplissage s'étend d'une surface interne du joint à une surface externe du joint.

**40.** Système conforme à l'une des revendications 35 à 39, dans lequel la cinquième saillie est placée de manière à être en contact avec le premier élément de moule, le joint comporte en outre un orifice de remplissage destiné à

recevoir une composition de formation de verre pendant que le joint est en prise avec les éléments de moule, et l'orifice de remplissage est situé au voisinage du deuxième élément de moule, en cours de service.

**41.** Système conforme à l'une des revendications 29 à 40, qui comporte en outre un support d'assemblage moule conçu pour supporter l'assemblage moule et comprenant un corps, lequel corps est conçu pour laisser la lumière d'activation atteindre l'assemblage moule, et une indentation pratiquée dans le corps, laquelle indentation est de forme complémentaire à celle de l'assemblage moule.

**42.** Système conforme à la revendication 41, dans lequel l'indentation définit une ouverture, laquelle ouverture est disposée de telle sorte que la lumière d'activation provenant de la première source de lumière d'activation passe à travers cette ouverture et va frapper l'assemblage moule quand celui-ci est en place à l'intérieur de la première unité de cuisson de verre.

**43.** Système conforme à l'une des revendications 41 à 42, dans lequel l'indentation définit une ouverture, laquelle ouverture est disposée de telle sorte que la lumière d'activation provenant de la deuxième source de lumière d'activation passe à travers cette ouverture et va frapper l'assemblage moule quand celui-ci est en place à l'intérieur de la deuxième unité de cuisson de verre.

**44.** Système conforme à l'une des revendications 41 à 43, dans lequel le support d'assemblage moule comporte en outre des indentations supplémentaires destinées à supporter un moule ou un joint de l'assemblage moule.

**45.** Système conforme à l'une des revendications 41 à 44, dans lequel le support d'assemblage moule comporte en outre une nervure disposée sur sa surface de fond, laquelle nervure est conçue pour interagir avec un système transporteur.

**46.** Système conforme à l'une des revendications 29 à 45, qui comporte en outre un dispositif de chauffage de monomères destiné à fournir une composition polymérisable de formation de verre chauffée, comprenant :

- un corps, lequel corps est conçu pour contenir la composition de formation de verre et comporte une ouverture destinée à recevoir un récipient à fluide, ainsi qu'un orifice de sortie,
- un système de chauffage placé dans le corps, destiné à chauffer la composition de formation de verre,
- et une vanne placée à proximité de l'orifice de sortie, laquelle vanne comporte un élément allongé, lequel élément allongé peut être placé en position de fermeture dans l'orifice de sortie et empêche, quand il est en position de fermeture, la composition de formation de verre de s'écouler à travers l'orifice de sortie, et lequel élément allongé peut être placé en position d'ouverture dans l'orifice de sortie et laisse, quand il est en position d'ouverture, la composition de formation de verre s'écouler à travers l'orifice de sortie, en cours de service.

**47.** Système conforme à la revendication 46, qui comporte en outre un dispositif programmable de commande, lequel dispositif programmable de commande est conçu pour commander le fonctionnement de la première unité de cuisson, de la deuxième unité de cuisson, et du dispositif de chauffage de monomères.

**48.** Système de fabrication de verre de lunettes, comportant :

- un assemblage moule comprenant :
    - un premier élément de moule, doté d'une face de coulée et d'une face où il n'y a pas coulée,
    - et un deuxième élément de moule, doté d'une face de coulée et d'une face où il n'y a pas coulée, lequel deuxième élément de moule est conçu pour être, en cours de service, placé à distance du premier élément de moule de telle sorte que les faces de coulée du premier élément de moule et du deuxième élément de moule définissent, au moins en partie, une cavité de moule ;
- un appareil conforme à la revendication 1 ;
- et une composition de formation de verre, conçue pour être placée dans la cavité de moule en cours de service et comprenant :
    - un monomère qui, lorsqu'il est exposé à une lumière d'activation, cuit pour former un verre de lunettes, en cours de service,
    - et un photoamorceur qui amorce la cuisson du monomère en réponse à une exposition à une lumière

d'activation, en cours de service.

**49.** Système conforme à la revendication 48, dans lequel la composition de formation de verre comprend en outre un composé photochrome.

**50.** Système conforme à l'une des revendications 48 à 49, dans lequel la composition de formation de verre comprend en outre un composé qui absorbe la lumière dans le domaine ultraviolet/visible.

**51.** Système conforme à la revendication 48, dans lequel le monomère comprend un monomère fonctionnel bis(allyl-carbonate) à fragment aromatique.

**52.** Système conforme à la revendication 48, dans lequel le monomère comprend un monomère fonctionnel polyéther polyéthylénique à fragment aromatique.

**53.** Système conforme à la revendication 48, dans lequel la composition de monomère comprend un monomère fonctionnel polyéthylénique.

**54.** Système conforme à l'une des revendications 48 à 53, dans lequel la composition de formation de verre comprend en outre une composition de co-amorceur, laquelle composition de co-amorceur comprend une amine.

**55.** Système conforme à la revendication 54, dans lequel la composition de co-amorceur comprend une acryl-amine.

**56.** Système conforme à l'une des revendications 48 à 53, dans lequel la composition de formation de verre comprend en outre une composition de co-amorceur, laquelle composition de co-amorceur comprend une acryl-amine, laquelle acryl-amine englobe les amines monoacrylées, les amines diacrylées et leurs mélanges.

**57.** Système conforme à l'une des revendications 48 à 56, dans lequel le photoamorceur comprend de l'oxyde de bis (2,6-diméthoxybenzoyl)-(2,4,4-triméthylphényl)phosphine.

**58.** Système conforme à l'une des revendications 48 à 57, dans lequel la composition de formation de verre comprend en outre un colorant destiné à produire au sein du verre une coloration de fond.

**59.** Système conforme à l'une des revendications 48 à 58, dans lequel la composition de formation de verre peut cuire pour donner, en moins de 30 minutes environ, un verre pratiquement exempt d'aberrations.

**60.** Système conforme à l'une des revendications 48 à 59, dans lequel la première source de lumière d'activation est une source de lumière ultraviolette.

**61.** Système conforme à l'une des revendications 48 à 60, dans lequel la deuxième source de lumière d'activation est une source de lumière ultraviolette.

**62.** Système conforme à l'une des revendications 48 à 61, dans lequel la première et la deuxième sources de lumière d'activation ont pratiquement le même spectre d'émission.

**63.** Système conforme à l'une des revendications 48 à 62, dans lequel la première et la deuxième sources de lumière d'activation présentent un maximum d'intensité lumineuse dans l'intervalle allant à peu près de 385 à 490 nm.

**64.** Système conforme à l'une des revendications 48 à 63, dans lequel la première source de lumière d'activation comporte un premier jeu de lampes et un second jeu de lampes, lesquels premier et second jeux de lampes sont placés sur des côtés opposés de la première unité de cuisson.

**65.** Système conforme à l'une des revendications 48 à 64, dans lequel la première source de lumière d'activation est conçue pour générer des impulsions de lumière d'activation.

**66.** Système conforme à l'une des revendications 48 à 65, dans lequel la deuxième source de lumière d'activation est conçue pour générer des impulsions de lumière d'activation.

**67.** Système conforme à l'une des revendications 48 à 66, qui comporte en outre un filtre placé en position directement

adjacente à la première source de lumière d'activation, lequel filtre est conçu pour permettre de jouer sur l'intensité de la lumière d'activation émise par la première source de lumière d'activation.

**68.** Système conforme à l'une des revendications 48 à 66, qui comporte en outre un filtre placé en position directement adjacente à la deuxième source de lumière d'activation, lequel filtre est conçu pour permettre de jouer sur l'intensité de la lumière d'activation émise par la deuxième source de lumière d'activation.

**69.** Système conforme à l'une des revendications 67 à 68, dans lequel le filtre comprend une plaque de métal définissant une ouverture.

**70.** Système conforme à l'une des revendications 48 à 69, qui comporte en outre un distributeur d'air placé à l'intérieur de la deuxième unité de cuisson, lequel distributeur d'air est conçu pour faire circuler, en cours de service, de l'air dans la deuxième unité de cuisson.

**71.** Système conforme à l'une des revendications 48 à 70, qui comporte en outre une unité de recuit, laquelle unité de recuit comporte un système de chauffage d'unité de recuit, lequel système de chauffage d'unité de recuit est conçu pour chauffer l'intérieur de l'unité de recuit.

**72.** Système conforme à la revendication 71, dans lequel le système de chauffage d'unité de recuit est conçu pour chauffer l'intérieur de l'unité de recuit à une température pouvant aller jusque vers 121 °C (250 °F).

**73.** Système conforme à l'une des revendications 71 à 72, dans lequel l'unité de recuit comporte en outre un système transporteur d'unité de recuit, conçu pour transporter l'assemblage moule à travers l'unité de recuit.

**74.** Système conforme à l'une des revendications 48 à 73, qui comporte en outre un dispositif programmable de commande, conçu pour commander de façon pratiquement simultanée le fonctionnement de la première unité de cuisson et de la deuxième unité de cuisson, en cours de service.

**75.** Système conforme à l'une des revendications 48 à 74, dans lequel la première source de lumière d'activation comporte un premier jeu de lampes et un second jeu de lampes, et qui comporte en outre un dispositif programmable de commande, conçu pour commander individuellement chacun de ces premier et second jeux de lampes.

**76.** Système conforme à l'une des revendications 48 à 75, qui comporte en outre un dispositif programmable de commande, conçu pour commander le fonctionnement de la première unité de cuisson en fonction de la prescription de verre de lunettes.

**77.** Système conforme à l'une des revendications 48 à 76, dans lequel la première source de lumière d'activation comporte une lampe à fluorescence et dans lequel la première source de lumière d'activation comporte en outre un système de ballast à éclairs, couplé à la lampe à fluorescence.

**78.** Système conforme à l'une des revendications 48 à 77, dans lequel la deuxième source de lumière d'activation comporte une lampe à fluorescence et dans lequel la deuxième source de lumière d'activation comporte en outre un système de ballast à éclairs, couplé à la lampe à fluorescence.

**79.** Système conforme à l'une des revendications 77 à 78, dans lequel le système de ballast à éclairs comporte un ballast à démarrage instantané et un transformateur.

**80.** Système conforme à l'une des revendications 48 à 79, dans lequel la première source de lumière d'activation comporte deux lampes ou plus, et dans lequel on peut faire fonctionner ces lampes indépendamment.

**81.** Système conforme à l'une des revendications 48 à 80, dans lequel le système transporteur comporte un élément flexible et continu qui s'étend depuis la première unité de cuisson à travers la deuxième unité de cuisson, lequel élément flexible est conçu pour interagir avec un assemblage moule de manière à transporter l'assemblage moule à travers la première unité de cuisson, jusqu'à la deuxième unité de cuisson et à travers la deuxième unité de cuisson.

**82.** Système conforme à l'une des revendications 48 à 80, dans lequel le système transporteur comporte deux transporteurs distincts, parmi lesquels le premier transporteur est conçu pour transporter l'assemblage moule depuis

la première unité de cuisson jusqu'à la deuxième unité de cuisson et le deuxième transporteur est conçu pour transporter l'assemblage moule à travers la deuxième unité de cuisson.

**83.** Système conforme à l'une des revendications 48 à 82, dans lequel le système transporteur comporte un élément flexible conçu pour interagir avec un assemblage moule et l'élément flexible est couplé à un moteur conçu pour déplacer l'élément flexible dans le système transporteur.

**84.** Système conforme à l'une des revendications 48 à 83, dans lequel l'assemblage moule comporte en outre un joint conçu pour être en prise avec le premier élément de moule et avec le deuxième élément de moule, lequel joint porte au moins quatre saillies distinctes qui servent à écarter l'un de l'autre les éléments de moule et qui sont disposées sur la surface interne du joint, lequel joint comporte en outre une cinquième saillie disposée de telle sorte que, en cours de service, cette saillie est en contact avec l'un des éléments de moule.

**85.** Système conforme à la revendication 84, dans lequel les saillies distinctes au nombre d'au moins quatre que porte le joint sont disposées régulièrement autour de la surface interne du joint.

**86.** Système conforme à l'une des revendications 84 à 85, dans lequel les saillies distinctes au nombre d'au moins quatre que porte le joint sont disposées à intervalles d'à peu près 90° autour de la surface interne du joint.

**87.** Système conforme à l'une des revendications 84 à 86, dans lequel le joint comporte en outre un orifice de remplissage destiné à recevoir une composition de formation de verre pendant que le joint est parfaitement en prise dans l'assemblage moule.

**88.** Système conforme à la revendication 87, dans lequel l'orifice de remplissage s'étend d'une surface interne du joint à une surface externe du joint.

**89.** Système conforme à l'une des revendications 84 à 88, dans lequel la cinquième saillie est placée de manière à être en contact avec le premier élément de moule, le joint comporte en outre un orifice de remplissage destiné à recevoir une composition de formation de verre pendant que le joint est en prise avec les éléments de moule, et l'orifice de remplissage est situé au voisinage du deuxième élément de moule, en cours de service.

**90.** Système conforme à l'une des revendications 48 à 89, qui comporte en outre un support d'assemblage moule conçu pour supporter l'assemblage moule et comprenant un corps, lequel corps est conçu pour laisser la lumière d'activation atteindre l'assemblage moule, et une indentation pratiquée dans le corps, laquelle indentation est de forme complémentaire à celle de l'assemblage moule.

**91.** Système conforme à la revendication 90, dans lequel l'indentation définit une ouverture, laquelle ouverture est disposée de telle sorte que la lumière d'activation provenant de la première source de lumière d'activation passe à travers cette ouverture et va frapper l'assemblage moule quand celui-ci est en place à l'intérieur de la première unité de cuisson de verre.

**92.** Système conforme à l'une des revendications 90 à 91, dans lequel l'indentation définit une ouverture, laquelle ouverture est disposée de telle sorte que la lumière d'activation provenant de la deuxième source de lumière d'activation passe à travers cette ouverture et va frapper l'assemblage moule quand celui-ci est en place à l'intérieur de la deuxième unité de cuisson de verre.

**93.** Système conforme à l'une des revendications 90 à 92, dans lequel le support d'assemblage moule comporte en outre des indentations supplémentaires destinées à supporter un moule ou un joint de l'assemblage moule.

**94.** Système conforme à l'une des revendications 90 à 93, dans lequel le support d'assemblage moule comporte en outre une nervure disposée sur sa surface de fond, laquelle nervure est conçue pour interagir avec un système transporteur.

**95.** Système conforme à l'une des revendications 48 à 94, qui comporte en outre un dispositif de chauffage de monomères destiné à fournir une composition polymérisable de formation de verre chauffée, comprenant :

- un corps, lequel corps est conçu pour contenir la composition de formation de verre et comporte une ouverture destinée à recevoir un récipient à fluide, ainsi qu'un orifice de sortie,

- un système de chauffage placé dans le corps, destiné à chauffer la composition de formation de verre,
- et une vanne placée à proximité de l'orifice de sortie, laquelle vanne comporte un élément allongé, lequel élément allongé peut être placé en position de fermeture dans l'orifice de sortie et empêche, quand il est en position de fermeture, la composition de formation de verre de s'écouler à travers l'orifice de sortie, et lequel élément allongé peut être placé en position d'ouverture dans l'orifice de sortie et laisse, quand il est en position d'ouverture, la composition de formation de verre s'écouler à travers l'orifice de sortie, en cours de service.

**96.** Système conforme à la revendication 95, qui comporte en outre un dispositif programmable de commande, lequel dispositif programmable de commande est conçu pour commander le fonctionnement de la première unité de cuisson, de la deuxième unité de cuisson, et du dispositif de chauffage de monomères.

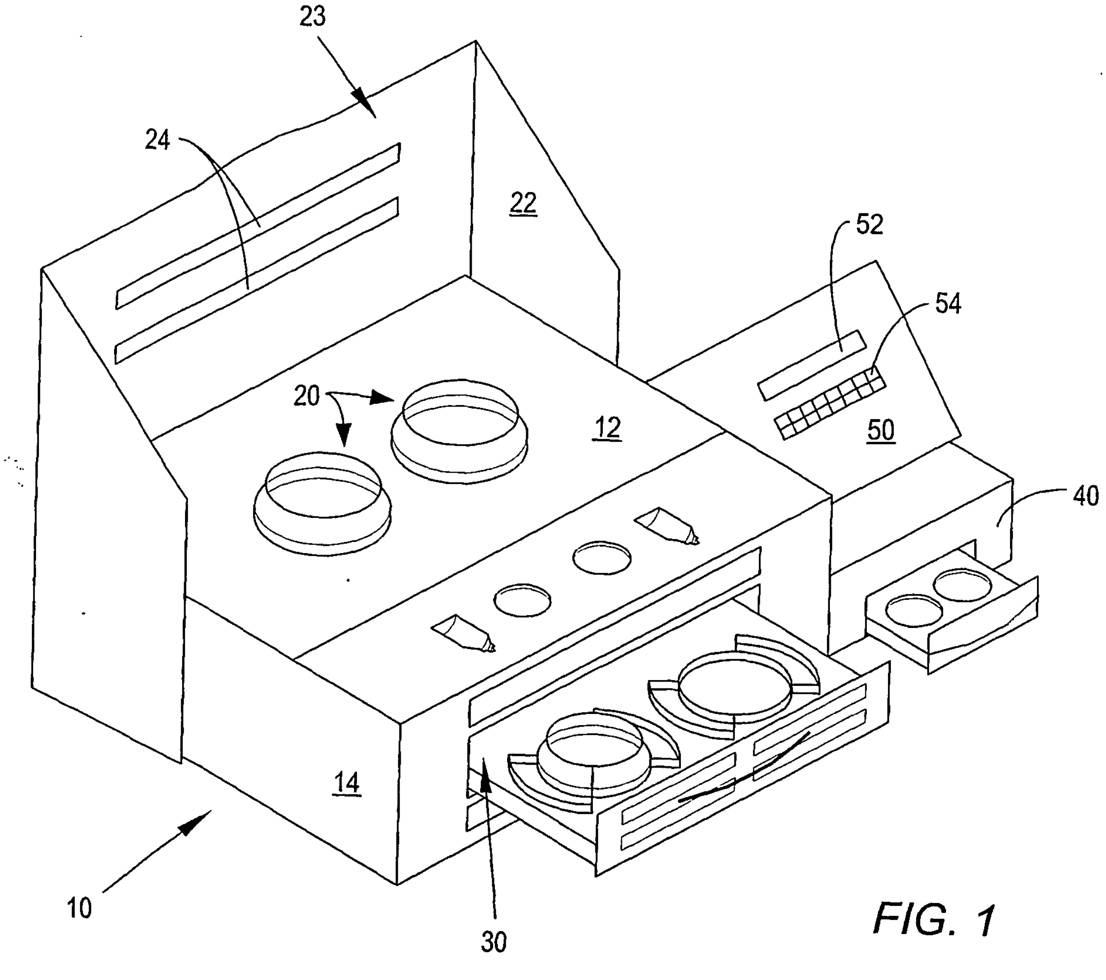


FIG. 1

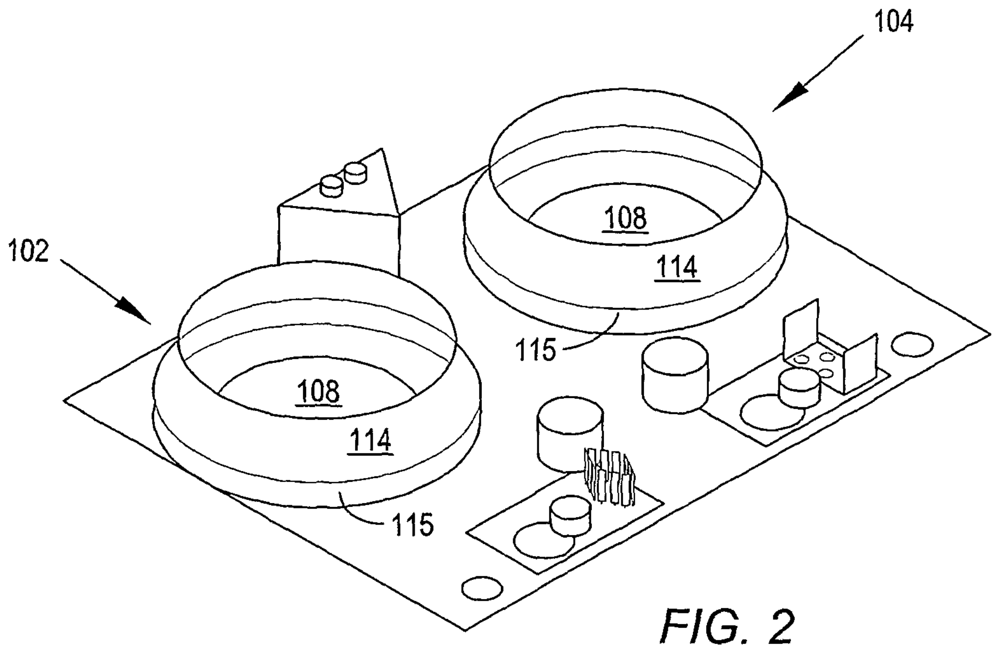


FIG. 2

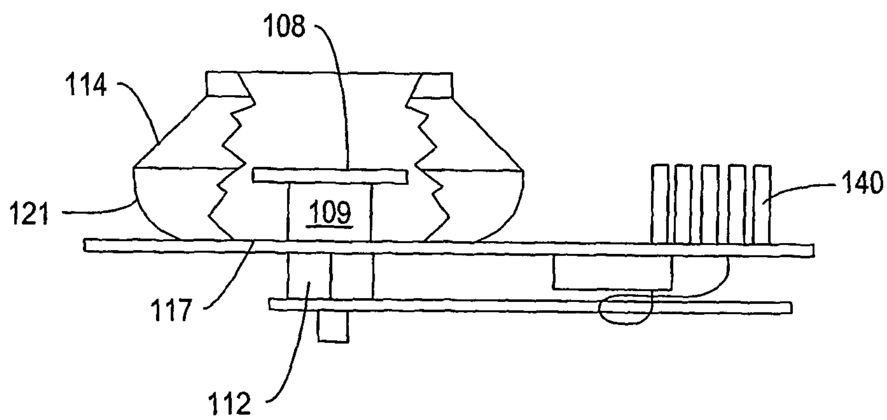


FIG. 3

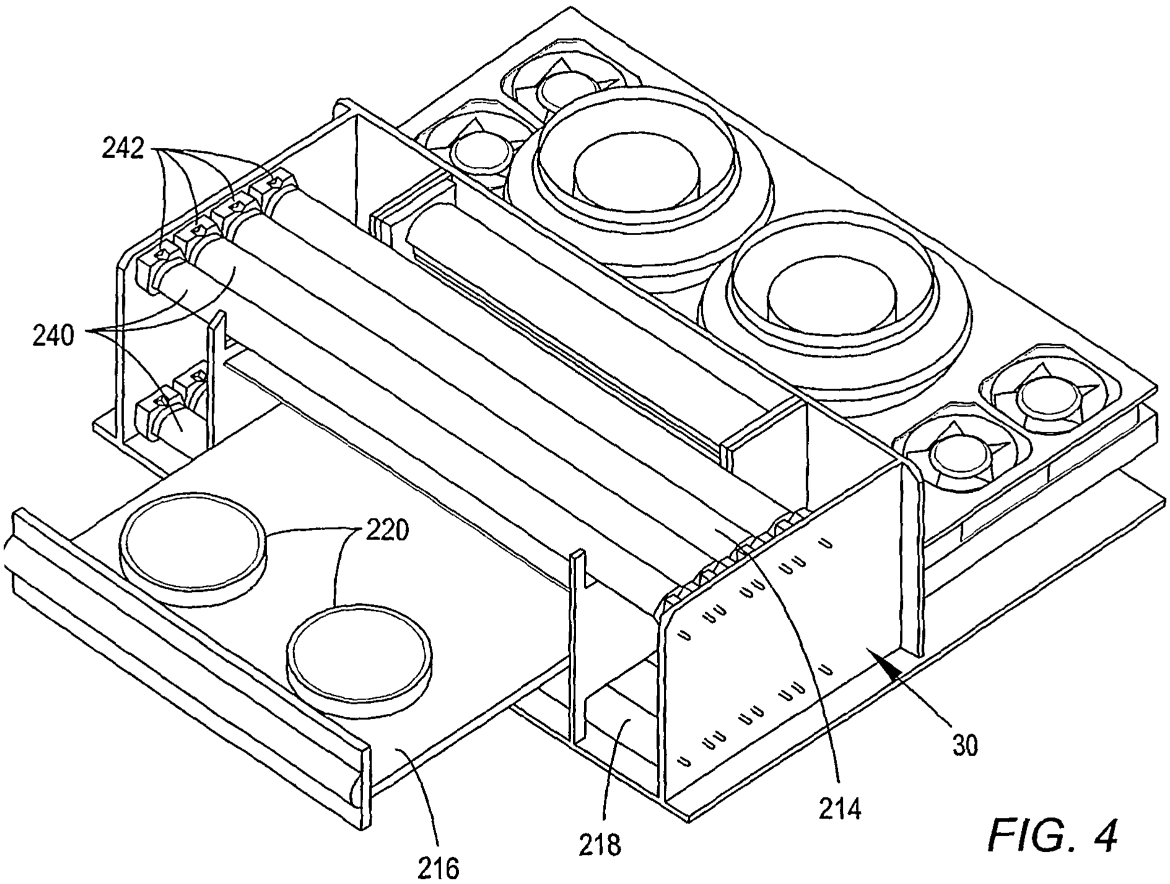


FIG. 4

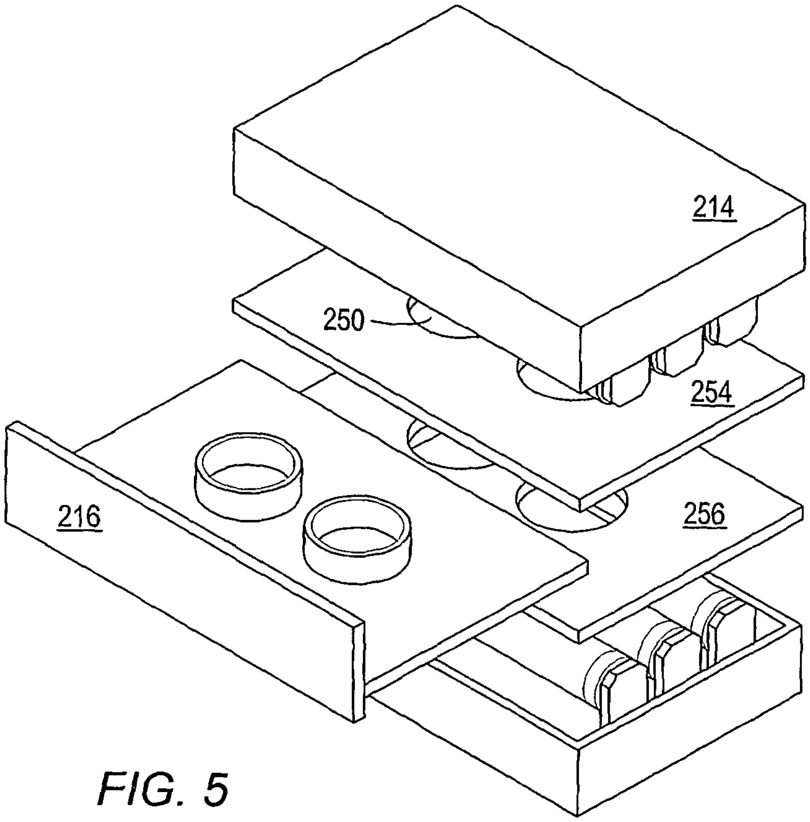


FIG. 5

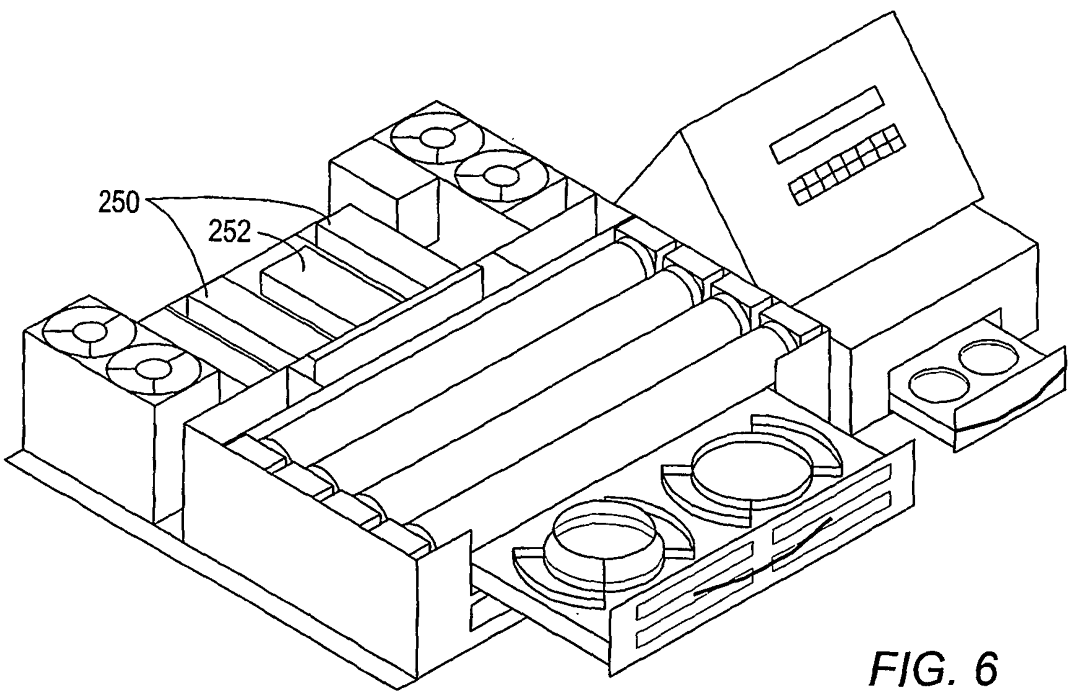


FIG. 6

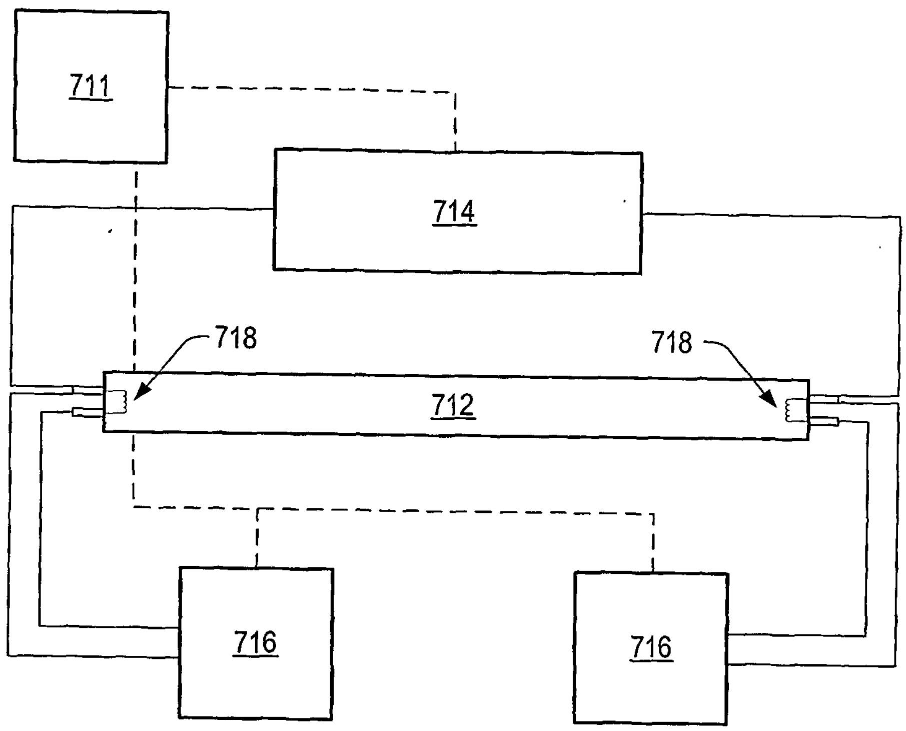
711
714
718
718
712
716
716

FIG. 7

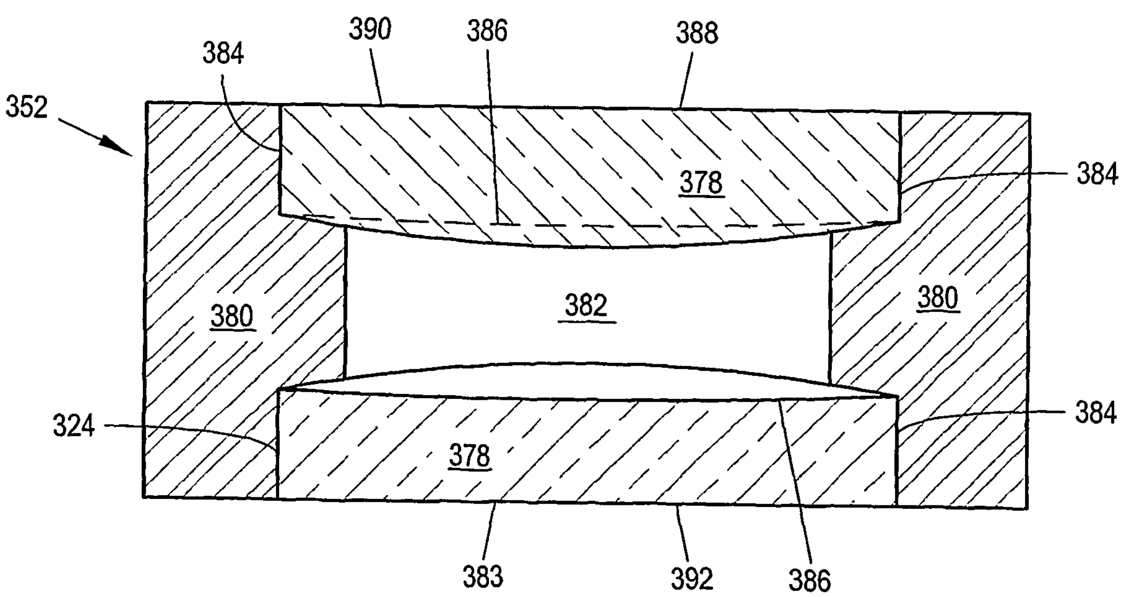
352
384
390
386
388
384
378
380
382
380
324
384
378
383
392
386

FIG. 8

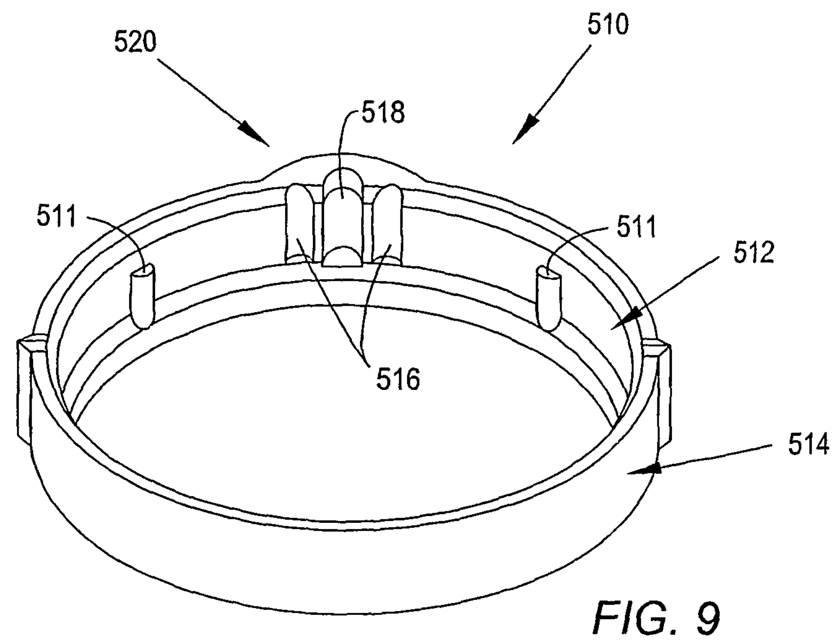
520
510
518
511
511
512
516
514

FIG. 9

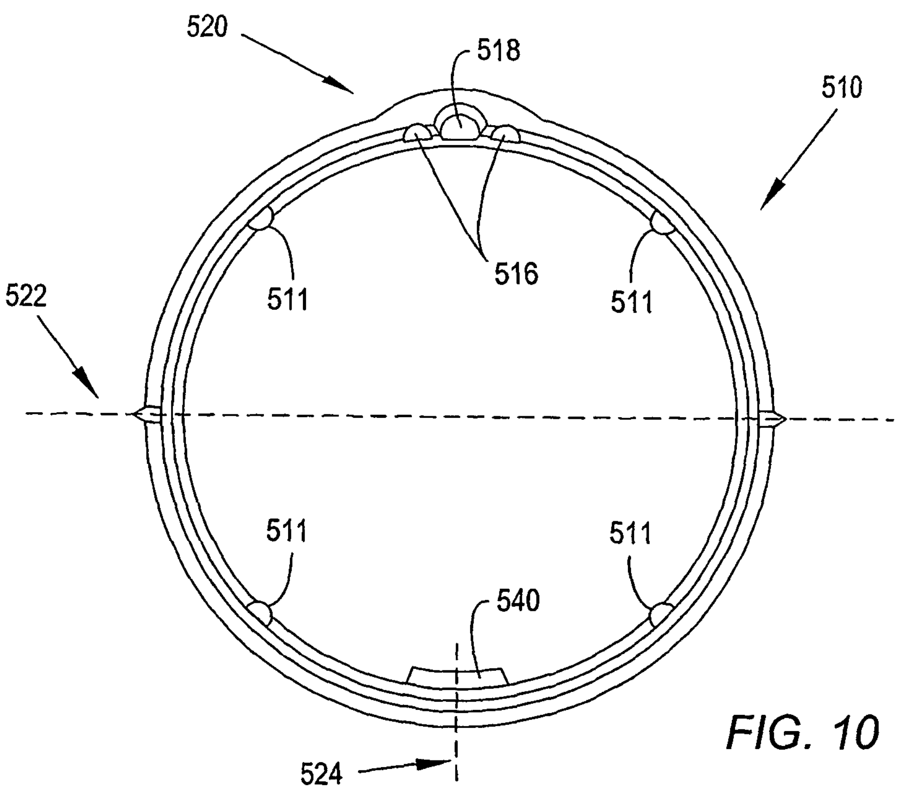
520
518
510
516
511
511
522
511
511
540
524

FIG. 10

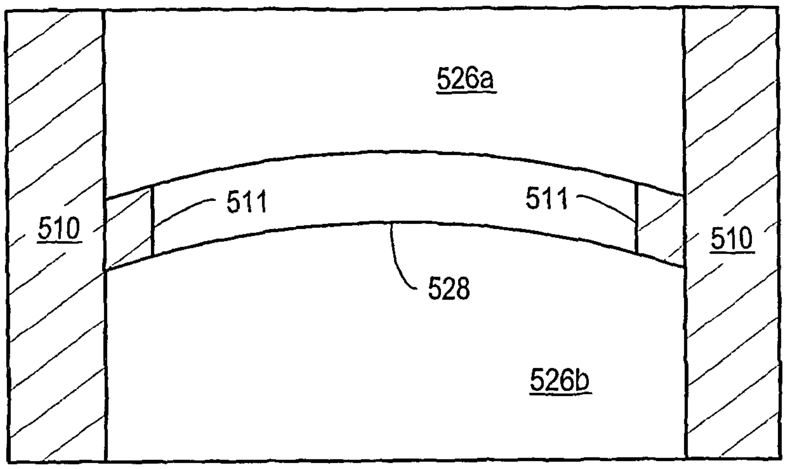


FIG. 11

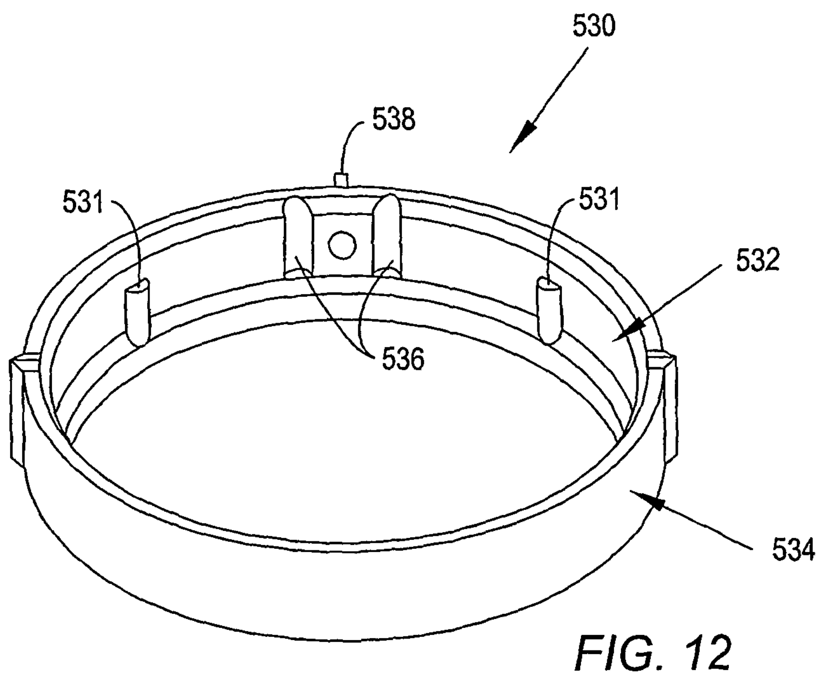


FIG. 12

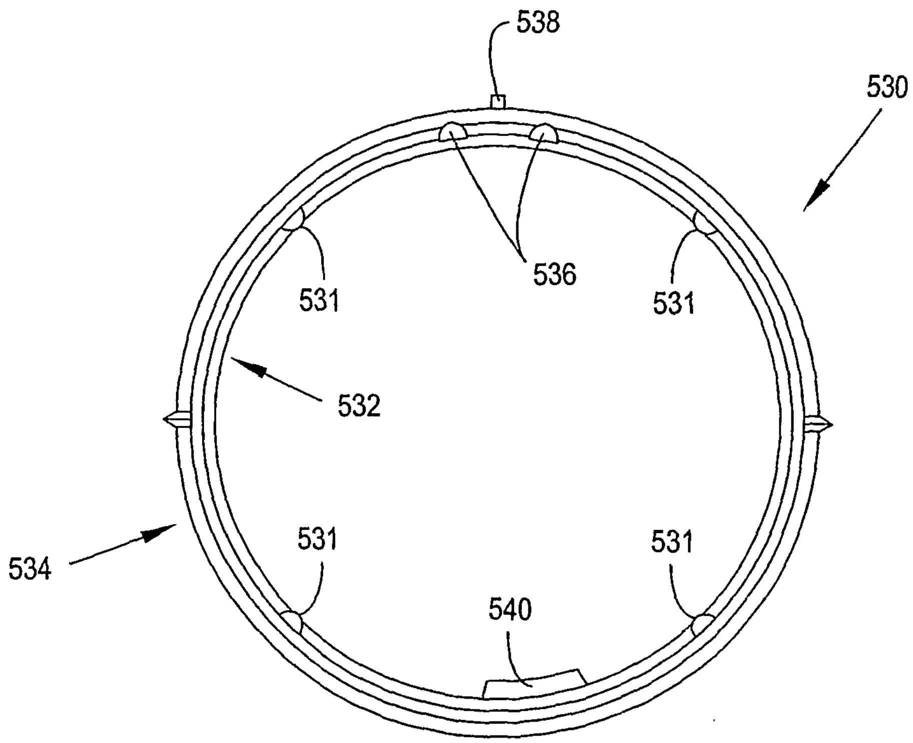


FIG. 13

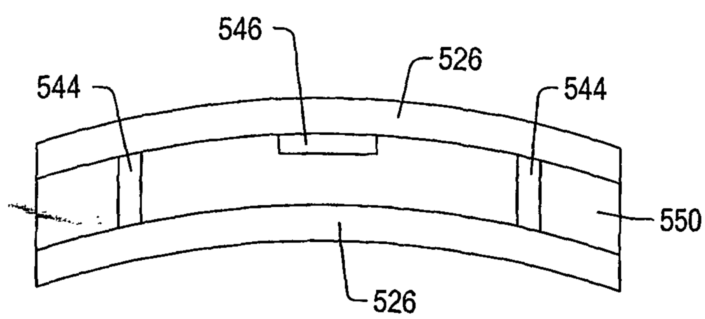


FIG. 14

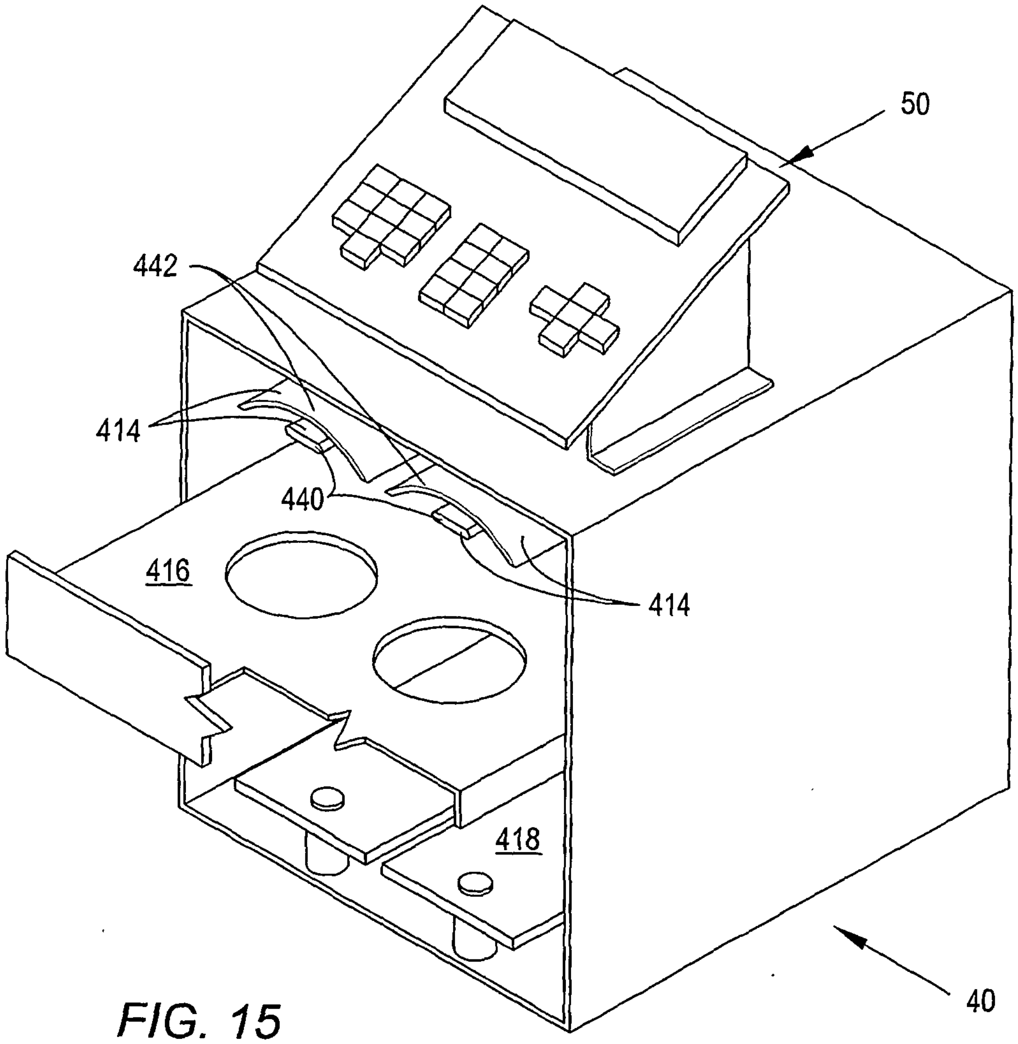


FIG. 15

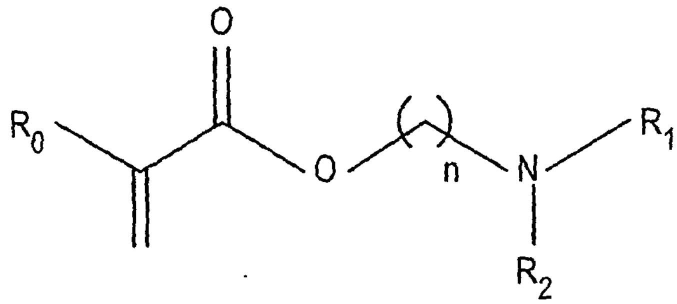

(A)

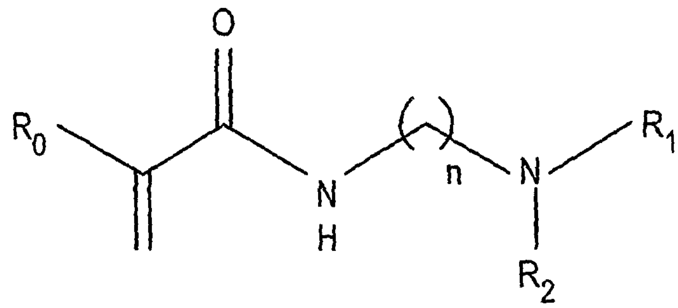

(B)

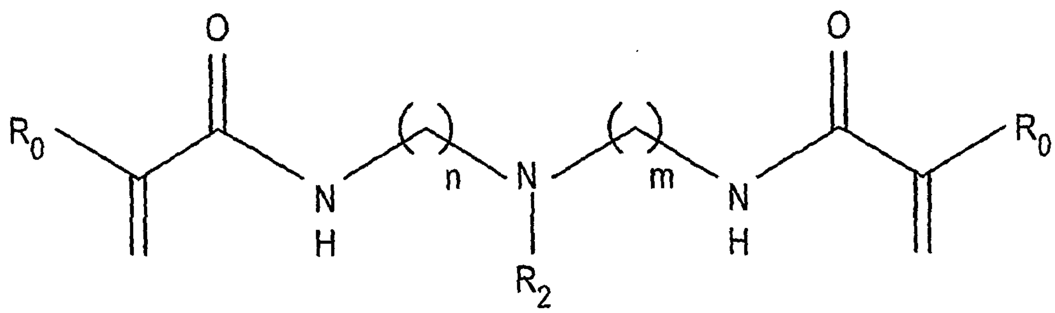

(C)

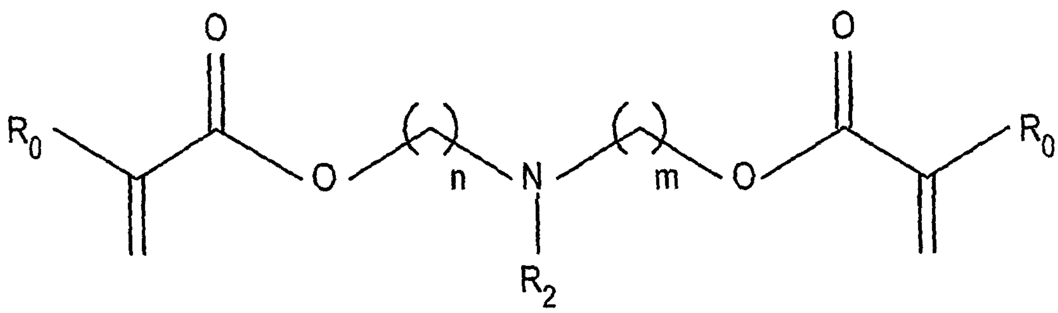

(D)

*FIG. 16*

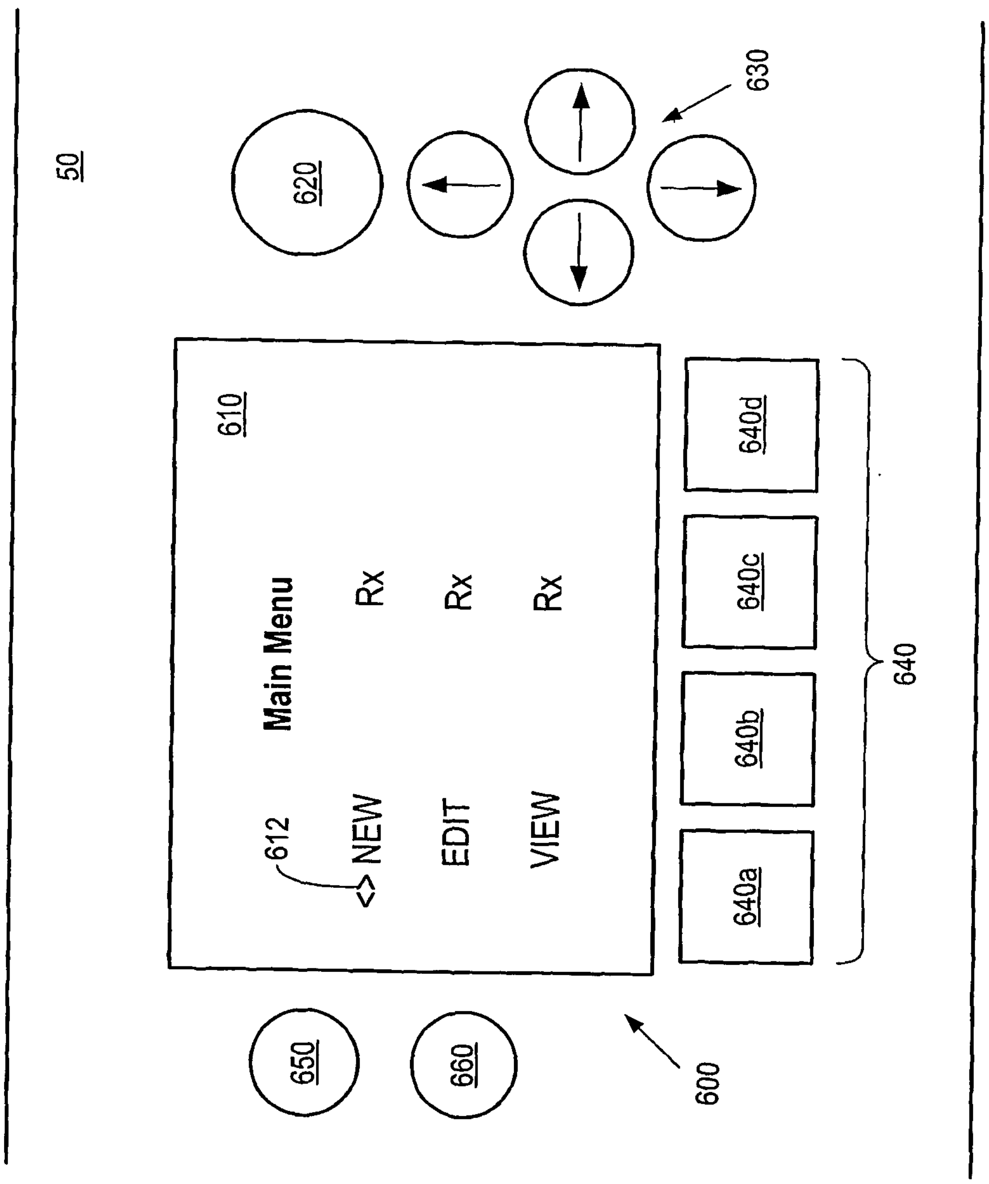
50
620
630
610
Main Menu
612
NEW
EDIT
VIEW
Rx
Rx
Rx
640a
640b
640c
640d
640
650
660
600

FIG. 17

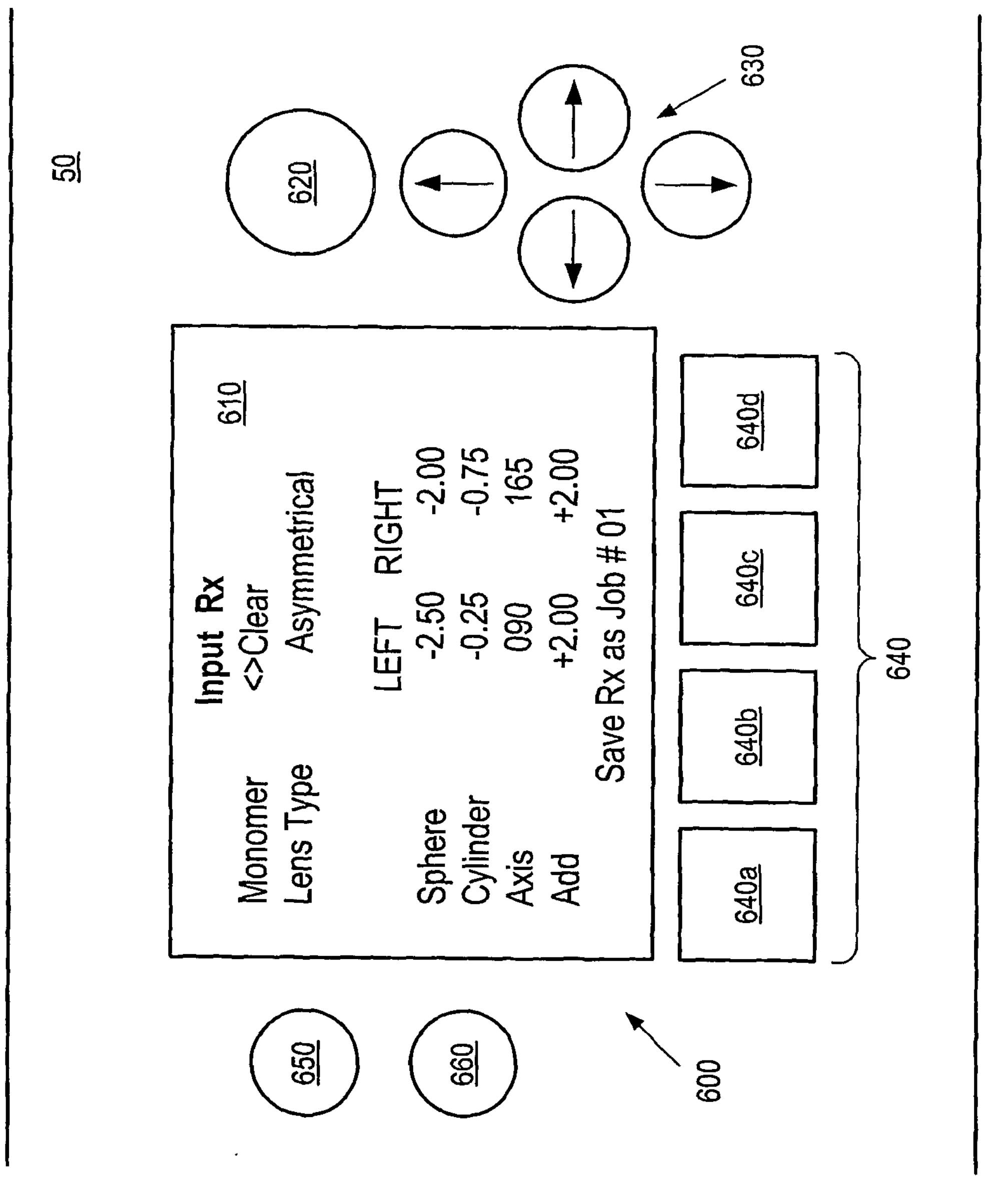
50
620
630
Input Rx
610
Monomer <>Clear
Lens Type Asymmetrical
LEFT RIGHT
Sphere -2.50 -2.00
Cylinder -0.25 -0.75
Axis 090 165
Add +2.00 +2.00
Save Rx as Job # 01
640a
640b
640c
640d
640
650
660
600

FIG. 18

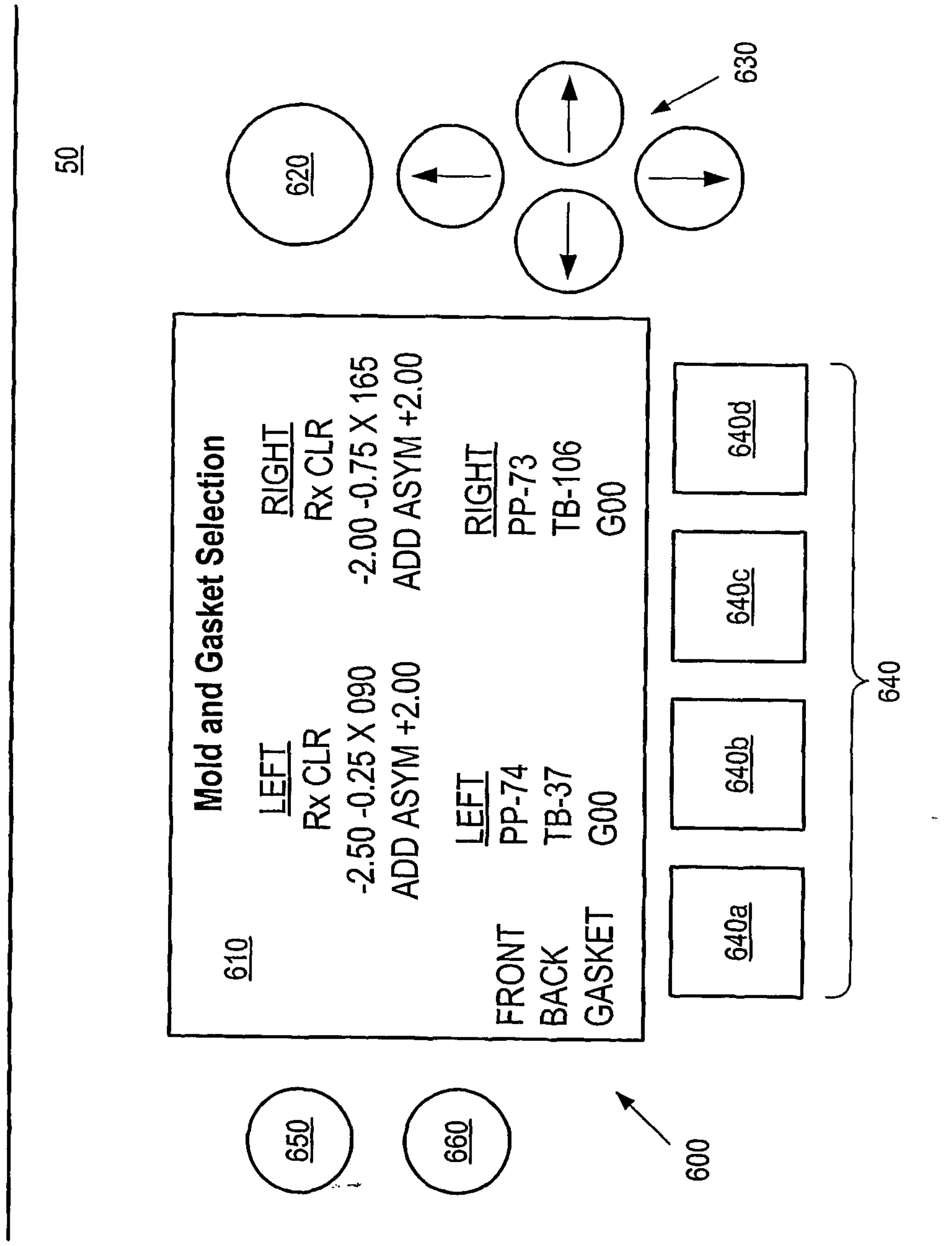
50
620
630
610
Mold and Gasket Selection
LEFT
Rx CLR
-2.50 -0.25 X 090
ADD ASYM +2.00
RIGHT
Rx CLR
-2.00 -0.75 X 165
ADD ASYM +2.00
LEFT
RIGHT
FRONT
BACK
GASKET
PP-74
TB-37
G00
PP-73
TB-106
G00
640a
640b
640c
640d
640
650
660
600

FIG. 19

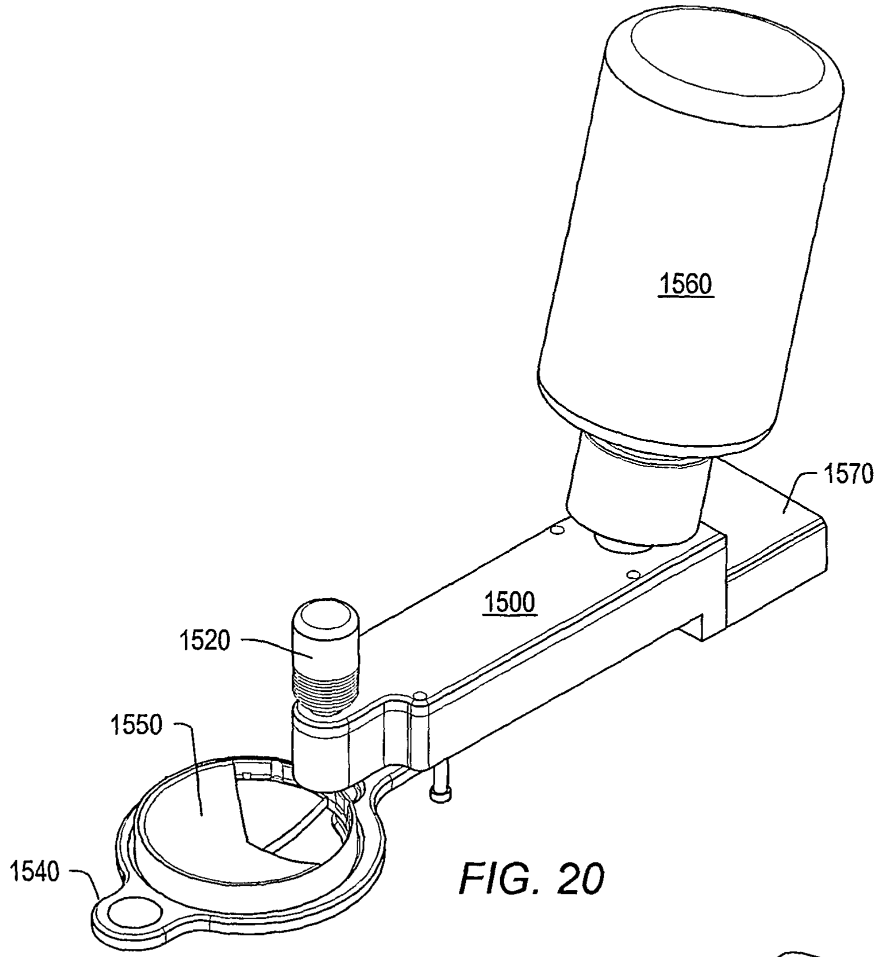


FIG. 20

FIG. 21

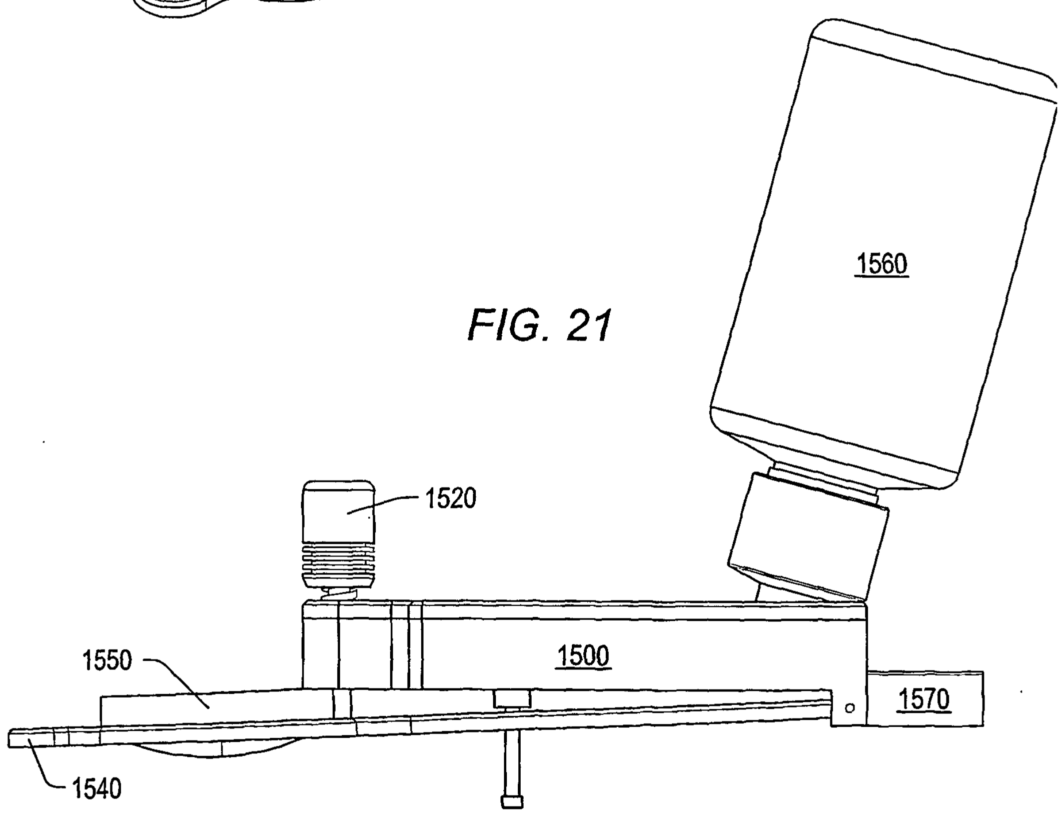

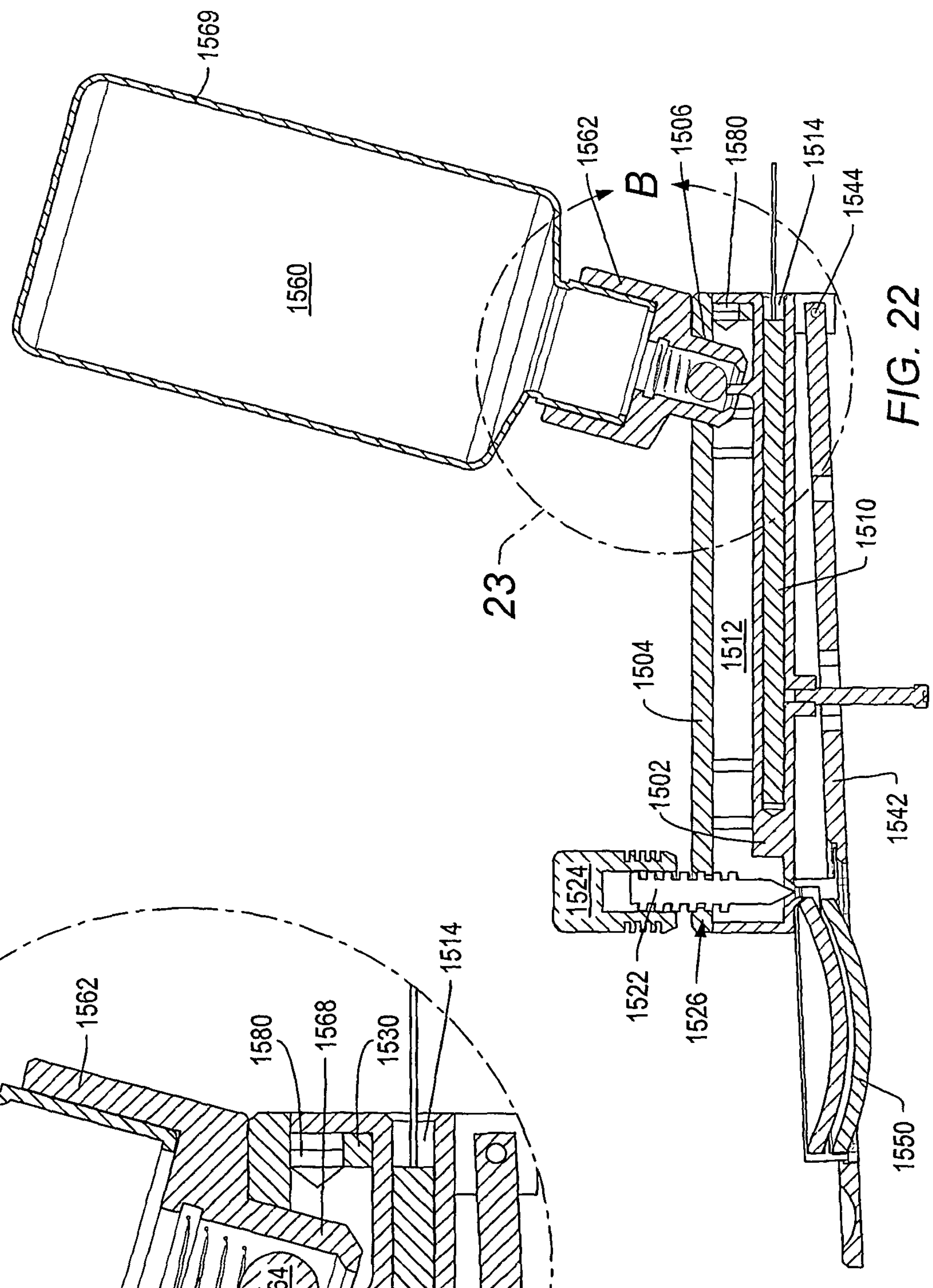
1569
1560
1562
B
1506
1580
1514
1544
23
1510
1512
1504
1502
1542
1524
1522
1526
1550

FIG. 22

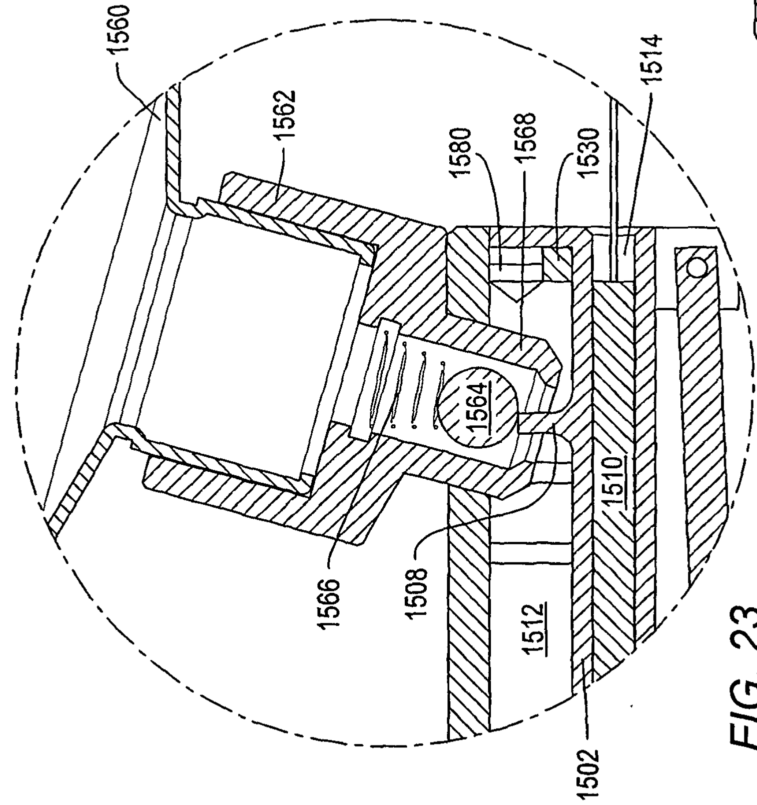
1560
1562
1580
1568
1530
1514
1564
1510
1566
1508
1512
1502

FIG. 23

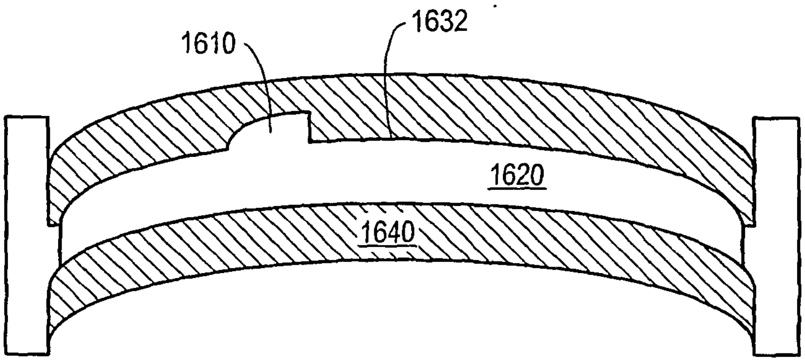
1610
1632
1620
1640

FIG. 24

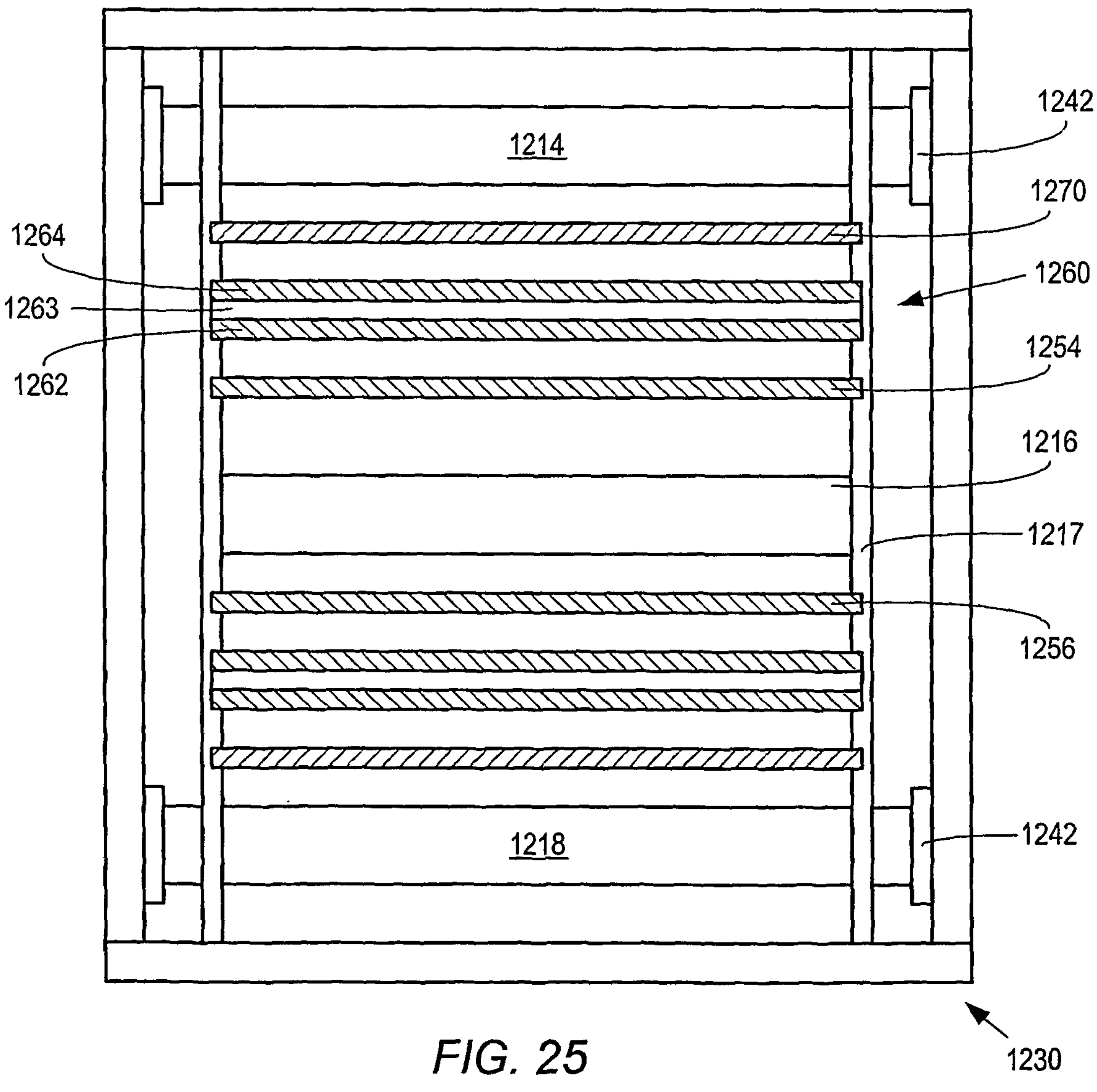
1242
1214
1270
1264
1260
1263
1262
1254
1216
1217
1256
1218
1242
1230

FIG. 25

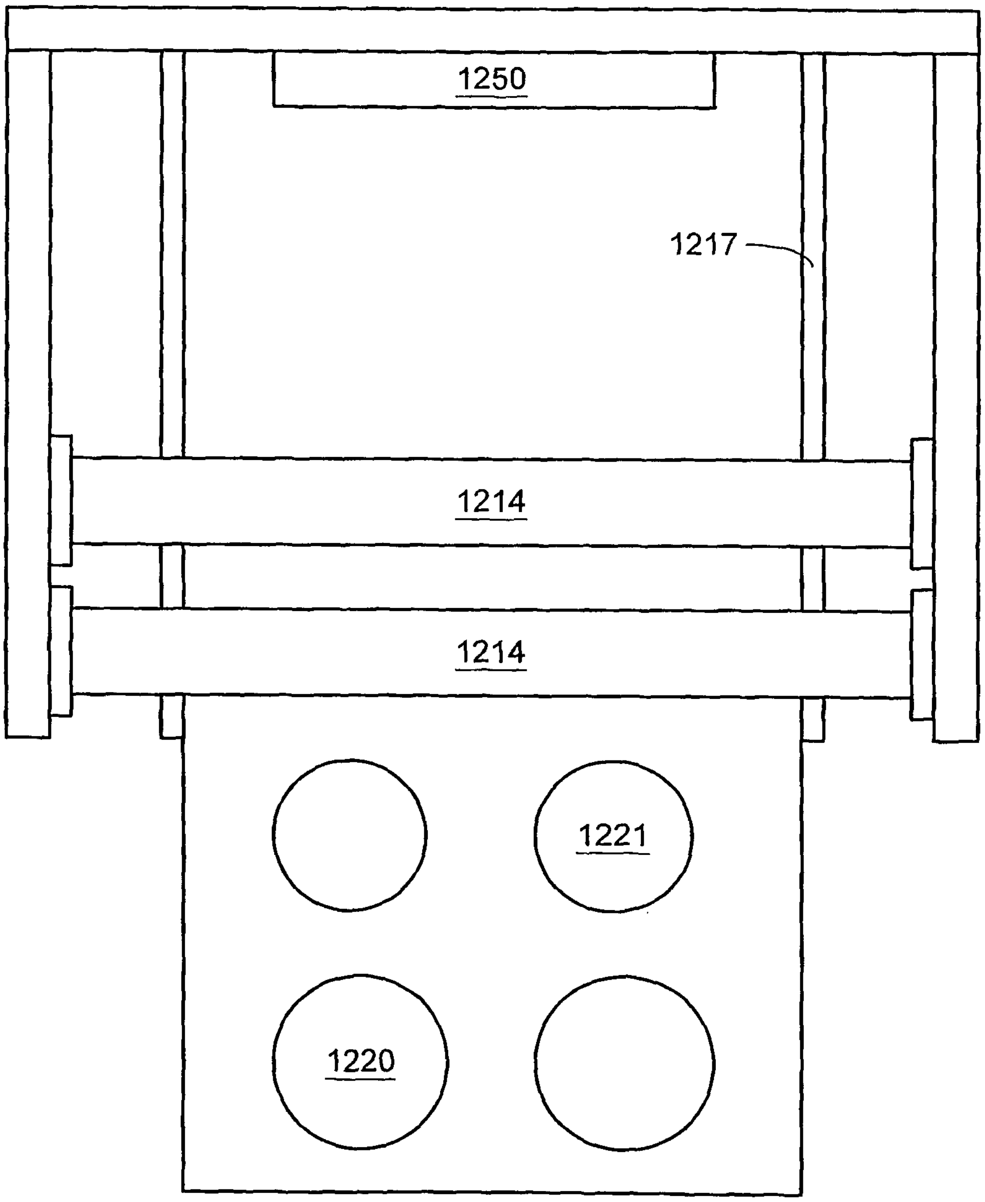


FIG. 26

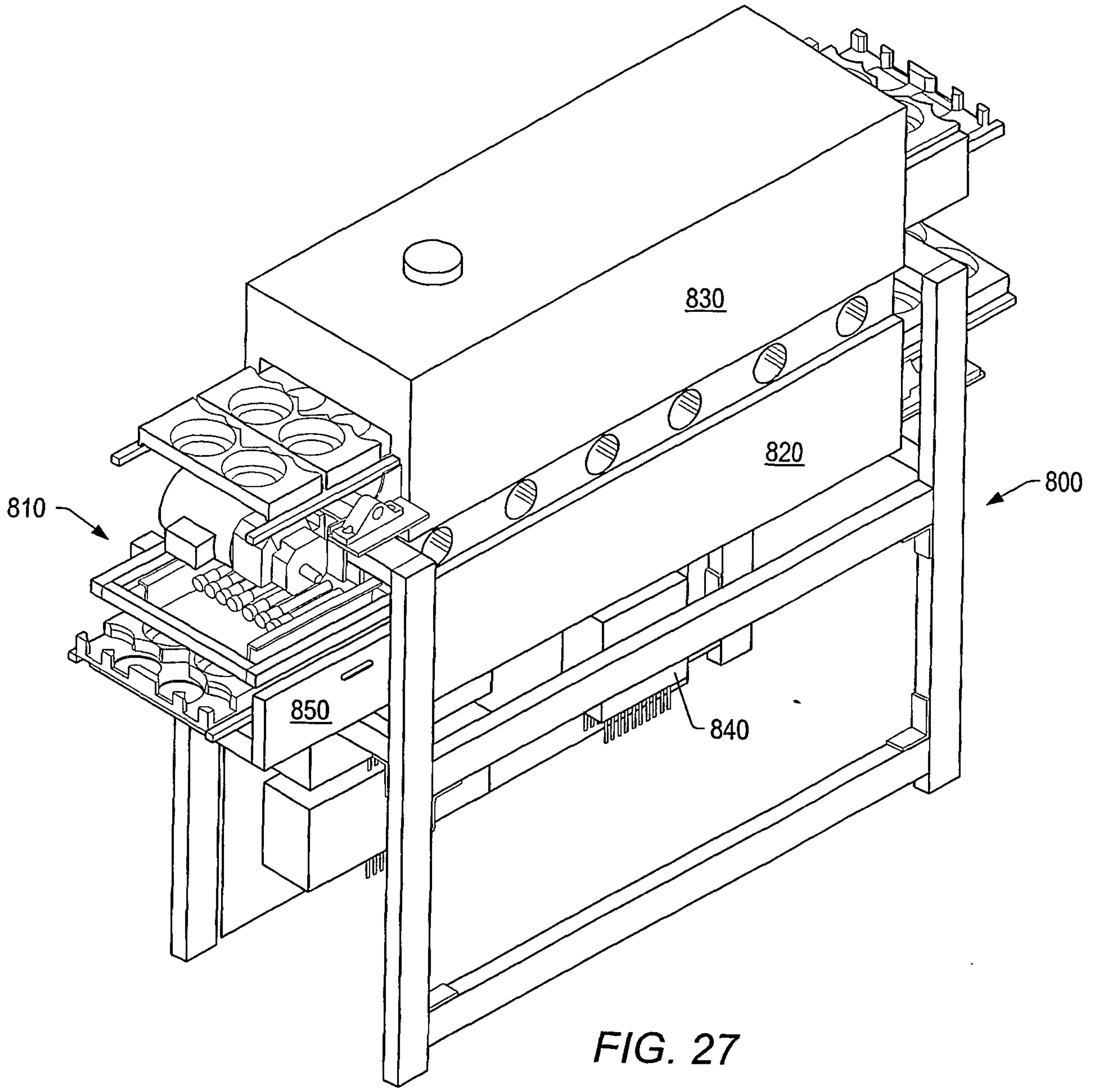


FIG. 27

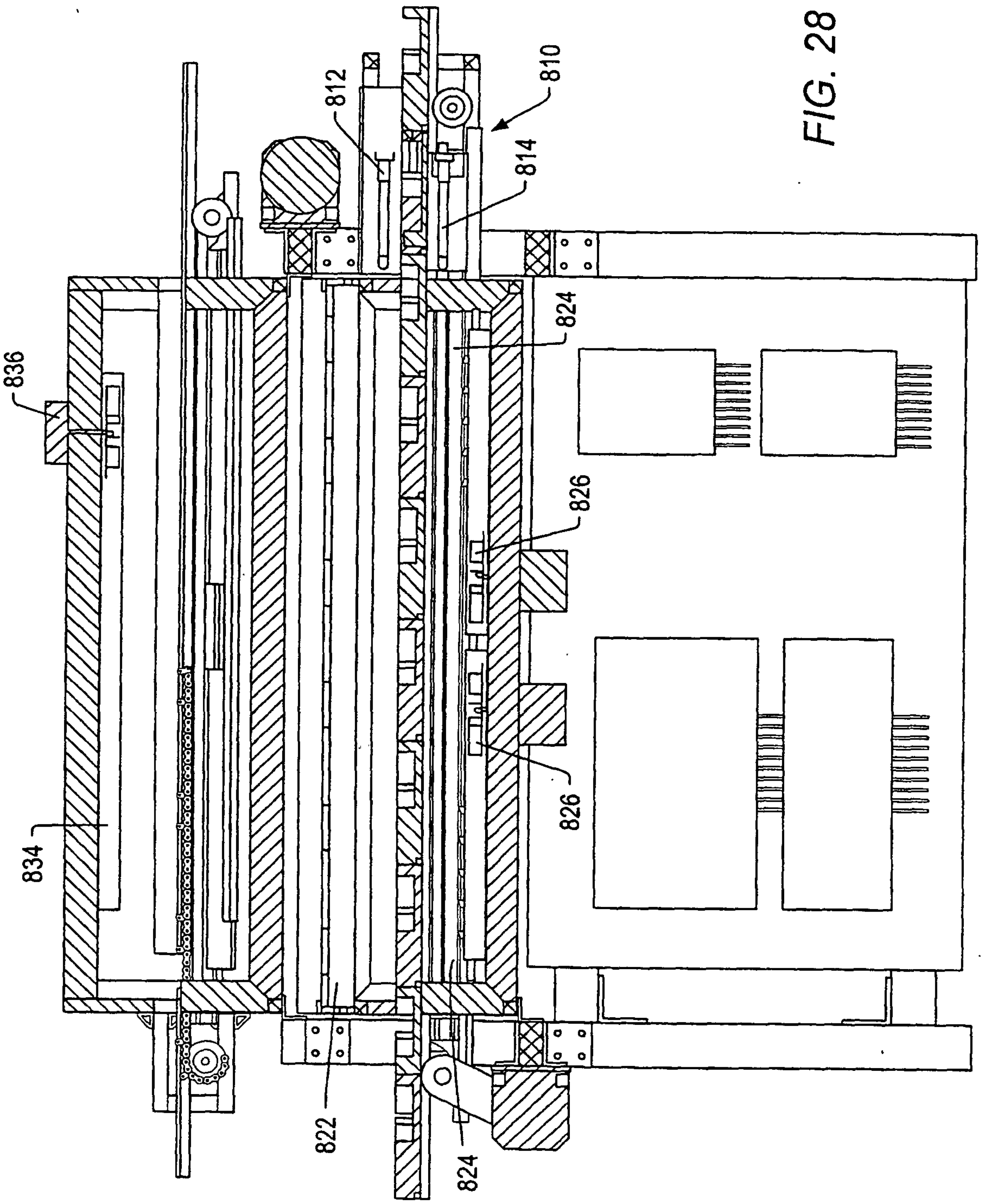


FIG. 28

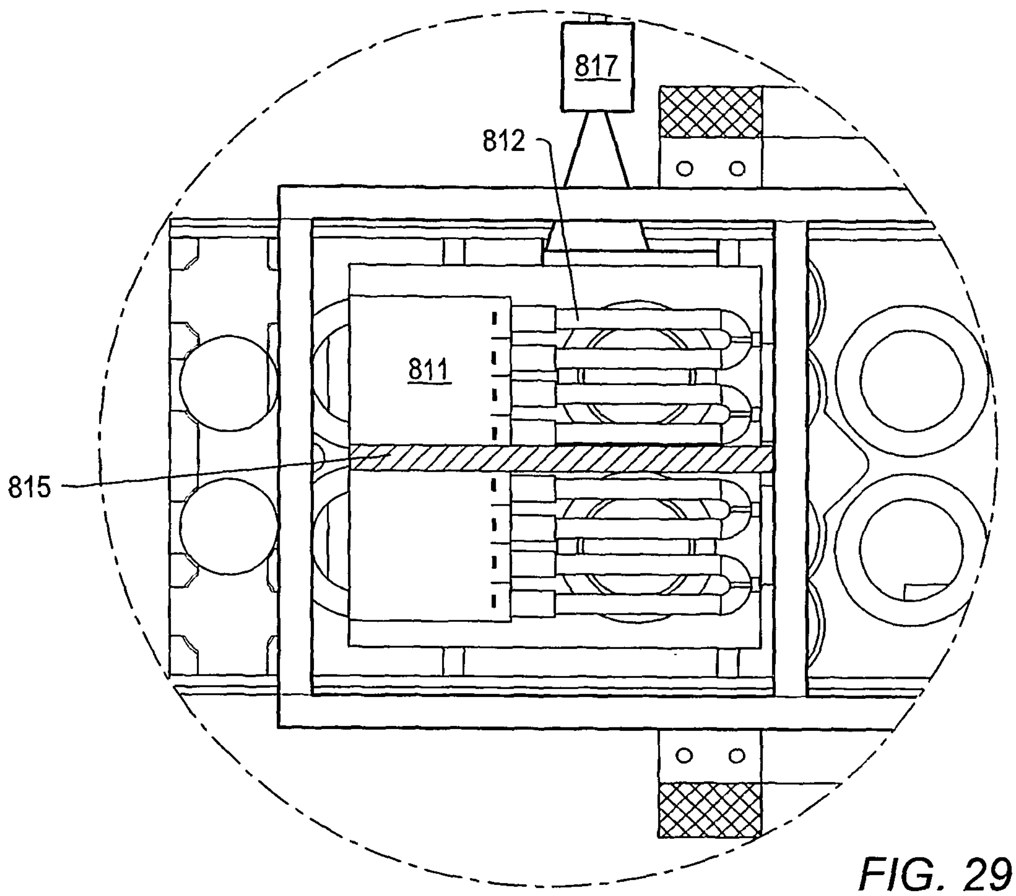


FIG. 29

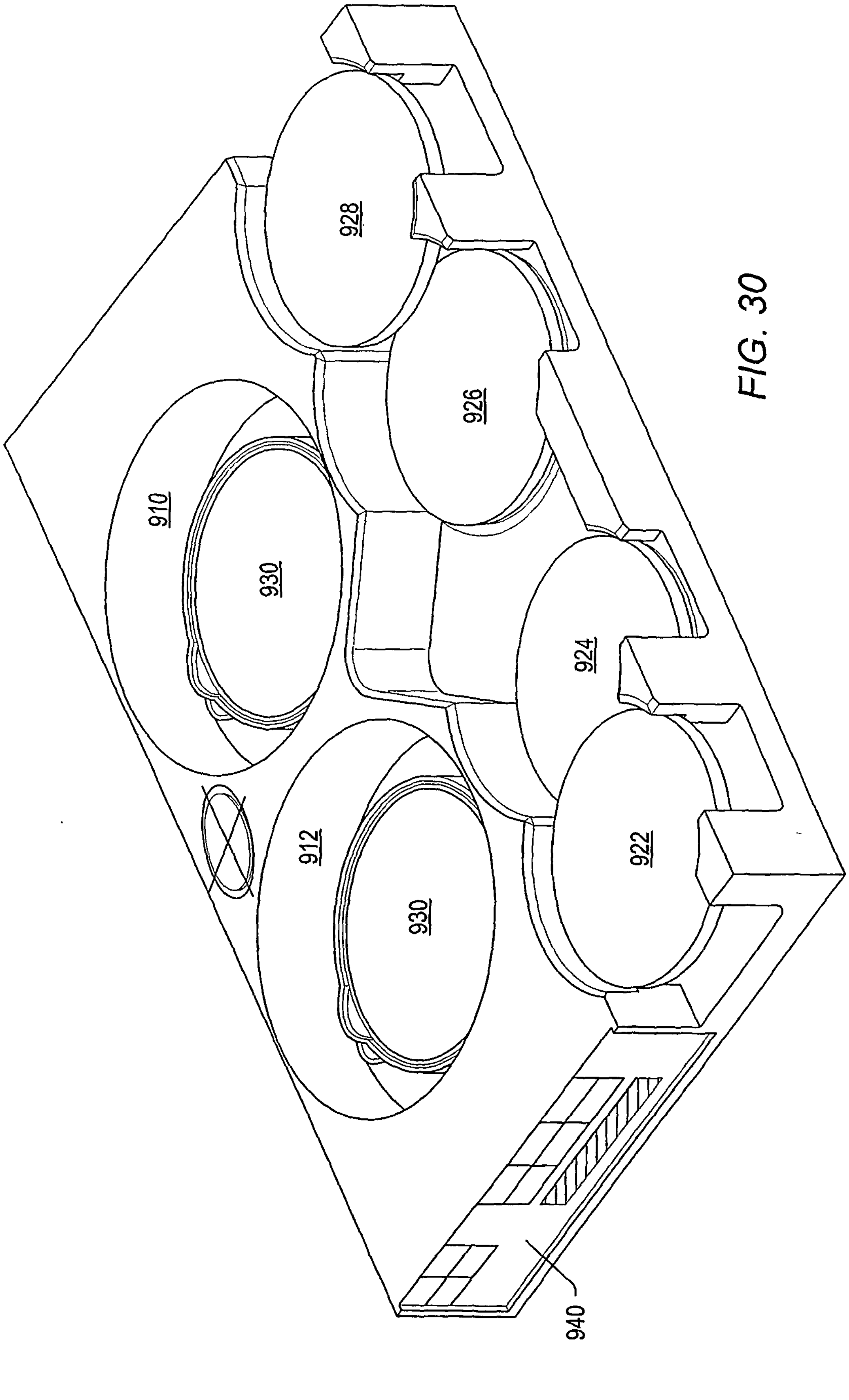


FIG. 30

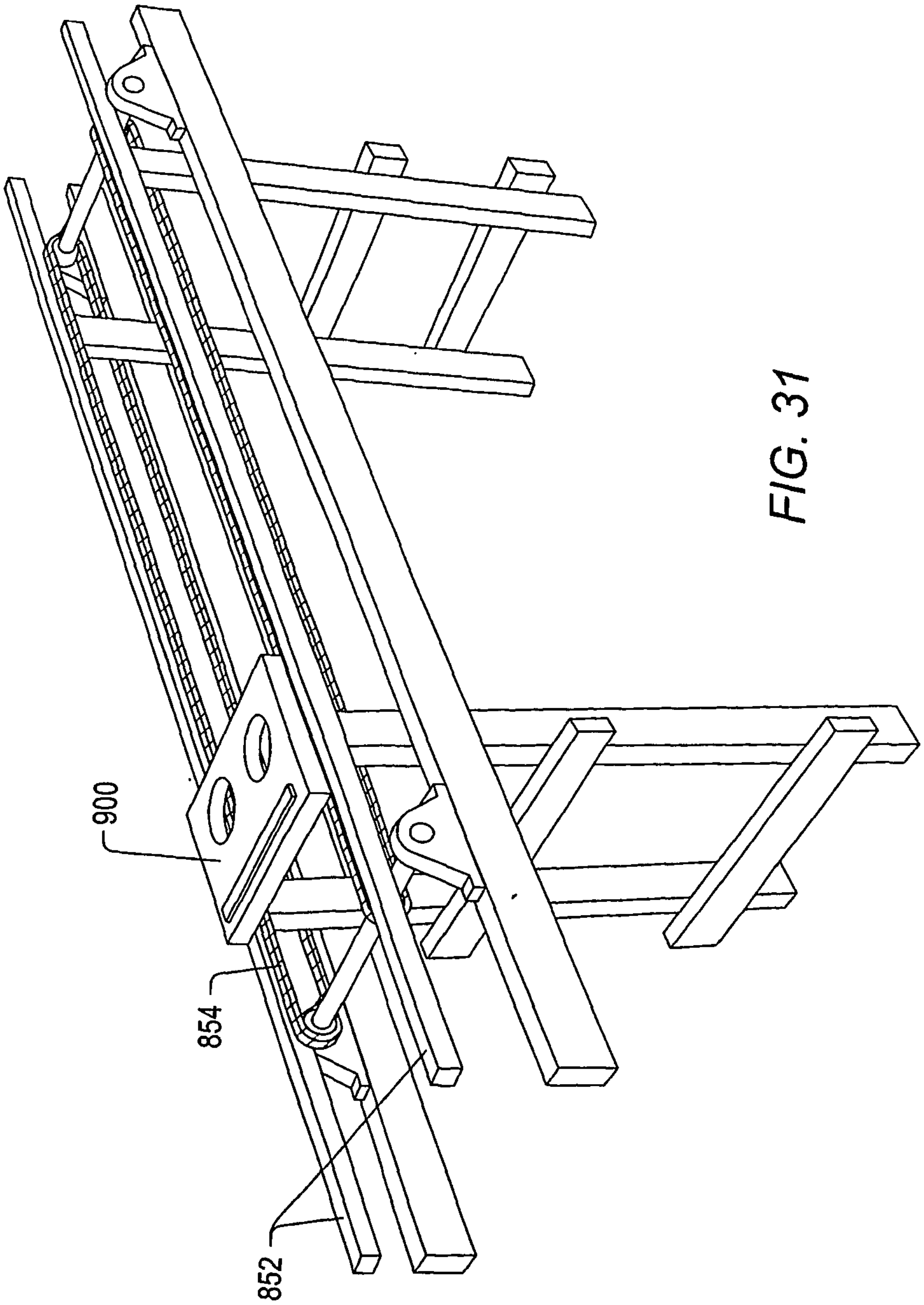


FIG. 31

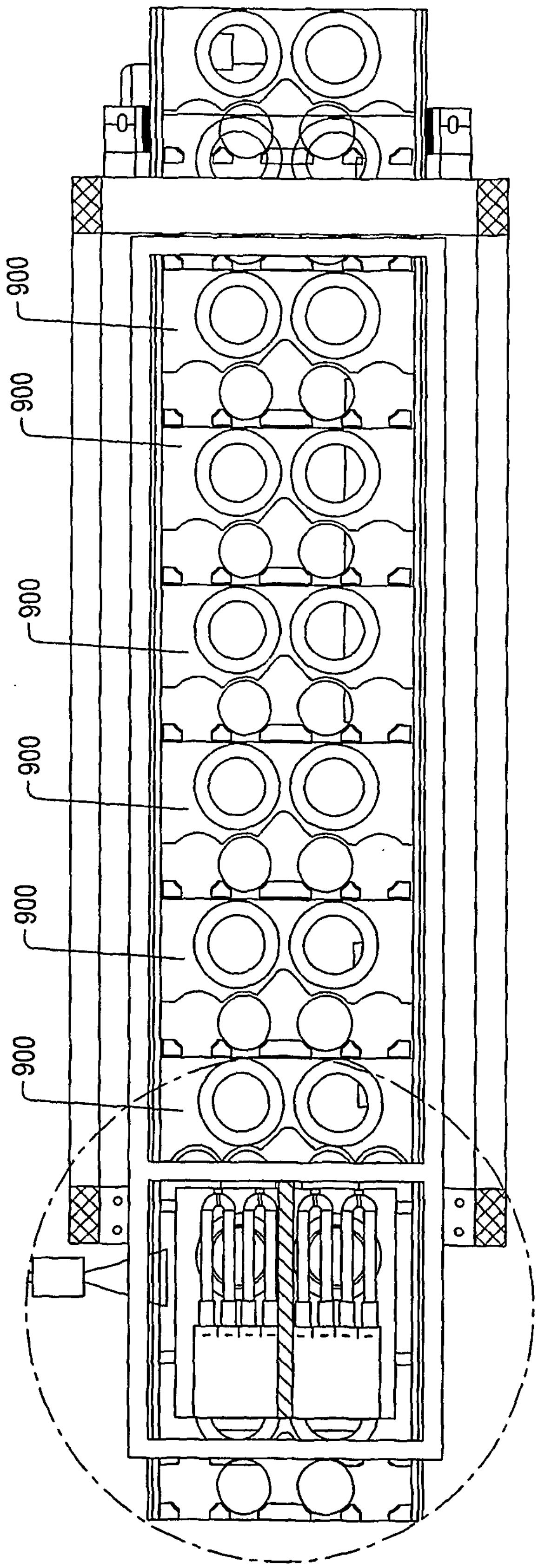


FIG. 32

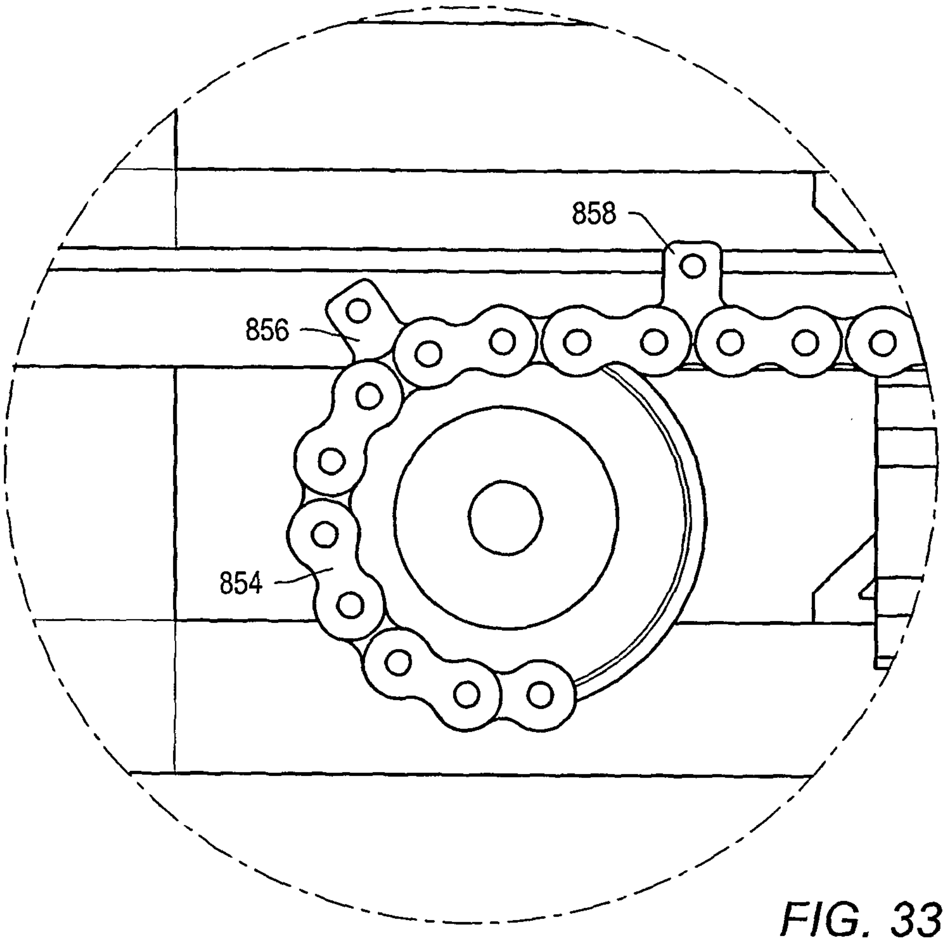


FIG. 33

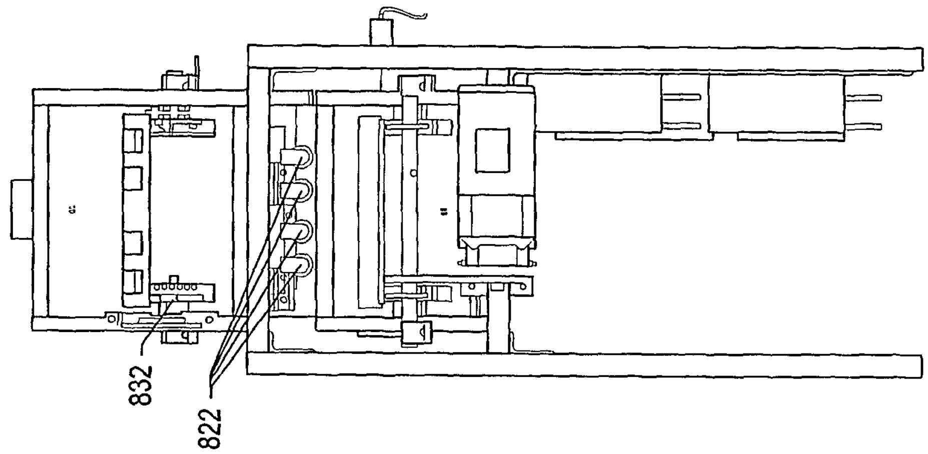


FIG. 35

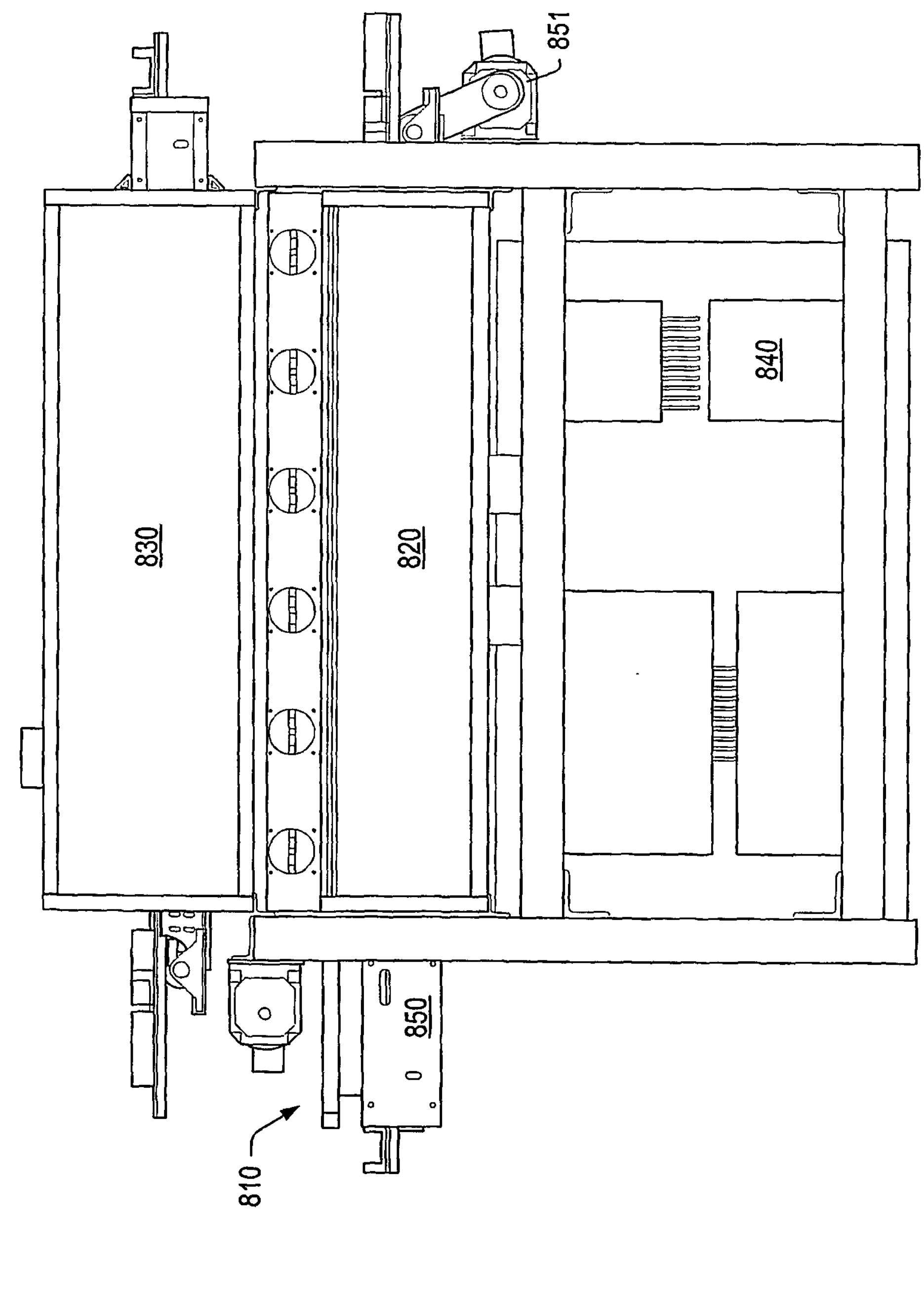


FIG. 34